# EUROPÄISCHE PATENTANMELDUNG

(11) **EP 4 080 473 A1**
(43) Veröffentlichungstag der Anmeldung: **26.10.2022**
(21) Anmeldenummer: 22169040.7
(22) Anmeldetag: 20.04.2022
(51) Int. Cl.: G07C 9/00, G06Q 10/08, G07F 17/12

(54) **VERFAHREN UND VORRICHTUNG ZUM GEWÄHREN VON ZUGANG ZU FÄCHERN EINER FACHANLAGE**

(30) Priorität: 22.04.2021 DE 102021110313
(71) Anmelder: Deutsche Post AG, 53113 Bonn (DE)
(72) Erfinder: HELFERICH, Frank, 53547 Leubsdorf (DE); KIEHNE, Klaus, 53173 Bonn (DE)
(74) Vertreter: Cohausz & Florack

(57) **Zusammenfassung**

Offenbart wird u.a. ein Verfahren, beispielsweise ausgeführt von einer Fachanlage (830) oder einem System umfassend eine Fachanlage (830), das Verfahren umfassend: Erhalten eines Schlüssels (S); Erzeugen einer Zugangsinformation (Z); Verschlüsseln der Zugangsinformation (Z) mit dem Schlüssel (S); Assoziieren eines Indikators (I) mit der Zugangsinformation (Z); Ausgeben von ersten Daten (D₁), wobei die ersten Daten (D₁) zumindest die mit dem Schlüssel (S) verschlüsselte Zugangsinformation (C(Z;S)) und den Indikator (I) umfassen; Erhalten oder Erfassen von dritten Daten (D₃) von einer Vorrichtung, die über einen Schlüssel zum Entschlüsseln der verschlüsselten Zugangsinformation C(Z;S) verfügt, wobei die dritten Daten (D₃) ein Kennwort (K) und einen Indikator (I) umfassen; Bestimmen einer Zugangsinformation (Z) basierend zumindest auf dem in den dritten Daten (D₃) enthaltenen Indikator (I); Feststellen, basierend zumindest auf der bestimmten Zugangsinformation (Z), ob das Kennwort zum Zugang zur Fachanlage (830) oder zu einem oder mehreren Fächern (121, 122, 123) der Fachanlage (830) berechtigt; und Gewähren von Zugang zur Fachanlage (830) oder zu einem oder mehreren Fächern (121, 122, 123) der Fachanlage (830), wobei notwendige Bedingung für das Gewähren von Zugang ist, dass festgestellt wurde, dass das Kennwort (K) zum Zugang zur Fachanlage (830) oder zum Zugang zu dem einen oder zu den mehreren Fächern (121, 122, 123) der Fachanlage (830) berechtigt. Zwei zugehörige Verfahren, eines beispielsweise ausgeführt von einer mobilen Vorrichtung (810), und ein weiteres beispielsweise ausgeführtvon einem System (100), z.B. einem Backend-System, oder einer Vorrichtung, z.B. einem Server (810), sind ebenfalls offenbart Darüber hinaus werden entsprechende Vorrichtungen (5, 6, 7), Systeme (1, 100) und Computerprogramme zur jeweiligen Ausführung und/oder Steuerung eines oder mehrerer der offenbarten Verfahren offenbart.

## Beschreibung

### Gebiet

Beispielhafte Ausführungsformen der Erfindung betreffen Verfahren, Vorrichtungen, Systeme und Computerprogramme zum Gewähren von Zugang zu einer Fachanlage oder zu einem oder mehreren Fächern der Fachanlage, wobei notwendige Bedingung für das Gewähren von Zugang ist, dass festgestellt wurde, dass ein Empfänger berechtigt ist, zu einem oder mehreren Fächern der Fachanlage Zugang zu erhalten, wobei es sich bei der Fachanlage insbesondere um eine Fachanlage zum Abholen und/oder Einstellen von Sendungen von Zustell- oder Lieferdiensten handelt.

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein Empfänger Sendungen liefern lassen kann. Die Sendung wird vom Zusteller in ein Fach einer in der Nähe des Empfängers befindlichen und/oder von dem Empfänger zuvor festgelegten Packstation eingelegt, das Fach verschlossen und der Empfänger entsprechend benachrichtigt Damit der benachrichtigte Empfänger eine für ihn bereitgestellte Sendung aus einem Fach der Fachanlage entnehmen kann, muss die Fachanlage feststellen, dass der Empfänger berechtigt ist, zu einem oder mehreren Fächern der Fachanlage Zugang zu erhalten.

Bei einer Realisierung der oben genannten Packstation der Anmelderin muss der Empfänger beim Nachweis der Berechtigung zum Zugang zu einem Fach oder mehreren Fächern eine ihm funktional als Kundennummer dauerhaft zugeordnete Benutzerkennung, auch Postnummer genannt, und zudem einen temporär gültigen Abholcode in ein Eingabegerät, beispielsweise eine Zifferntastatur, der Packstation eingeben. Der temporär gültige Abholcode, aus der erwähnten Realisierung der Anmelderin als mTAN (mobile Transaktionsnummer) bekannt, ist der Person zuvor zusammen mit der Benachrichtigung, dass eine oder mehrere Sendungen für ihn in der bezeichneten Packstation zur Abholung bereitstehen, elektronisch übermittelt worden. Dabei ist einer Postnummer eines Benutzers, insofern ein oder mehrere Sendungen für ihn in einer Packstation oder mehreren Packstationen zur Abholung bereitstehen, nur ein Abholcode für alle Sendungen zugeordnet. Dieser behält so lange Gültigkeit, wie es zumindest eine Sendung gibt, die noch nicht abgeholt wurde.

Die jeweiligen Zugangsberechtigungsinformationen von zur Packstation-Nutzung registrierten Benutzern, also die Benutzerkennungen und die Abholcodes bzw. Postnummern und mTANs, werden durch ein System, beispielsweise ein Backend-System oder ein Server, verwaltet und gespeichert. Die als Fachanlagen fungierenden Packstationen sind mit dem System über Weitbereich-Datenkommunikationsverbindungen, beispielsweise über LAN- (Local Area Network) Schnittstellen, zum Austausch von für die Zugangsberechtigungsprüfung benötigten Daten gekoppelt

### Zusammenfassung einiger beispielhafter Ausführungsformen der Erfindung

In Bezug auf eine Fachanlage ist es grundsätzlich erstrebenswert, dass diese zuverlässig, effizient und sicher feststellen kann, dass ein Empfänger berechtigt ist, zu einem oder mehreren Fächern der Fachanlage Zugang zu erhalten, um anschließend den Zugang zu den entsprechenden Fächern zu gewähren.

Hinsichtlich der Sicherheit ist es dabei besonders relevant, dass ein unbefugter Zugang zu Fächern der Fachanlage verhindert wird.

Hinsichtlich der Effizienz ist es besonders relevant, dass möglichst wenig Daten erfasst und/oder verarbeitet werden müssen.

Hinsichtlich der Zuverlässigkeit ist es wünschenswert, dass die Fachanlage beispielsweise unabhängig davon funktioniert, ob permanent eine Verbindung der Fachanlage zu einem System, beispielsweise umfassend ein oder mehrere Server, vorhanden ist und ob ein Benutzer zu dem Zeitpunkt, zu dem seine Berechtigung zum Zugang zu einem Fach oder mehreren Fächern nachweisen möchte, Informationen von dem System erhalten und/oder mit dem System austauschen kann.

Bei dem eingangs dargestellten Packstation-Konzept der Anmelderin stellt eine Fachanlage basierend auf einer Benutzerkennung und einem Abholcode fest, ob einem Benutzer Zugang zu einem oder mehreren Fächern gewährt werden kann. Dabei handelt es sich bei der Benutzerkennung um eine dem Benutzer dauerhaft zugeordnete und daher kaum geheime, sechs- bis zwölfstellige Nummer und bei dem Abholcode um einen nur durch wenige Ziffern gebildeten Code, der ihm anlässlich der Einlegung einer oder mehrerer für ihn bestimmten Sendungen in die Packstation elektronisch übermittelt wurde.

Wie eingangs beschrieben, werden sowohl die Benutzerkennung als auch der Abholcode gemeinsam auf einem System, beispielsweise einem Backend-System, gespeichert Ein Angreifer, der unbefugt Zugang zum dem System erlangt, erhält somit nachteilhafterweise Zugang zu allen Informationen, die er benötigt, um Zugang zu einem oder mehreren Fächern einer oder mehrerer Fachanlagen zu erhalten. Der Angreifer erhält somit beispielsweise auch Zugriff auf die dort jeweils eingestellten Sendungen.

Darüber hinaus ist es zwar einerseits vorteilhaft, dass der Abholcode nur wenige Ziffern umfasst Die Fachanlage muss dann beim Erfassen des Abholcodes nur wenige Ziffern erfassen und verarbeiten. Gleichermaßen ist es auch vorteilhaft, dass einer Benutzerkennung nur ein Abholcode zur Abholung aller Sendungen zugeordnet ist, denn die Fachanlage muss dann nicht für jede Sendung einen Abholcode erfassen und verarbeiten.

Andererseits ist es nachteilig, dass der Abholcode nur wenige Ziffern umfasst, da er dann leichter von einem Angreifer ermittelt werden kann, beispielsweise durch eine Brute-Force-Attacke. Dabei wird die Gefahr einer erfolgreichen Brute-Force-Attacke nachteilhafterweise dadurch erhöht, dass einer Benutzerkennung nur ein Abholcode zur Abholung aller Sendungen zugeordnet ist, sodass ein Angreifer nur einen Abholcode herausfinden muss, um Zugang zu mehreren Fächern und somit mehreren Sendungen zu erhalten. Insbesondere hat er dafür so lange Zeit, bis alle Sendungen eines Benutzers abgeholt sind.

Die vorliegende Erfindung hat sich die Aufgabe gestellt, einen oder mehrere der oben beschriebenen Nachteile zu überwinden und/oder einen oder mehrere der oben beschriebenen Vorteile zu erhalten und/oder eine oder mehrere der oben beschriebenen angestrebten Verbesserungen zu erreichen.

Gemäß einem ersten beispielhaften Aspekt der Erfindung wird ein Verfahren offenbart, welches beispielsweise von einer Fachanlage oder einem System umfassend eine Fachanlage ausgeführt wird, das Verfahren umfassend: Erhalten eines Schlüssels; Erzeugen einer Zugangsinformation; Verschlüsseln der Zugangsinformation mit dem Schlüssel; Assoziieren eines Indikators mit der Zugangsinformation; Ausgeben von ersten Daten, wobei die ersten Daten zumindest die mit dem Schlüssel verschlüsselte Zugangsinformation und den Indikator umfassen; Erhalten oder Erfassen von dritten Daten von einer Vorrichtung, die über den Schlüssel zum Entschlüsseln der verschlüsselten Zugangsinformation verfügt, wobei die dritten Daten ein Kennwort und einen Indikator umfassen; Bestimmen einer Zugangsinformation basierend zumindest auf dem in den dritten Daten enthaltenen Indikator; Feststellen, basierend zumindest auf der bestimmten Zugangsinformation, ob das Kennwort zum Zugang zur Fachanlage oder zu einem oder mehreren Fächern der Fachanlage berechtigt; und Gewähren von Zugang zur Fachanlage oder zu einem oder mehreren Fächern der Fachanlage, wobei notwendige Bedingung für das Gewähren von Zugang ist, dass festgestellt wurde, dass das Kennwort zum Zugang zur Fachanlage oder zum Zugang zu dem einen oder zu den mehreren Fächern der Fachanlage berechtigt

Gemäß einem zweiten beispielhaften Aspekt der Erfindung wird ein Verfahren offenbart, welches beispielsweise von einer mobilen Vorrichtung ausgeführt wird, das Verfahren umfassend: Erzeugen oder Erhalten zumindest eines Schlüssels; Übermitteln des Schlüssels an eine Vorrichtung oder an ein System, welche oder welches dazu eingerichtet ist, den Schlüssel an eine Fachanlage zu übermitteln; Erhalten von zweiten Daten, wobei die zweiten Daten zumindest eine mit dem Schlüssel verschlüsselte Zugangsinformation und einen Indikator umfassen; Entschlüsseln der mit dem Schlüssel verschlüsselten Zugangsinformation; Erzeugen eines Kennworts basierend zumindest auf der Zugangsinformation; und Übermitteln von dritten Daten an eine Fachanlage oder Bereitstellen von dritten Daten für eine Fachanlage, um Zugang zur Fachanlage oder zu einem oder mehreren Fächern der Fachanlage zu erhalten, wobei die dritten Daten zumindest das Kennwort und den Indikator umfassen.

Gemäß einem dritten beispielhaften Aspekt der Erfindung wird ein Verfahren offenbart, welches beispielsweise von einer Vorrichtung oder einem System ausgeführt wird, das Verfahren umfassend: Erhalten, beispielsweise von einer mobilen Vorrichtung, oder Erzeugen eines Schlüssels; Übermitteln des Schlüssels an eine Fachanlage; Erhalten von ersten Daten von der Fachanlage, wobei die ersten Daten zumindest eine mit dem Schlüssel verschlüsselte Zugangsinformation und einen Indikator umfassen; und Ausgeben von zweiten Daten, beispielsweise an die mobile Vorrichtung, wobei die zweiten Daten zumindest die mit dem Schlüssel verschlüsselte Zugangsinformation und den Indikator umfassen.

Gemäß jedem dieser Aspekte der Erfindung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung oder ein System aus zumindest zwei Vorrichtungen, eingerichtet zur Ausführung und/oder Steuerung des Verfahrens gemäß dem jeweiligen Aspekt der Erfindung oder umfassend jeweilige Mittel zur Ausführung und/oder Steuerung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein. Eine Vorrichtung gemäß dem ersten Aspekt der Erfindung könnte beispielsweise eine Fachanlage sein. Eine Vorrichtung gemäß dem zweiten Aspekt der Erfindung könnte beispielsweise eine mobile Vorrichtung, z.B. ein Smartphone oder ein Gerät eines Zustellers, sein. Ein System gemäß dem dritten Aspekt der Erfindung könnte beispielsweise zumindest ein oder zwei Server umfassen.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Diese beispielhaften Aspekte der vorliegenden Erfindung können u.a. die nachfolgend beschriebenen Eigenschaften aufweisen.

Die Fachanlage umfasst eine Vielzahl von Fächern (also beispielsweise mehr als ein Fach oder mehr als zwei Fächer). Die Fächer sind beispielsweise zur Aufnahme von Sendungen (z.B. Briefe, Pakete, Päckchen), Lieferungen (z.B. gereinigte oder zu reinigende Wäsche, Gerichte von Lieferdiensten (z.B. eines Pizza- oder Sushi-Services), etc.) oder Gegenständen (z.B. Wertgegenstände, Gepäck, etc.) eingerichtet Die Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein. Die Fachanlage kann beispielsweise als Paketfachanlage oder kombinierte Brief- und Paketfachanlage ausgebildet sein.

Jedes der Fächer ist beispielsweise mit einem jeweiligen Schloss versehen, um den Zugang von Benutzern zu den einzelnen Fächern der Fachanlage kontrollieren zu können. Das Schloss eines Fachs kann beispielsweise im oder am Fach angeordnet sein, beispielsweise an einer Tür (z.B. auch in Form einer Klappe) des Fachs. Wenn das Schloss nicht an der Tür angeordnet ist (also beispielsweise an einer Seitenwand des Fachs), wirkt es beispielsweise mit der Tür zusammen, indem beispielweise ein Riegel in eine Öffnung der Tür eingeführt bzw. wieder herausgezogen wird. Das Schloss eines Fachs kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür des Fachs geöffnet werden. Da das Schloss automatisch in die Verriegelungsposition zurückkehrt, kann eine Verriegelung des Fachs durch Schließen der Tür erzielt werden, beispielsweise in dem beim Schließen der Tür eine Fallenfunktion des Schlosses ausgenutzt wird.

Ein Fach der Fachanlage kann entweder offen oder geschlossen sein. Im offenen Zustand des Fachs ist das Schloss des Fachs entriegelt Die Tür des Fachs kann dann beispielsweise ohne Gewaltanwendung durch eine Person geöffnet werden oder steht offen. Im geschlossenen Zustand des Fachs ist das Schloss des Fachs hingegen verriegelt. Die Tür des Fachs kann dann beispielsweise nicht mehr ohne Gewaltanwendung durch eine Person geöffnet werden, die nicht zur Öffnung berechtigt ist.

Das Schloss eines jeweiligen Fachs ist beispielsweise steuerbar, insbesondere in elektronischer Form. Insbesondere kann zumindest der Prozess der Verriegelns und/oder Entriegelns des Schlosses gesteuert werden. Die Steuerung des Schlosses eines Fachs kann beispielsweise durch eine Schlosssteuereinheit erfolgen, wobei entweder jedem Schloss eine eigene Schlosssteuereinheit zugeordnet ist, oder eine (beispielsweise zentrale) Schlosssteuereinheit einige (z.B. diejenigen eines Moduls der Fachanlage) oder alle Schlösser der Fachanlage steuert In ersterem Fall werden mehrere Schlosssteuereinheiten, beispielsweise alle Schlosssteuereinheiten oder diejenigen eines oder mehrerer Module der Fachanlage, beispielsweise durch eine übergeordnete Steuereinheit gesteuert, während in letzterem Fall beispielsweise eine jeweilige Verdrahtung zwischen der Schlosssteuereinheit und jedem der von ihr gesteuerten Schlösser besteht, wobei über eine jeweilige Verdrahtung übertragene Signale oder angelegte Spannungen dann nur jeweils dem Schloss zugeordnet sind, zu dem die Verdrahtung führt, aber nicht anderen Schlössern. Alternativ ist auch die Verwendung eines Busses denkbar, an dem sowohl die Schlosssteuereinheit als auch eine Vielzahl von Schlössern elektrisch angebunden sind. Dann ist allerdings in jedem Schloss eine Einheit zur Auswertung der über den Bus erhaltenen Steuersignale erforderlich, was die Schlösser komplexer und damit teurer gestaltet als im Falle der direkten Verdrahtung.

Eine Schlosssteuereinheit (insbesondere die zentrale Schlosssteuereinheit) kann beispielsweise nicht nur die Ansteuerung des Schlosses bzw. der Schlösser besorgen, sondern auch feststellen, ob erhaltene oder erfasste Daten zum Zugang zu einem Fach oder mehreren Fächern der Fachanlage berechtigen, und dementsprechend Zugang zu dem Fach oder den Fächern gewähren (z.B. durch Entriegelung der Tür des Fachs oder der Türen der Fächer) oder verweigern (z.B. indem keine Entriegelung der Tür des Fachs oder der Türen der Fächer erfolgt).

Damit eine Fachanlage und/oder eine ihr zugehörige Einheit, z.B. eine Schlosssteuereinheit, und/oder ein System umfassend eine Fachanlage feststellen kann, ob ein Kennwort zum Zugang zu einem Fach oder mehreren Fächern der Fachanlage berechtigt, und, falls das der Fall ist, Zugang gewähren kann, führt beispielsweise die Fachanlage oder ein System umfassend die Fachanlage die Schritte des Verfahren gemäß dem ersten beispielhaften Aspekt der Erfindung aus. Dabei wird im Folgenden vielfach beschrieben, dass eine Fachanlage einen oder mehrere Schritte des Verfahrens gemäß dem ersten Aspekt der Erfindung ausführt. Es ist zwar eine Ausführungsform des Verfahrens gemäß dem ersten Aspekt der Erfindung, dass die Fachanlage alle Schritte des Verfahrens gemäß dem ersten Aspekt der Erfindung ausführt Die Beschreibung dieser Schritte soll aber ausdrücklich auch jeweils so verstanden werden, dass der jeweilige Schritt oder ein Teil desselben auch von einer anderen Vorrichtung ausgeführt werden kann, die beispielsweise Teil eines Systems ist, welches die Fachanlage umfasst

Das Verfahren gemäß dem zweiten beispielhaften Aspekt der Erfindung wird beispielsweise von einer mobilen Vorrichtung, beispielsweise einem Smartphone und/oder einem Gerät eines Zustellers, ausgeführt Das Verfahren gemäß dem dritten Aspekt der Erfindung wird beispielsweise von einer Vorrichtung, z.B. einem Server, oder einem System, z.B. umfassend zwei Server, welche beispielsweise miteinander kommunizieren können, ausgeführt. Dabei kann es sich bei der Vorrichtung oder dem System, welche oder welches das Verfahren gemäß dem dritten Aspekt der Erfindung ausführt, beispielsweise um ein Backend-System oder einen Backend-Server handeln. Es kann sich dabei aber auch um das Gerät eines Zustellers oder ein System umfassend das Gerät eines Zustellers handeln.

Das Verfahren gemäß dem zweiten beispielhaften Aspekt der Erfindung umfasst das Erzeugen oder Erhalten zumindest eines Schlüssels. Der Schlüssel kann beispielsweise ein Schlüssel zum symmetrischen Ver- und Entschlüsseln sein. Alternativ kann der Schlüssel beispielsweise ein öffentlicher Schlüssel oder ein privater Schlüssel eines asymmetrischen Schlüsselpaares sein. Wenn der Schlüssel beispielsweise der öffentliche Schlüssel eines asymmetrischen Schlüsselpaares ist, kann das Erzeugen oder Erhalten beispielsweise auch den öffentlichen und den privaten Schlüssel des asymmetrischen Schlüsselpaares betreffen. Der Schlüssel kann eine vorbestimmte Länge haben, beispielsweise kürzer als 128 Bits, 128 Bits, 160 Bits, 256 Bits, 512 Bits, 1024 Bits, 2048 Bits, 4096 Bits oder länger als 4096 Bits oder eine beliebige Länge zwischen oder unter oder über den genannten Werten haben. Der Schlüssel kann beispielsweise Zufallswerte und/oder eine Benutzerkennung und/oder einen Zeitstempel und/oder eine Versionsnummer des Authentisierungsverfahrens und/oder eine Prüfsumme enthalten. Der Schlüssel kann beispielsweise von der das Verfahren gemäß dem zweiten beispielhaften Aspekt der Erfindung ausführenden Vorrichtung erzeugt werden. Der Schlüssel ist dann beispielsweise zunächst keiner anderen Vorrichtung bekannt und/oder zugänglich. Alternativ kann der Schlüssel auch erhalten werden, beispielsweise von einer anderen Vorrichtung, die den Schlüssel erzeugt hat, oder beispielsweise indem der Schlüssel durch eine Eingabe eines Benutzers an einer dafür geeigneten Eingabeeinheit der das Verfahren gemäß dem zweiten beispielhaften Aspekt der Erfindung ausführenden Vorrichtung, beispielsweise einem berührungsempfindlichen Bildschirm, erhalten wird. Die das Verfahren gemäß dem zweiten beispielhaften Aspekt der Erfindung ausführende Vorrichtung braucht den Schlüssel dann beispielsweise nicht aufwändig erzeugen.

Das Verfahren gemäß dem zweiten beispielhaften Aspekt der Erfindung umfasst ferner das Übermitteln des Schlüssels an eine Vorrichtung oder an ein System, welche oder welches dazu eingerichtet ist, den Schlüssel an eine Fachanlage zu übermitteln. Die Vorrichtung oder das System, an welche oder welches der Schlüssel übermittelt wird, kann beispielsweise das Verfahren gemäß dem zweiten und/oder dem dritten beispielhaften Aspekt der Erfindung ausführen. Es kann sich beispielsweise um einen Server, ein System von Servern, ein System umfassend eine Fachanlage, eine Fachanlage, ein Smartphone oder ein Gerät eines Zustellers handeln.

Die Übermittlung und das zugehörige Erhalten eines Schlüssels kann dabei beispielsweise über eine kabellose und/oder kabelgebundene Kommunikationsschnittstelle der das Verfahren gemäß dem zweiten und/oder dritten beispielhaften Aspekt der Erfindung ausführenden Vorrichtung erfolgen, beispielsweise über das Internet und/oder über eine lokale Funkverbindung wie z.B. Bluetooth oder NFC. Der Schlüssel kann beispielsweise mittels einer oder mehrerer Nachrichten und/oder mittels eines oder mehrerer Pakete, beispielsweise Internet Protocol (IP) v4- oder IPv6- oder Bluetooth-Pakete, übermittelt werden. Dabei können beispielsweise auch weitere Daten und/oder Information mit dem Schlüssel übermittelt werden.

Das Verfahren gemäß dem dritten beispielhaften Aspekt der Erfindung umfasst das Erhalten oder Erzeugen eines Schlüssels. Wenn der Schlüssel erhalten wird, kann er beispielsweise von einer mobilen Vorrichtung erhalten werden. Insbesondere kann der Schlüssel von einer mobilen Vorrichtung, die das Verfahren gemäß dem zweiten Aspekt der Erfindung ausführt, erhalten werden. Zusätzlich oder alternativ kann der Schlüssel aber auch von einer anderen Vorrichtung erhalten werden, beispielsweise einem Server. Der Schlüssel kann beispielsweise der Schlüssel aus dem Verfahren gemäß dem zweiten beispielhaften Aspekt der Erfindung sein oder zumindest Eigenschaften haben, die für den Schlüssel aus dem Verfahren gemäß dem zweiten beispielhaften Aspekt der Erfindung beschrieben wurden. Der Schlüssel wird beispielsweise über eine der Übertragungsarten, welche für die Übermittlung des Schlüssels im Verfahren gemäß dem zweiten beispielhaften Aspekt der Erfindung beschrieben wurden, übermittelt und/oder erhalten.

Das Verfahren gemäß dem dritten beispielhaften Aspekt der Erfindung umfasst ferner das Übermitteln des Schlüssels an eine Fachanlage. Die Fachanlage ist beispielsweise die Fachanlage, die das Verfahren gemäß dem ersten beispielhaften Aspekt der Erfindung ausführt, oder in einem System enthalten ist, welches das Verfahren gemäß dem ersten beispielhaften Aspekt der Erfindung ausführt. Die Übermittlung erfolgt beispielsweise über eine der Übertragungsarten, welche für die Übermittlung des Schlüssels im Verfahren gemäß dem zweiten beispielhaften Aspekt der Erfindung beschrieben wurden. Dabei kann die Übermittlung auch indirekt erfolgen, also beispielsweise über ein zur Weiterleitung von Daten eingerichtetes Gerät, z.B. das Gerät eines Zustellers, welches z.B. den Schlüssel weiterleitet und ihn möglicherweise vorher zwischenspeichert.

Das Verfahren gemäß dem ersten beispielhaften Aspekt der Erfindung umfasst das Erhalten eines Schlüssels. Der Schlüssel kann beispielsweise der Schlüssel aus dem Verfahren gemäß dem zweiten und/oder dritten beispielhaften Aspekt der Erfindung sein oder zumindest Eigenschaften haben, die für den Schlüssel aus dem Verfahren gemäß dem zweiten und/oder dritten beispielhaften Aspekt der Erfindung beschrieben wurden. Das Erhalten erfolgt beispielsweise über eine Kommunikationsschnittstelle mit dem Internet Beispielsweise kann der Schlüssel von einem System oder einer Vorrichtung, das oder die das Verfahren gemäß dem dritten Aspekt der Erfindung ausführt, erhalten werden. In manchen Ausführungsformen kann der Schlüssel aber auch anders erhalten werden. Beispielsweise kann der Schlüssel von einem zur Weiterleitung von Daten eingerichteten Gerät erhalten werden. Ein solches Gerät kann beispielsweise das Gerät eines Zustellers sein. Dazu kann beispielsweise das Gerät des Zustellers den Schlüssel gespeichert haben, beispielsweise indem das Gerät des Zustellers täglich Daten mit einer Vorrichtung, z.B. einem Server, welche über den Schlüssel verfügt, synchronisiert, den Schlüssel dabei erhält und diesen dann speichert. In anderen Ausführungsformen kann das Gerät des Zustellers beispielsweise zu einem Zeitpunkt, zu dem es sich in der Nähe der Fachanlage befindet, eine Verbindung mit einem System oder eine Vorrichtung herstellen, welche über den Schlüssel verfügt, um den Schlüssel von diesem oder dieser zu erhalten und an die Fachanlage weiterzuleiten. Die Fachanlage kann den Schlüssel dann beispielsweise über eine Funk-Verbindung, z.B. Bluetooth, Near Field Communication (NFC), Wireless Local Area Network (WLAN) von dem Gerät erhalten. Alternativ kann der Schlüssel aber auch von einem anderen Gerät erhalten werden, beispielsweise von einem Gerät eines Benutzers der Fachanlage, beispielsweise über eine Funk-Verbindung. Das Gerät des Benutzers der Fachanlage kann ebenfalls lediglich zur Weiterleitung genutzt werden oder aber das Gerät des Benutzers kann den Schlüssel erzeugt haben.

Das Verfahren gemäß dem ersten beispielhaften Aspekt der Erfindung umfasst ferner das Erzeugen einer Zugangsinformation. Die Zugangsinformation kann beispielsweise geeignet sein, dass basierend zumindest auf ihr ein Kennwort erzeugt werden kann, welches zum Zugang zu der Fachanlage oder zu einem oder mehreren Fächern der Fachanlage berechtigt. Die Zugangsinformation kann beispielsweise ein Zufallswert sein und beispielsweise eine bestimmte Länge haben, beispielsweise 8 Bits, 16 Bits, 128 Bits, 256 Bits, 1024 Bits, 4096 Bits oder mehr als 4096 Bits, oder eine beliebige Länge zwischen, unter oder über den genannten Werten. Alternativ oder zusätzlich kann die Zugangsinformation oder ein Teil der Zugangsinformation ein Muster sein oder einer vorbestimmten Regel folgen. Die Erzeugung der Zugangsinformation kann ganz oder teilweise einer vorbestimmten Regel folgen, pseudozufällig und/oder zufällig sein. Die Zugangsinformation kann nach dem Erzeugen beispielsweise schwierig und/oder aufwändig zu erraten, erneut zu erzeugen oder anderweitig zu bestimmen sein, insbesondere durch Personen oder andere Geräte oder Vorrichtungen.

Das Verfahren gemäß dem ersten beispielhaften Aspekt der Erfindung umfasst ferner das Verschlüsseln der Zugangsinformation mit dem Schlüssel. Mit welchem Verfahren die Zugangsinformation mit dem Schlüssel verschlüsselt wird, kann beispielsweise von einer Zeit, einem Datum, einer Einstellung der die Verschlüsselung durchführenden Vorrichtung, der Zugangsinformation und/oder dem Schlüssel abhängen. Alternativ kann immer das gleiche Verfahren verwendet werden. Beispielsweise kann ein symmetrisches Verschlüsselungsverfahren zum Verschlüsseln der Zugangsinformation oder eines Teils der Zugangsinformation verwendet werden. Beispielsweise handelt es sich bei dem Schlüssel dann um einen symmetrischen Schlüssel. Data Encryption Standard (DES), Triple-DES, Advanced Encryption Standard (AES), International Data Encryption Algorithm (IDEA), Blowfish oder Twofish sind Beispiele für symmetrische Verschlüsselungsverfahren. Alternativ oder zusätzlich kann ein asymmetrisches Verschlüsselungsverfahren zum Verschlüsseln der Zugangsinformation oder eines Teils der Zugangsinformation verwendet werden. Beispielsweise handelt es sich bei dem Schlüssel dann um einen Schlüssel eines asymmetrischen Schlüsselpaares. Ein solches asymmetrisches Verschlüsselungsverfahren kann beispielsweise das Rivest, Shamir, Adleman (RSA)-, Elgamal-, oder das Elliptische-Kurven-Verfahren sein. Ein Vorteil eines symmetrischen gegenüber einem asymmetrischen Verschlüsselungsverfahren ist, dass es schneller ist. Allerdings ist es bei einem asymmetrischen Verschlüsselungsverfahren nicht möglich, mit dem verwendeten Schlüssel die verschlüsselten Daten wieder zu entschlüsseln, sondern ein zweiter Schlüssel eines asymmetrischen Schlüsselpaares wird benötigt

Das Verfahren gemäß dem ersten beispielhaften Aspekt der Erfindung umfasst ferner das Assoziieren eines Indikators mit der Zugangsinformation. Der Indikator kann beispielsweise einen Zahlenwert, einen Zeitwert, ein Wort, und/oder eine Mischung aus Zahlen und Buchstaben umfassen und beispielsweise als Bits oder Bytes repräsentiert werden. Der Indikator kann beispielsweise zufällig erzeugt werden oder aus einer vordefinierten Menge von möglichen Werten ausgewählt werden. Dann kann beispielsweise die Auswahl zufällig sein. Alternativ kann der Indikator beispielsweise nach einer vorbestimmten Regel erzeugt werden oder nach einer vorbestimmten Regel aus einer vordefinierten Menge von möglichen Werten ausgewählt werden.

Der Indikator kann beispielsweise mittels einer Datenstruktur mit der Zugangsinformation assoziiert werden, beispielsweise einer Tabelle, die in einer Spalte einen oder mehrere Indikatoren enthält und in einer weiteren Spalte jeweilige assoziierte Zugangsinformationen. Alternativ oder zusätzlich können beispielsweise Zugangsinformationen in einer Liste und/oder einem Array vorliegen und der Indikator kann beispielsweise die Position der mit ihm assoziierten Zugangsinformation in der Liste und/oder dem Array anzeigen oder ermittelbar machen. Die Assoziation kann beispielsweise auch mittelbar sein, insbesondere also mehr als eine einfache Zuordnung, beispielsweise eine Zuordnung über mehrere Zuordnungsebenen. So kann die Zugangsinformation beispielsweise mit zumindest einem Fach der Fachanlage assoziiert sein, beispielsweise indem die Zugangsinformation einem Fach der Fachanlage zugeordnet ist oder wird, z.B. von einer Fachanlage. Beispielsweise ist jedem Fach einer Fachanlage, in dem sich eine Sendung befindet, eine Zugangsinformation zugeordnet Beispielsweise ist diesen Fächern dann jeweils genau eine Zugangsinformation zugeordnet Der Indikator kann dann beispielsweise mit dem Fach assoziiert sein, beispielsweise über eine Tabelle oder mittels einer Liste oder eines Arrays. Das Assoziieren des Indikators mit der Zugangsinformation kann beispielsweise lediglich das Assoziieren des Indikators mit dem Fach sein, wenn das Fach bereits mit einer Zugangsinformation assoziiert ist, beispielsweise dieser zugeordnet. Andersherum kann das Assoziieren des Indikators beispielsweise lediglich das Assoziieren der Zugangsinformation mit dem Fach beinhalten. Denn in einem der beiden Fälle wird der Indikator bereits mit einer Zugangsinformation assoziiert.

Das Verfahren gemäß dem ersten beispielhaften Aspekt der Erfindung umfasst ferner das Ausgeben von ersten Daten, wobei die ersten Daten zumindest die mit dem Schlüssel verschlüsselte Zugangsinformation und den Indikator umfassen. Daten können beispielsweise Bits oder Bytes sein oder als solche repräsentiert sein und die mit dem Schlüssel verschlüsselte Zugangsinformation und der Indikator können beispielsweise jeweils als Bits oder Bytes vorliegen oder repräsentiert werden und/oder derart von den ersten Daten umfasst werden. Der Indikator kann beispielsweise ohne mit dem Schlüssel verschlüsselt worden zu sein von den ersten Daten umfasst werden. Alternativ oder zusätzlich kann der Indikator zumindest zum Teil mit dem Schlüssel verschlüsselt von den ersten Daten umfasst werden. Die Zugangsinformation und/oder der Indikator und/oder Teile der ersten Daten können darüber hinaus beispielsweise anderweitig verschlüsselt und/oder transformiert vorliegen.

Daten können grundsätzlich beispielsweise an einem Bildschirm und/oder auf Papier gedruckt ausgegeben werden, beispielsweise als Buchstaben und/oder Zahlen und/oder als optisches Muster, z.B. als Bar- oder QR-Code. Grundsätzlich können Daten aber auch alternativ oder zusätzlich als Teil einer oder mehrerer Nachrichten, beispielsweise eines oder mehrerer Pakete eines Kommunikationsprotokolls, beispielsweise 3G, 4G, Bluetooth, Ethernet, oder NFC ausgegeben werden. Daten können so beispielsweise über das Internet und/oder ein anderes Netzwerk an eine andere Vorrichtung ausgegeben werden. Dabei können beispielsweise auch die Zugangsinformation und der Indikator jeweils teilweise oder ganz in derselben Nachricht und/oder in demselben Paket oder in unterschiedlichen Nachrichten und/oder Paketen ausgegeben, übermittelt, empfangen, erhalten und/oder erfasst oder anderweitig behandelt werden. Die ersten Daten können beispielsweise an eine Vorrichtung oder ein System ausgegeben werden, welche oder welches beispielsweise das Verfahren gemäß dem zweiten und/oder dritten Aspekt der Erfindung steuert und/oder ausführt oder dazu eingerichtet ist, das jeweilige Verfahren auszuführen. Indem zumindest die in den ersten Daten enthaltene Zugangsinformation mit dem Schlüssel verschlüsselt ist, ist zumindest die Zugangsinformation beispielsweise vor einem Ausspähen durch Unbefugte, die die mit dem Schlüssel verschlüsselte Zugangsinformation nicht oder zumindest praktisch nicht entschlüsseln können, geschützt

Das Verfahren gemäß dem dritten beispielhaften Aspekt der Erfindung umfasst das Erhalten von ersten Daten von der Fachanlage, wobei die ersten Daten zumindest eine mit dem Schlüssel verschlüsselte Zugangsinformation und einen Indikator umfassen. Bei den ersten Daten kann es sich insbesondere um die ersten Daten handeln, die in dem Verfahren gemäß dem ersten beispielhaften Aspekt der Erfindung ausgegeben werden. Die ersten Daten können somit unter Verwendung einer der Kommunikationsarten, die in Bezug auf das Verfahren gemäß dem ersten beispielhaften Aspekt der Erfindung für das Ausgeben von ersten Daten beschrieben wurden, erhalten werden.

Beim Erhalten von ersten Daten, also beispielsweise zu diesem Zeitpunkt, aber möglicherweise auch davor und/oder danach, ist es beispielsweise der Vorrichtung oder dem System, welches oder welche das Verfahren gemäß dem dritten beispielhaften Aspekt der Erfindung ausführt, nicht möglich, die mit dem Schlüssel verschlüsselte Zugangsinformation zu entschlüsseln. Dies ist beispielsweise der Fall, weil die Vorrichtung oder das System einen Schlüssel, mit dem die mit dem Schlüssel verschlüsselte Zugangsinformation entschlüsselt werden könnte, nicht oder nicht mehr gespeichert hat Dass die Vorrichtung oder das System, welches oder welche das Verfahren gemäß dem dritten beispielhaften Aspekt der Erfindung ausführt, möglicherweise nicht in der Lage ist, die mit dem Schlüssel verschlüsselte Zugangsinformation zu entschlüsseln, weil ihr beispielsweise der Schlüssel zum Entschlüsseln nicht oder nicht mehr bekannt ist, erhöht beispielsweise die Sicherheit der erfindungsgemäßen Verfahren, Vorrichtungen und/oder Systeme. Der Schlüssel zum Entschlüsseln kann dann nämlich nicht von der Vorrichtung und/oder dem System, welche oder welches das Verfahren gemäß dem dritten Aspekt der Erfindung ausführt, ausgespäht werden. Dies ist besonders vorteilhaft, wenn die Vorrichtung oder das System z.B. ein Server ist oder umfasst und z.B. eine Vielzahl von Fachanlagen, die das Verfahren gemäß dem ersten beispielhaften Aspekt der Erfindung, und/oder mobilen Vorrichtungen, die das Verfahren gemäß dem zweiten beispielhaften Aspekt der Erfindung ausführen, verwaltet. In einem solchen Fall könnte ansonsten ein Angreifer beispielsweise eine Vielzahl von Schlüsseln und/oder Zugangsinformationen zu jeweiligen Fächern und/oder Fachanlagen von der Vorrichtung oder dem System, welches oder welche das Verfahren gemäß dem dritten beispielhaften Aspekt der Erfindung ausführt, ausspähen, wenn er Zugriff auf die Vorrichtung oder das System bekäme.

Das Verfahren gemäß dem dritten beispielhaften Aspekt der Erfindung umfasst ferner das Ausgeben von zweiten Daten, beispielsweise an die mobile Vorrichtung, wobei die zweiten Daten zumindest die mit dem Schlüssel verschlüsselte Zugangsinformation und den Indikator umfassen. Die Vorrichtung oder das System, welches oder welche das Verfahren gemäß dem dritten beispielhaften Aspekt der Erfindung ausführt, kann beispielsweise feststellen, welcher Teil der ersten und/oder zweiten Daten die mit dem Schlüssel verschlüsselte Zugangsinformation und/oder den Indikator darstellen. Alternativ kann dies der Vorrichtung oder dem System unbekannt und/oder nicht möglich herauszufinden sein. Die mobile Vorrichtung, an die die zweiten Daten ausgegeben (oder übermittelt) werden können, kann beispielsweise das Verfahren gemäß dem zweiten beispielhaften Aspekt der Erfindung ausführen. Die mobile Vorrichtung kann beispielsweise ein Smartphone eines Benutzers oder ein Gerät eines Zustellers sein und die Vorrichtung oder das System, welches die zweiten Daten an die mobile Vorrichtung ausgibt, kann die mobile Vorrichtung zum Ausgeben der zweiten Daten beispielsweise identifizieren, z.B. basierend auf Benutzer- und/oder Zustellerdaten, z.B. einer Mobilfunknummer, E-Mail-Adresse, und/oder Geräte-Medium-Access-Control (MAC)-Adresse.

Die zweiten Daten können beispielsweise mit den ersten Daten identisch sein. Alternativ können die zweiten Daten anders als die ersten Daten sein, aber dennoch die mit dem Schlüssel verschlüsselte Zugangsinformation und den Indikator umfassen. Die zweiten Daten können beispielsweise neben der mit dem Schlüssel verschlüsselte Zugangsinformation und dem Indikator weitere Informationen umfassen, beispielsweise die Kennung einer Fachanlage oder eine anderweitige Kennung der Vorrichtung oder des Systems, von welcher oder welchem die ersten Daten erhalten wurden. Eine solche Kennung kann beispielsweise ebenfalls zumindest zum Teil in den ersten Daten enthalten gewesen sein oder erst in den zweiten Daten enthalten sein. Die Ausgabe der zweiten Daten, die eine Übermittlung der zweiten Daten sein kann, kann dabei auf eine der schon zuvor generell für die Übermittlung von Daten beschriebenen Art und Weisen durchgeführt werden, also z.B. als Teil eines oder mehrerer Pakete oder Nachrichten z.B. über eine Internetverbindung und/oder ein Mobilfunknetzwerk.

Das Verfahren gemäß dem zweiten beispielhaften Aspekt der Erfindung umfasst das Erhalten von zweiten Daten, wobei die zweiten Daten zumindest eine mit dem Schlüssel verschlüsselte Zugangsinformation und einen Indikator umfassen. Die Daten können beispielsweise von einer Vorrichtung oder einem System, welches oder welche das Verfahren gemäß dem dritten Aspekt der Erfindung ausführt, erhalten werden. Das Erhalten kann dabei über eine der generell zum Erhalten von Daten beschriebenen Möglichkeiten erfolgen.

Das Verfahren gemäß dem zweiten beispielhaften Aspekt der Erfindung umfasst ferner das Entschlüsseln der mit dem Schlüssel verschlüsselten Zugangsinformation. Vorteilhafterweise führt die Vorrichtung, welche den Schlüssel zum Verschlüsseln der Zugangsinformation erzeugt hat, auch die Entschlüsselung durch. Wenn die Verschlüsselung beispielsweise eine symmetrische Verschlüsselung ist, ist es dann nämlich ausreichend, dass der Schlüssel gespeichert wurde, um diesen für die Entschlüsselung nutzen zu können. Wenn die Verschlüsselung beispielsweise eine asymmetrische Verschlüsselung ist, hat die Vorrichtung beim Erzeugen des Schlüssels, welcher beispielsweise einen öffentlichen Schlüssel darstellt, beispielsweise auch einen zugehörigen privaten Schlüssel erzeugt und diesen beispielsweise gespeichert Dann kann dieser private Schlüssel zum Entschlüsseln verwendet werden. Im Sinne der Sicherheit ist die Entschlüsselung durch die gleiche Vorrichtung, den den Schlüssel zum Entschlüsseln erzeugt hat, vorteilhaft, da so möglichst wenige Geräte den Schlüssel erhalten, verarbeiten und/oder speichern müssen. Darüber hinaus ist eine asymmetrische Verschlüsselung besonders vorteilhaft, da der private Schlüssel, der zum Entschlüsseln benötigt wird, die ihn erzeugende Vorrichtung nicht verlassen muss. Insbesondere muss der private Schlüssel nicht über eine potentiell unsichere Verbindung übertragen werden, um möglicherweise auf einer potentiell unsicheren und/oder häufig, beispielsweise über das Internet, angegriffenen Vorrichtung, beispielsweise einem Server, gespeichert werden. Wenn der private Schlüssel nur der Vorrichtung bekannt ist, welche das Erzeugen des Schlüssels und das Entschlüsseln ausführt, muss ein potentieller Angreifer somit beispielsweise volle Kontrolle über die Vorrichtung haben, um den privaten Schlüssel zu erhalten. Dies ist beispielsweise generell sehr aufwändig und insbesondere für einen Angreifer, wenn es sich bei der Vorrichtung beispielsweise um ein Smartphone einer anderen Person handelt. Insbesondere muss ein Angreifer, der Zugriff auf eine Vielzahl von Schlüsseln und/oder Zugangsinformationen erlangen will, beispielsweise die Kontrolle über eine Vielzahl von Vorrichtungen, z.B. Smartphones von Benutzern, erlangen, wenn auf einer Vorrichtung beispielsweise nur jeweils ein (privater) Schlüssel gespeichert ist.

Das Verfahren gemäß dem zweiten beispielhaften Aspekt der Erfindung umfasst ferner das Erzeugen eines Kennworts basierend zumindest auf der Zugangsinformation. Beispielsweise wird das Kennwort erzeugt, indem eine Einwegfunktion mit zumindest einem Teil der Zugangsinformation als Eingabedaten ausgeführt wird. Eine Einwegfunktion kann sich beispielsweise dadurch auszeichnen, dass die Berechnung der Funktion selbst einfach ist im Vergleich zur Berechnung der zu ihr inversen Funktion. Insbesondere kann es praktisch beispielsweise nicht möglich sein, überhaupt eine inverse Funktion zu einer Einwegfunktion zu finden, sodass die inverse Operation nur mittels Tabellen oder durch Ausprobieren gefunden werden kann. Ein Beispiel für eine Einwegfunktion ist eine Hash-Funktion, z.B. der Secure Hash Algorithm (SHA), SHA-2, insbesondere SHA-256, oder der Message Digest Algorithm 5 (MD5). Das Erzeugen des Kennworts kann aber zusätzlich auf weiteren Informationen basieren, beispielsweise einem Teil der zweiten Daten und/oder dem in den zweiten Daten enthaltenen Indikator.

Das Erzeugen des Kennworts kann beispielsweise durch ein Ereignis ausgelöst werden und/oder beispielsweise automatisch nach dem Entschlüsseln der Zugangsinformation und/oder nach einer vorbestimmten Zeitdauer und/oder zu einer vorbestimmten Zeit erfolgen. Ein solches Ereignis kann beispielsweise eine Benutzereingabe sein, beispielsweise an der Vorrichtung, die das Kennwort erzeugt Dies kann beispielsweise erfolgen, indem ein Benutzer eine bestimmte App auf seinem Smartphone aufruft und/oder in gewisser Weise bedient, z.B. durch Öffnen eines bestimmten Reiters in der App. Alternativ oder zusätzlich kann ein solches Ereignis beispielsweise die Annäherung der Vorrichtung, die das Kennwort erzeugt bzw. erzeugen wird, an eine andere Vorrichtung, beispielsweise eine Fachanlage, sein. Dabei ist es vorteilhaft, wenn das Ereignis nur oder zumindest auch in einer Benutzereingabe besteht oder diese umfasst, um eine ungewollte Auslösung zu verhindern, z.B. wenn der Benutzer sich der Vorrichtung, beispielsweise der Fachanlage, zwar annähert, diese Annäherung aber nicht bewusst und/oder absichtlich erfolgt, sondern beiläufig und/oder unabsichtlich, beispielsweise wenn der Benutzer an der Vorrichtung, z.B. der Fachanlage, mit einem Fahrzeug vorbeifährt, z.B. mit einem anderen Ziel, beispielsweise einer Tiefgarage. Umfasst ein solches Ereignis aber beispielsweise nur oder auch die Annäherung der Vorrichtung, die das Kennwort erzeugt bzw. erzeugen wird, an eine andere Vorrichtung, beispielsweise eine Fachanlage, wird das Kennwort beispielsweise nur oder auch in Reaktion darauf erzeugt, dass von der Vorrichtung, die das Kennwort erzeugt, festgestellt wurde, dass sie sich in einer vorbestimmten Nähe, beispielsweise in einer Distanz von weniger als 1 km, 100 m, 50 m, 20 m, 10 m, 5 m, 1 m von einer Fachanlage befinde. Dabei kann es sich bei der Fachanlage beispielsweise um die Fachanlage handeln, zu der oder zu einem oder mehrerer derer Fächer das Kennwort berechtigt und/oder berechtigen soll. Die Vorrichtung kann die Nähe beispielsweise mittels Ortungsdaten, beispielsweise GPS-Daten, und/oder mittels des Empfangs von weiteren Daten, beispielsweise eine Bluetooth-Beacons o.ä. von der Fachanlage detektieren, feststellen, bestimmen oder schätzen. Die Nähe kann beispielsweise auch basierend auf anderen empfangenen Funkdaten detektiert, festgestellt, geschätzt und/oder bestimmt werden, beispielsweise basierend auf Zell-Indikatoren von Mobilfunknetzen und/oder Basic Service Set Identification (BSSID) von WLAN-Zugangspunkten.

Das Verfahren gemäß dem zweiten beispielhaften Aspekt der Erfindung umfasst ferner das Übermitteln von dritten Daten an eine Fachanlage oder Bereitstellen von dritten Daten für eine Fachanlage, um Zugang zur Fachanlage oder zu einem oder mehreren Fächern der Fachanlage zu erhalten, wobei die dritten Daten zumindest das Kennwort und den Indikator umfassen. Die dritten Daten können neben dem Kennwort und dem Indikator beispielsweise weitere Informationen und/oder Daten umfassen. Dabei können Daten, insbesondere auch die dritten Daten, und deren Bestandteile, beispielsweise Kennwort und Indikator, grundsätzlich gemeinsam oder getrennt übermittelt und/oder bereitgestellt werden. Die Übermittlung kann beispielsweise über eine Internet-Verbindung oder eine Funk-Verbindung wie Bluetooth, NFC, WLAN, 4G oder 5G erfolgen. Die Daten können dann beispielsweise in einem oder mehreren Paketen gesendet werden. Die Bereitstellung kann aber auch beispielsweise durch zumindest ein optisches Muster wie einen Bar- oder QR-Code erfolgen, der beispielsweise von einem Bildschirm der Vorrichtung, die diesen Schritt des Verfahrens durchführt, angezeigt wird. Die Bereitstellung kann alternativ oder zusätzlich auch beispielsweise durch die Anzeige von Buchstaben und/oder Zahlen geschehen, die die dritten Daten oder zumindest einen Teil davon repräsentieren. Das Übermitteln von dritten Daten an eine Fachanlage oder Bereitstellen von dritten Daten für eine Fachanlage kann beispielsweise durch ein Ereignis oder eine Kombination von Ereignissen ausgelöst werden, beispielsweise das oder die Ereignisse, die im vorhergehenden Absatz für das Auslösen der Erzeugung eines Kennworts beschrieben worden sind. Dabei ist es auch hier vorteilhaft, wenn das Ereignis nur oder zumindest auch in einer Benutzereingabe, z.B. wie im vorhergehenden Absatz beschrieben, besteht oder diese umfasst, um eine ungewollte Auslösung zu verhindern

Das Verfahren gemäß dem ersten beispielhaften Aspekt der Erfindung umfasst das Erhalten oder Erfassen von dritten Daten von einer Vorrichtung, die über den Schlüssel zum Entschlüsseln der verschlüsselten Zugangsinformation verfügt, wobei die dritten Daten ein Kennwort und einen Indikator umfassen. Die Vorrichtung, die über den Schlüssel zum Entschlüsseln der verschlüsselten Zugangsinformation verfügt, kann beispielsweise eine mobile Vorrichtung sein, beispielsweise ein Smartphone. Die Vorrichtung kann z.B. die Vorrichtung eines Empfängers einer Sendung und/oder eines Zustellers und/oder einer anderen Person oder Organisation, die unter bestimmten Umständen die Möglichkeit haben soll, Zugang zu einer Fachanlage oder zu zumindest einem Fach der Fachanlage zu haben, sein.

Die dritten Daten können von der Vorrichtung erfasst oder erhalten werden, beispielsweise über eine Internet-Verbindung, eine Funk-Verbindung wie Bluetooth, NFC, WLAN, 4G, 5G und/oder beispielsweise indem ein optisches Muster wie ein Bar- oder QR-Code, welches z.B. auf einem Bildschirm der Vorrichtung, die die dritten Daten bereitstellt, angezeigt wird, erfasst wird. Das Erhalten oder Erfassen der dritten Daten von der Vorrichtung kann aber auch auf indirektem Wege erfolgen, also beispielsweise indem die Vorrichtung, von der die dritten Daten erhalten werden, die dritten Daten an eine Weiterleitungs-Vorrichtung sendet und die dritten Daten von der Weiterleitungs-Vorrichtung erhalten werden. Zusätzlich oder alternativ können die dritten Daten beispielsweise auch erhalten werden, indem die Vorrichtung, von der die dritten Daten erhalten werden, die dritten Daten ausgibt, beispielsweise als Buchstaben und/oder Zahlen. Dann kann beispielsweise eine Person diese ablesen. Anschließend können die dritten Daten dann beispielsweise über eine Tastatur oder eine andere Erfassungseinheit der Vorrichtung, die die dritten Daten erhält oder erfasst, von der Person eingegeben werden, sodass die Vorrichtung die dritten Daten auf diesem Wege von der Vorrichtung, die über den Schlüssel zum Entschlüsseln der verschlüsselten Zugangsinformation verfügt, erhält

Die Übermittlung und/oder das Bereitstellen der dritten Daten und das entsprechende Erfassen oder Erhalten der dritten Daten kann beispielsweise nur derart möglich sein, dass eine Vorrichtung und/oder ein Benutzer, der die dritten Daten übermitteln und/oder bereitstellen möchte, sich in der Nähe der erfassenden oder erhaltenden Vorrichtung befinden muss (also z.B. in einer Entfernung von weniger als einer Armlänge, 1 m, 5 m, 10 m, 50 m, 1 km, innerhalb derselben Funkzelle, in Reichweite einer Nahbereichs-Funkverbindung, z.B. NFC- oder WLAN- oder Bluetooth-Verbindung, oder in Sichtweite) und/oder dass nur in einer vorbestimmten, z.B. maximalen, Geschwindigkeit dritte Daten übermittelt und/oder bereitgestellt und/oder erhalten und/oder erfasst werden können. Ein Beispiel dafür ist eine Bluetooth-oder NFC-Übertragung von beispielsweise einem Smartphone zu der Fachanlage. Ein weiteres Beispiel ist die Bereitstellung eines oder mehrerer optischer Muster durch eine mobile Vorrichtung und das Erfassen des oder der Muster durch beispielsweise eine Fachanlage. Ein weiteres Beispiel ist eine Benutzereingabe an der Fachanlage, wobei die eingegebenen Daten beispielsweise den von einer mobilen Vorrichtung bereitgestellten und durch einen Benutzer abgelesenen dritten Daten entsprechen.

Eine beispielhafte Begrenzung der maximal und/oder praktisch erreichbaren Geschwindigkeit der Übermittlung/des Bereitstellens/des Erhaltens/des Erfassens der dritten Daten kann unter Sicherheitsaspekten vorteilhaft sein. Denn ein Angreifer kann beispielsweise versuchen, z.B. im Rahmen einer Brute-Force-Attacke, eine Vielzahl von dritten Daten mit unterschiedlichen Kennwörtern und/oder Indikatoren an eine Fachanlage zu senden, um zu testen, ob ein oder mehrere dieser dritten Daten zum Zugang zur Fachanlage oder zu einem oder mehreren Fächern der Fachanlage berechtigen (er versucht also zum Zugang berechtigende dritte Daten zu erraten). Indem beispielsweise die maximale und/oder praktisch erreichbare Geschwindigkeit der Übermittlung/des Bereitstellens/des Erhaltens/des Erfassens der dritten Daten begrenzt ist, steigert sich die Zeit, die pro dritte Daten zur Übermittlung benötigt werden. Ein Angriff, der darauf basiert, dass möglichst viele dritte Daten übermittelt werden (der Angreifer also möglichst viele Rateversuche machen möchte), dauert dann also länger, als wenn die dritten Daten schneller übermittelt werden könnten. Ein Kennwort ist aber beispielsweise nur eine begrenzte Zeit gültig. Je langsamer die Übertragung von dritten Daten ist, desto weniger dritte Daten kann ein Angreifer in dieser begrenzten Zeit ausprobieren. Damit sinkt die Wahrscheinlichkeit, dass ein Angreifer zufällig dritte Daten an eine Fachanlage übermittelt, die tatsächlich zum Zugang berechtigen (also zufällig richtig rät). Beispielsweise werden somit Brute-Force-Angriffe erschwert. Beispielsweise kann dann im Gegenzug die Länge des Kennworts und/oder weiterer Daten, die an die Fachanlage übermittelt werden, um Zugang zu einem oder mehreren Fächern der Fachanlage zu erhalten, reduziert werden. Denn die Zeit, die für einen Brute-Force-Angriff benötigt wird, ist dann beispielsweise dennoch nicht geringer oder signifikant geringer als wenn das Kennwort länger wäre, aber schneller übermittelt werden könnte. Eine solche Reduktion der Länge ist beispielsweise vorteilhaft, weil dann insgesamt weniger Daten übertragen und/oder verarbeitet werden müssen, beispielsweise an der Fachanlage und/oder an einer Vorrichtung, die die Daten an diese übermittelt oder für diese bereitstellt. Auch das beispielhafte Erfordernis, dass eine Vorrichtung und/oder ein Benutzer sich zum Übermitteln der dritten Daten an eine Fachanlage in physikalischer Nähe der Fachanlage befinden muss, kann beispielsweise die Sicherheit der Fachanlage erhöhen, indem die Fachanlage nicht von einem entfernten Ort, beispielsweise über das Internet, angegriffen werden kann.

Darüber hinaus erreicht eine Übertragung der dritten Daten, welche keinen Gebrauch von einer Internetverbindung macht, den Vorteil, dass die Vorrichtung, die die dritten Daten erhält oder erfasst, und/oder die Vorrichtung, die die dritten Daten übermittelt oder bereitstellt, zum Zeitpunkt der Übertragung der dritten Daten keine Internetverbindung benötigen. Dies ist beispielsweise besonders vorteilhaft, wenn eine Fachanlage die dritten Daten von einem Smartphone beispielsweise an einem Ort erhalten soll, an dem es keine stabile Internetverbindung gibt. Dies wäre beispielsweise in einer Tiefgarage oder ländlichen Gegenden der Fall, wo die Mobilfunknetzabdeckung als Grundlage für die Internetverbindung nicht ausreichend ist Zwar kann die Übertragung der ersten und zweiten Daten zwischen verschiedenen Vorrichtungen dennoch eine Internetverbindung erfordern. Zu welcher Zeit genau die Internetverbindung vorhanden ist, ist dann aber beispielsweise nicht entscheidend, solange zu irgendeinem Zeitpunkt, beispielsweise nachdem eine Sendung in ein Fach der Fachanlage eingestellt wurde und bevor ein Benutzer eine für ihn in eine Fachanlage eingestellte Sendung abholen möchte, zumindest kurzzeitig eine Internetverbindung bestand. Insbesondere funktioniert auf diese Art und Weise eine Fachanlage an einem solchen Ort zuverlässiger, als wenn eine Internetverbindung zu einem Server erforderlich ist, um festzustellen, ob ein Benutzer, der sich gegenüber der Fachanlage authentisieren möchte, berechtigt ist, Zugang zu einem oder mehreren Fächern zu erhalten.

Das Verfahren gemäß dem ersten beispielhaften Aspekt der Erfindung umfasst ferner das Bestimmen (z.B. Auswählen) einer Zugangsinformation basierend zumindest auf dem in den dritten Daten enthaltenen Indikator. Das Bestimmen erfolgt beispielsweise basierend auf der Assoziation zwischen dem Indikator und der Zugangsinformation. Wenn beispielsweise die Vorrichtung, die das Bestimmen durchführt, Zugriff auf eine Datenstruktur hat, z.B. eine Tabelle, welche eine Zuordnung von Indikatoren zu jeweiligen assoziierten Zugangsinformationen umfasst, kann beim Bestimmen beispielsweise die Zugangsinformation basierend auf dem in den dritten Daten enthaltenen Indikator unter Verwendung der Datenstruktur bestimmt werden. Alternativ oder zusätzlich kann beim Bestimmen beispielsweise zunächst ein Fachs, mit welchem der Indikator assoziiert ist, und anschließend eine Zugangsinformation, welche mit dem gleichen Fach assoziiert, also diesem beispielsweise zugeordnet ist, bestimmt werden. Dies kann vorteilhaft sein. Denn das Verfahren gemäß dem ersten beispielhaften Aspekt der Erfindung kann beispielsweise von einer Fachanlage ausgeführt werden, die über eine Vielzahl von Fächern erfolgt, von der einige oder alle Fächer mit einer jeweiligen Zugangsinformation assoziiert sind. Der Indikator kann dann beispielsweise das Feststellen, ob ein Kennwort zum Zugang zu einem oder mehreren Fächern der Fachanlage berechtigt, effizienter machen. Dies geschieht beispielsweise indem eine Zugangsinformation, die zum Feststellen benötigt wird, basierend zumindest auf dem Indikator bestimmt werden kann und beispielsweise nicht basierend auf mehreren oder allen bekannten Zugangsinformationen jeweils festgestellt werden muss, ob das Kennwort zum Zugang berechtigt.

Das Verfahren gemäß dem ersten beispielhaften Aspekt der Erfindung umfasst ferner das Feststellen, basierend zumindest auf der bestimmten Zugangsinformation, ob das Kennwort zum Zugang zur Fachanlage oder zu einem oder mehreren Fächern der Fachanlage berechtigt Beispielsweise kann festgestellt werden, dass das Kennwort zum Zugang berechtigt, wenn eine Vorrichtung, die das Feststellen ausführt, aus der bestimmten Zugangsinformation nach einer vorbestimmten Regel zumindest ein Kennwort erzeugt, welches dem in den dritten Daten enthaltenen Kennwort entspricht Beispielsweise kann die Vorrichtung aus der bestimmten Zugangsinformation nach einer vorbestimmten Regel auch mehr als ein Kennwort erzeugen, und feststellen, dass das in den dritten Daten enthaltene Kennwort zum Zugang berechtigt, wenn nur eines der erzeugten Kennwörter mit dem in den dritten Daten enthaltenen Kennwort übereinstimmt Insbesondere kann die Vorrichtung auch feststellen, dass das in den dritten Daten enthaltenen Kennwort nicht zum Zugang berechtigt, wenn die Vorrichtung aus der bestimmten Zugangsinformation nach einer vorbestimmten Regel zwar eines oder mehrere Kennwörter erzeugt, aber keines dieser Kennwörter dem in den dritten Daten enthaltenen Kennwort entspricht. Die vorbestimmte Regel, nach der die Vorrichtung oder das System, das oder die das Feststellen ausführt, aus der bestimmten Zugangsinformation nach einer vorbestimmten Regel zumindest ein Kennwort erzeugt, ist beispielsweise auch die Regel, die die Vorrichtung, welche das Kennwort erzeugt hat, das in den dritten Daten enthalten ist, zur Erzeugung des Kennworts verwendet hat.

Alternativ kann die Vorrichtung, z.B. eine Fachanlage, die das Feststellen ausführt, beim Feststellen beispielsweise eine Operation und/oder Transformation auf dem in den dritten Daten enthaltenen Kennwort durchführen und das Ergebnis der Operation und/oder Transformation mit der bestimmten Zugangsinformation vergleichen. Beispielsweise kann dann festgestellt werden, dass das Kennwort zum Zugang zur Fachanlage oder zu einem oder mehreren Fächern der Fachanlage berechtigt, wenn das Ergebnis der Operation und/oder Transformation mit der bestimmten Zugangsinformation übereinstimmt. Beispielsweise kann auch festgestellt werden, dass das Kennwort nicht zum Zugang zur Fachanlage oder zu einem oder mehreren Fächern der Fachanlage berechtigt, wenn das Ergebnis mit der bestimmten Zugangsinformation nicht übereinstimmt. Dabei ist die Operation und/oder Transformation beispielsweise die Inverse zu der Regel, die die Vorrichtung, welche das Kennwort erzeugt hat, das in den dritten Daten enthalten ist, zur Erzeugung des Kennworts verwendet hat

Beim Feststellen, ob das Kennwort zum Zugang zur Fachanlage oder zu einem oder mehreren Fächern der Fachanlage berechtigt, wird beispielsweise festgestellt, zu welchem Fach und/oder zu welchen Fächern das Kennwort zum Zugang berechtigt Zusätzlich oder alternativ wird beispielsweise festgestellt, ob das Kennwort zum Zugang zur Fachanlage, also z.B. zu allen Fächern und/oder zu einem beliebigen Fach der Fachanlage und/oder zu einem Sonderfach der Fachanlage und/oder zu einer Steuerung der Fachanlage und/oder einer (Sonder-)Funktionalität der Fachanlage, berechtigt Ein Sonderfach der Fachanlage kann beispielsweise Technikkomponenten der Fachanlage beinhalten, z.B. ein Modem, ein Steuermodul und/oder einen Stromschalter. Zugang zu einem solchen Sonderfach kann beispielsweise für einen Techniker erforderlich sein, z.B. zur Wartung der Fachanlage. Ein Zugang zur Steuerung der Fachanlage kann ebenfalls z.B. für einen Techniker erforderlich sein. So kann ein Techniker z.B. Updates installieren und/oder Einstellungen vornehmen. Solche Einstellungen können beispielhaft beinhalten welche Fächer für gewöhnliche Sendungen genutzt werden können, welche Fächer z.B. aufgrund von technischen Fehlern nicht genutzt werden können und/oder welche Fächer beispielsweise für außerordentliche Zwecke, z.B. Wertsachen, genutzt werden können und daher beispielsweise erhöhte oder andere Anforderungen an eine Authentifizierung eines Benutzers durch die Fachanlage haben sollen. Ein Kennwort kann beispielsweise auch zum Zugang zu einer (Sonder-)Funktionalität berechtigen. Eine (Sonder-)Funktionalität kann beispielsweise eine eben solche besondere Authentifizierung zur Abholung einer Wertsache aus einem besonders gesicherten Fach sein. Eine weitere Funktionalität könnte aber beispielsweise auch das Einlegen von Retouren durch einen Benutzer sein. Noch eine andere Funktionalität könnte beispielsweise für die Polizei und/oder den Zoll zur Verfügung stehen. Diese Funktionalität könnte dann beispielsweise einem Polizei- oder Zollbeamten den Zugang zu einem beliebigen, von dem Polizei- oder Zollbeamten ausgewählten Fach ermöglichen.

In einer beispielhaften Ausführungsform wird beim Feststellen basierend zumindest auf der bestimmten Zugangsinformation festgestellt, dass das Kennwort - falls es zum Zugang berechtigt - nur zum Zugang zu einem Fach berechtigt, mit welchem die bestimmte Zugangsinformation assoziiert ist Erzeugt beispielsweise eine Fachanlage aus der bestimmten Zugangsinformation nach einer vorbestimmten Regel ein oder mehrere Kennwörter und stellt fest, dass das in den dritten Daten enthaltene Kennwort zum Zugang berechtigt, weil eines der erzeugten Kennwörter mit dem in den dritten Daten enthaltenen Kennwort übereinstimmt, stellt die Fachanlage dabei beispielsweise auch fest, dass das Kennwort beispielsweise nur zum Zugang zu dem Fach berechtigt, mit welchem die bestimmte Zugangsinformation assoziiert ist. Alternativ oder zusätzlich kann beim Feststellen basierend zumindest auf der bestimmten Zugangsinformation beispielsweise festgestellt werden, dass das Kennwort - falls es zum Zugang berechtigt - nur zum Zugang zu Fächern berechtigt, welche jeweilige Sendungen enthalten, welche mit der Sendung in dem Fach, welches mit der bestimmten Zugangsinformation assoziiert ist, assoziiert sind. Das kann beispielsweise der Fall sein, wenn die jeweiligen Sendungen in den jeweiligen Fächern mit einer identischen Benutzerkennung assoziiert sind, beispielsweise also alle für den gleichen Empfänger bestimmt sind. Alternativ oder zusätzlich kann beim Feststellen basierend zumindest auf der bestimmten Zugangsinformation beispielsweise festgestellt werden, dass das Kennwort - falls es zum Zugang berechtigt - zum Zugang zur Fachanlage, also beispielsweise zu allen Fächern und/oder einem beliebigen Fach und/oder einem Sonderfach der Fachanlage und/oder zu einer Steuerung der Fachanlage und/oder einer (Sonder-)Funktionalität der Fachanlage, berechtigt Ein solcher Zugang zur Fachanlage kann beispielsweise nur Benutzerkreisen mit vorbestimmter Funktion vorbehalten sein, beispielsweise Technikern, Polizisten und/oder Zustellern.

Das Verfahren gemäß dem ersten beispielhaften Aspekt der Erfindung umfasst ferner das Gewähren von Zugang zur Fachanlage oder zu einem oder mehreren Fächern der Fachanlage, wobei notwendige Bedingung für das Gewähren von Zugang ist, dass festgestellt wurde, dass das in den dritten Daten enthaltene Kennwort zum Zugang zur Fachanlage oder zum Zugang zu dem einen oder zu den mehreren Fächern der Fachanlage berechtigt Beim Gewähren von Zugang zur Fachanlage oder zu einem oder mehreren Fächern der Fachanlage kann beispielsweise das Fach oder die mehreren Fächer der Fachanlage geöffnet werden und/oder die jeweiligen Türen der Fächer können entriegelt werden. Dafür ist es jedoch notwendige Bedingung, dass festgestellt wurde, dass das in den dritten Daten enthaltene Kennwort zum Zugang zur Fachanlage oder zum Zugang zu dem einen oder zu den mehreren Fächern der Fachanlage, die geöffnet oder entriegelt werden sollen, berechtigt Insbesondere wird beispielsweise zu keinem Fach Zugang gewährt, wenn nicht festgestellt wurde oder werden konnte, dass das in den dritten Daten enthaltene Kennwort zum Zugang zu dem einen oder zu den mehreren Fächern der Fachanlage berechtigt. Beim Gewähren von Zugang zur Fachanlage oder zu einem oder mehreren Fächern der Fachanlage kann beispielsweise auch grundsätzlich der Zugang zu Fächern der Fachanlage, die keine Fächer sind, für die festgestellt wurde, dass das in den dritten Daten enthaltene Kennwort zum Zugang zu ihnen berechtigt, verweigert werden. Die Fächer werden dann beispielsweise nicht geöffnet und/oder deren jeweilige Türen nicht entriegelt

Das Gewähren von Zugang zur Fachanlage oder zu einem oder mehreren Fächern der Fachanlage kann beispielsweise auch von weiteren Bedingungen abhängen. Beispielsweise kann weitere notwendige Bedingung für das Gewähren von Zugang zu einem Fach sein, dass festgestellt wurde, dass ein Benutzer, beispielsweise ein Empfänger von Sendungen, Zugang zu diesem Fach wünscht. Beispielsweise kann das in den dritten Daten enthaltene Kennwort zwar zum Zugang zu mehreren Fächern der Fachanlage berechtigen, ein Empfänger von Sendungen, die sich in den Fächern befinden, aber beispielsweise nur Zugang zu manchen derjenigen Fächer wünschen, zu denen das erhaltene oder erfasste Kennwort zum Zugang berechtigt Zu welchen Fächern Zugang gewünscht ist, kann beispielsweise durch eine Benutzereingabe erfasst werden, beispielsweise über eine Erfassungseinheit wie eine Tastatur oder einen berührungsempfindlichen Bildschirm. Zu welchen Fächern Zugang gewünscht ist kann alternativ oder zusätzlich beispielsweise basierend auf Daten, die von einer beispielweise mobilen Vorrichtung eines Benutzers erhalten werden, bestimmt werden. Zugang wird dann beispielsweise nur zu den Fächern gewährt, zu denen das Kennwort berechtigt und zu denen Zugang gewünscht ist und/oder die ein Benutzer aus der Menge der Fächer, für die das Kennwort zum Zugang berechtigt, ausgewählt hat. Der Benutzer kann dann beispielsweise zu einem späteren Zeitpunkt mit einem anderen Indikator und Kennwort Zugang zu den von ihm nicht geöffneten Fächern erhalten.

Die notwendige Bedingung für das Gewähren von Zugang, dass festgestellt wurde, dass das in den dritten Daten enthaltene Kennwort zum Zugang zur Fachanlage oder zum Zugang zu dem einen oder zu den mehreren Fächern der Fachanlage berechtigt, kann auch darüber hinaus mit weiteren Bedingungen kombiniert werden. Insbesondere können diese beispielsweise beliebig verknüpft werden, beispielsweise mit UND- oder ODER- oder anderen logischen Verknüpfungen. Bei drei beispielhaften Bedingungen A, B und C könnte beispielsweise die Kombination (A UND B) ODER (A UND C) eine notwendige Bedingung für das Gewähren von Zugang sein, sodass Zugang gewährt wird, wenn entweder A und B erfüllt sind, oder A und C erfüllt sind, oder A und B und C erfüllt sind.

Beispielhafte Ausführungsformen und weitere Vorteile der beispielhaften Aspekte der Erfindung werden nachfolgend beschrieben, wobei deren Offenbarung jeweils für alle drei Aspekte der Erfindung gleichermaßen gelten soll.

Gemäß einer beispielhaften Ausführungsform des ersten Aspekts der Erfindung erfolgt das Ausgeben von ersten Daten an eine Vorrichtung oder an ein System, welche oder welches dazu eingerichtet ist, Daten an die Vorrichtung zu übermitteln, die über einen Schlüssel zum Entschlüsseln der verschlüsselten Zugangsinformation verfügt Also zum Beispiel gibt eine Fachanlage die ersten Daten an eine Vorrichtung oder an ein System aus, welche oder welches beispielsweise das Verfahren gemäß dem dritten Aspekt der Erfindung ausführen. Die Vorrichtung, die über einen Schlüssel zum Entschlüsseln der verschlüsselten Zugangsinformation verfügt, kann beispielsweise eine mobile Vorrichtung eines Benutzers oder Zustellers sein. Die beispielhafte mobile Vorrichtung kann den Schlüssel beispielsweise zu einem früheren Zeitpunkt erzeugt und gespeichert haben. Zusätzlich oder alternativ zur in diesem Absatz zuvor beschriebenen Ausgabe der ersten Daten können die ersten Daten auch direkt an die Vorrichtung ausgegeben werden, die über einen Schlüssel zum Entschlüsseln der verschlüsselten Zugangsinformation verfügt. Beispielsweise könnte eine Fachanlage also die ersten Daten, z.B. per Bluetooth oder NFC, direkt an eine mobile Vorrichtung ausgeben, die über einen Schlüssel zum Entschlüsseln der verschlüsselten Zugangsinformation verfügt Die mobile Vorrichtung könnte dann die ersten Daten erhalten.

Gemäß einer beispielhaften Ausführungsform des ersten Aspekts der Erfindung berechtigt das Kennwort nur zum Zugang zu Fächern der Fachanlage, in denen sich jeweilige Sendungen befinden, die mit einer identischen Benutzerkennung assoziiert sind. Dabei umfasst das Verfahren gemäß dem ersten Aspekt der Erfindung beispielsweise einen oder mehrere der folgenden Verfahrensschritte: Bestimmen eines Fachs, mit dem der in den dritten Daten enthaltene Indikator assoziiert ist; Bestimmen der Benutzerkennung basierend auf Information zu einer Sendung, die sich in dem bestimmten Fach befindet, wobei es sich bei der Benutzerkennung beispielsweise um die Benutzerkennung eines Empfängers der Sendung handelt; Bestimmen eines oder mehrerer weiterer Fächer, in denen sich jeweilige Sendungen befinden, die mit der bestimmten Benutzerkennung assoziiert sind. Auf diese Weise müssen beispielsweise nicht für jedes Fach, in dem eine Sendung für einen Empfänger liegt, Daten und/oder Kennwörter an die Fachanlage übermittelt und/oder bereitgestellt und von der Fachanlage erfasst und/oder erhalten und/oder verarbeitet werden. Stattdessen genügt beispielsweise die Übermittlung/das Bereitstellen bzw. das Erhalten/Erfassen eines Kennworts damit die Fachanlage feststellen kann, dass ein Benutzer berechtigt ist Zugang zu mehreren Fächern zu erhalten.

Bei der Benutzerkennung kann es sich beispielsweise um eine Nummer, z.B. eine Postnummer, oder eine andere Folge oder Kombination von Ziffern und/oder Buchstaben und/oder Bits handeln, welche einen Benutzer und/oder eine Gruppe von Benutzern identifiziert Ein Benutzer kann beispielsweise ein registrierter Kunde sein, dem im Rahmen der Registrierung eine Benutzerkennung zugeteilt wurde oder die er sich im Rahmen der Registrierung ausgesucht hat. Ein Benutzer kann beispielsweise auch ein Zusteller sein, dem beispielsweise eine Benutzerkennung zugeteilt wurde. Ein Zusteller kann z.B. ein menschlicher oder ein maschineller Zusteller sein, z.B. ein Roboter und/oder eine Drohne, sein.

Eine Fachanlage kann beispielsweise im Rahmen eines Einstellens von Sendungen feststellen oder informiert werden, mit welcher Benutzerkennung eine jeweilige Sendung assoziiert ist und in welches Fach die jeweilige Sendung eingelegt wurde. Beispielsweise kann die Fachanlage zumindest einen Teil dieser Informationen mittels einer Benutzereingabe erfassen und/oder von einem Gerät erhalten. Beispielsweise kann die Fachanlage zumindest einen Teil dieser Informationen von einem Zustellergerät erhalten, welches beispielsweise ein Etikett einer Sendung im Rahmen des Einstellens gescannt hat und zumindest einen Teil der so erhaltenen Informationen an die Fachanlage weiterleitet Alternativ oder zusätzlich kann die Fachanlage auch mittels eines Scanners und/oder anderer Sensoren Informationen zu einer jeweiligen Sendung erfassen, z.B. eine mit der Sendung assoziierte Benutzerkennung.

Eine Sendung ist beispielsweise nur mit einer Benutzerkennung, z.B. des Empfängers, assoziiert. Alternativ ist eine Sendung beispielsweise mit zwei Benutzerkennungen, z.B. eines Empfängers und eines Absenders, assoziiert Alternativ ist eine Sendung mit mehr Benutzerkennungen assoziiert.

Gemäß einer beispielhaften Ausführungsform des ersten Aspekts der Erfindung ist notwendige Bedingung für das Feststellen, dass das Kennwort zum Zugang zur Fachanlage oder zu einem oder mehreren Fächern der Fachanlage berechtigt, dass festgestellt wird, dass das Kennwort basierend zumindest auf einer Information erzeugt wurde, die der bestimmten Zugangsinformation entspricht Dieses Feststellen kann beispielsweise durch Erzeugen eines oder mehrerer Kennwörter jeweils basierend auf der Zugangsinformation und Abgleich der erzeugten Kennwörter mit dem in den dritten Daten enthaltenen Kennwort durchgeführt werden. Das Kennwort berechtigt beispielsweise dann und nur dann zum Zugang zur Fachanlage oder zu einem oder mehreren Fächern der Fachanlage, wenn eine Übereinstimmung festgestellt wurde. Diese Bedingung kann beispielsweise die einzige notwendige Bedingung sein, alternativ aber auch eine von mehreren notwendigen Bedingungen. Eine weitere notwendige Bedingung kann beispielsweise sein, dass das Kennwort in einem nach einer vordefinierten Regel bestimmten Zeitfenster erzeugt und/oder in einem nach einer vordefinierten Regel bestimmten Zeitfenster mittels der dritten Daten erhalten wurde.

Gemäß einer beispielhaften Ausführungsform des ersten Aspekts der Erfindung ist beispielsweise weitere notwendige Bedingung für das Feststellen, dass das Kennwort zum Zugang zur Fachanlage oder zu einem oder mehreren Fächern der Fachanlage berechtigt, dass festgestellt wird, dass das Kennwort ferner basierend auf einem Zeitwert (also beispielsweise einer Repräsentation einer Uhrzeit und/oder eines Datums) erzeugt wurde, der einem (beispielsweise unter Verwendung einer Uhr der Fachanlage bestimmten oder von einem Server erhaltenen) aktuellen Zeitwert der Fachanlage entspricht oder in einer vordefinierten Beziehung zu dem aktuellen Zeitwert der Fachanlage steht. Beispielsweise kann die Fachanlage durch eine Transformation ausgehend von dem Kennwort einen Zeitwert erhalten und diesen mit dem Zeitwert, den die Fachanlage hat, vergleichen. Beispielsweise ist das Kennwort nur gültig, wenn der erhaltene Zeitwert in einem vorbestimmten Zeitintervall, z.B. 60 Sekunden, vor oder nach dem aktuellen Zeitwert liegt Zusätzlich oder alternativ kann die die Fachanlage einen aktuellen, z.B. auf 60 s, gerundeten UNIX-Zeitwert und einen vorherigen oder zukünftigen Zeitwert nutzen, um basierend auf dem jeweiligen Zeitwert und der Zugangsinformation ein jeweiliges Kennwort zu erzeugen und dieses mit dem in den dritten Daten enthaltenen Kennwort abzugleichen. Das Kennwort berechtigt dann beispielsweise nur zum Zugang, wenn eines der erzeugten Kennwörter mit dem in den dritten Daten enthaltenen Kennwort übereinstimmt. Durch eine zeitliche Begrenzung der Gültigkeit eines Kennworts, wie z.B. in diesem Absatz beschrieben, kann die Sicherheit der Fachanlage erhöht werden, indem einem Angreifer nur eine durch die Zeitbegrenzung vorgegebene Zeit für einen Angriff zur Verfügung steht, bevor ein neues Kennwort erforderlich ist. Ein Brute-Force-Angriff kann so beispielsweise erschwert werden.

Gemäß einer beispielhaften Ausführungsform des ersten Aspekts der Erfindung wird die Zugangsinformation erzeugt, um einem oder mehreren Benutzerkreisen mit jeweils vordefinierter Funktion unabhängig von einer Sendung Zugang zur Fachanlage zu ermöglichen. Dabei ist der Indikator beispielsweise zumindest derart mit der Zugangsinformation assoziiert, dass die Zugangsinformation einem Benutzerkreis mit einer vordefinierten Funktion eindeutig zugeordnet ist (beispielsweise indem er von der Fachanlage oder einer anderen Vorrichtung eindeutig zugeordnet wurde) und dass der Indikator mit dem Benutzerkreis mit dieser vordefinierten Funktion assoziiert wird. Eine vordefinierte Funktion könnte beispielsweise die Rolle als Techniker, (Bundes-)Polizist oder Zusteller sein. Ein jeweiliger Benutzerkreis könnte dann beispielsweise einen oder mehrere Techniker umfassen, einen oder mehrere Polizisten oder einen oder mehrere Zusteller. Insbesondere bei den Zustellern könnten aber beispielsweise auch mehrere Benutzerkreise mit jeweils vordefinierter Funktion definiert werden, z.B. jeweils einer für maschinelle Zusteller und menschliche Zusteller. Dass eine Zugangsinformation erzeugt wird, um einem oder mehreren Benutzerkreisen mit jeweils vordefinierter Funktion unabhängig von einer Sendung Zugang zur Fachanlage zu ermöglichen, schließt dabei nicht aus, dass weitere Zugangsinformationen zu anderen Zwecken, also beispielsweise für gewöhnliche Empfänger, erzeugt werden.

Die Erzeugung einer Zugangsinformation, um einem oder mehreren Benutzerkreisen mit jeweils vordefinierter Funktion unabhängig von einer Sendung Zugang zur Fachanlage zu ermöglichen, kann beispielsweise in Reaktion darauf durchgeführt werden, dass in dem Verfahren gemäß dem ersten Aspekt der Erfindung nicht nur ein Schlüssel erhalten wurde, sondern zugleich (oder später oder zuvor) auch eine mit dem Schlüssel assoziierte, also beispielsweise diesem zugeordnete, Rolleninformation, also beispielsweise eine Information über einen Benutzerkreis mit einer vordefinierten Funktion. In einer beispielhaften Ausführungsform des ersten Aspekts der Erfindung umfasst das Verfahren also z.B. das Erhalten einer Zuordnungsinformation, basierend auf welcher der Schlüssel einem Benutzerkreis mit einer vordefinierten Funktion zuordenbar ist. Diese zugeordnete Rolleninformation, die hier auch als Zuordnungsinformation bezeichnet wird, kann beispielsweise regelmäßig oder unregelmäßig aktualisiert, also z.B. neu erhalten, werden, beispielsweise täglich. Es kann dann beispielsweise bei jeder Aktualisierung eine neue Zugangsinformation erzeugt werden. Eine solche Zugangsinformation kann in manchen Ausführungsformen auch beispielsweise nur in einem vorbestimmten Zeitraum oder während einer vorbestimmten Dauer zum Zugang berechtigen, z.B. indem sie anschließend als "ungültig" markiert oder gelöscht wird. Gemäß einer beispielhaften Ausführungsform des ersten Aspekts der Erfindung kann die Zugangsinformation also erzeugt werden, um dem Benutzerkreis mit dieser vordefinierten Funktion unabhängig von einer Sendung Zugang zur Fachanlage zu ermöglichen, wobei der Indikator zumindest derart mit der Zugangsinformation assoziiert ist, dass die Zugangsinformation einem Benutzerkreis mit dieser vordefinierten Funktion eindeutig zugeordnet ist und dass der Indikator mit dem Benutzerkreis mit dieser vordefinierten Funktion assoziiert wird.

Um die Erzeugung einer Zugangsinformation für einen Benutzerkreis mit einer vordefinierter Funktion z.B. an einer Fachanlage auszulösen, kann beispielsweise im Verfahren gemäß dem zweiten Aspekt der Erfindung ein Schlüssel einer bestimmten Rolleninformation zugeordnet werden, z.B. auf einem Mobilgerät, das z.B. ein Verfahren gemäß dem zweiten Aspekt der Erfindung durchführt. Zusätzlich oder alternativ kann eine solche Zuordnung auch im Verfahren gemäß dem dritten Aspekt der Erfindung durchgeführt werden, z.B. von einem oder mehreren Servern. Der Schlüssel und/oder die Rolleninformation (oder eine Information, die diese Informationen und/oder diese Zuordnung repräsentiert; also die Zuordnungsinformation) können dann an eine Vorrichtung oder an ein System übermittelt werden, welche oder welches dazu eingerichtet ist, den Schlüssel und/oder die zugeordnete Rolleninformation (also die Zuordnungsinformation) an eine Fachanlage zu übermitteln. Die Übertragung an die eine oder mehrere Fachanlagen kann anschließend vergleichbar zur Übertragung des Schlüssels im Verfahren gemäß dem dritten Aspekt der Erfindung erfolgen. Insbesondere kann das Verfahren einer beispielhaften Ausführungsform des zweiten oder dritten Aspekts der Erfindung also einen oder mehrere der folgenden Verfahrensschritte umfassen: Erhalten oder Erzeugen einer Zuordnungsinformation, basierend auf welcher der Schlüssel einem Benutzerkreis mit einer vordefinierten Funktion zuordenbar ist; und Übermitteln der Zuordnungsinformation an die Fachanlage oder an eine Vorrichtung oder an ein System, welche oder welches dazu eingerichtet ist, die Zuordnungsinformation an die Fachanlage zu übermitteln (also beispielsweise eine Vorrichtung oder ein System, welche oder welches das Verfahren gemäß dem dritten Aspekt der Erfindung ausführt). Dabei kann die Zugangsinformation von der Fachanlage beispielhaft in Reaktion auf den Erhalt der Zuordnungsinformation erzeugt werden.

Darüber hinaus kann bei der Zuordnung einer Rolleninformation zu einem Schlüssel beispielhaft auch eine Fachanlagenzuordnung durchgeführt werden, z.B. auf dem Mobilgerät. Diese Information über die Zuordnung und/oder Assoziation mit einer Fachanlage, auch bezeichnet als Assoziationsinformation, kann dann im Verfahren gemäß dem zweiten Aspekt der Erfindung ebenfalls an eine Vorrichtung oder an ein System übermittelt werden (beispielsweise zusammen mit dem Schlüssel und/oder der Rolleninformation oder aber auch separat davon), welche oder welches dazu eingerichtet ist, den Schlüssel und/oder die Rolleninformation und/oder die Fachanlagenzuordnung an eine oder mehrere Fachanlage zu übermitteln. Dies können z.B. eben jene Fachanlagen sein, mit denen der Schlüssel und/oder die Rolleninformation (über die Assoziationsinformation) assoziiert ist.

Alternativ oder zusätzlich können die Zuordnung eines Schlüssel zu einer bestimmten Rolleninformation und/oder die Fachanlagenzuordnung (also die Assoziationsinformation), die oben beschrieben wurden, auch beispielhaft durch einen Server oder eine andere Vorrichtung durchgeführt werden. Eine solche Vorrichtung kann beispielsweise von einer Organisation verwaltet und/oder kontrolliert und/oder gesteuert werden, die beispielsweise auch Mobilgeräte für einen oder mehrere Benutzerkreise verwaltet und/oder kontrolliert und/oder diese Personen zur Verfügung stellt. Dies kann z.B. eine Organisation sein, die die hier beschriebenen Fachanlagen nicht verwaltet, also beispielsweise ein "externer Dienstleister". Eine oder mehrere der beschriebenen Zuordnungen können dann beispielsweise von der Organisation mittels der Vorrichtung, z.B. dem von ihr kontrollierten Server und/oder Rechner, durchgeführt werden. Der Schlüssel und/oder die zugeordnete Rolleninformation und/oder die Fachanlagenzuordnung (also Zuordnungs- und/oder Assoziationsinformation) können dann beispielsweise von dieser Vorrichtung an eine Vorrichtung oder an ein System, z.B. einen Server oder ein Serversystem, übermittelt werden (z.B. in Form einer digital signierten Autorisierungsmeldung), welche oder welches dazu eingerichtet ist, den Schlüssel und/oder die zugeordnete Rolleninformation und/oder die zugehörige Fachanlagenzuordnung an die so zugeordnete Fachanlage zu übermitteln (z.B. nur unter der Bedingung, dass die digitale Signatur der Autorisierungsmeldung als gültig geprüft wurde). An den Fachanlagen können dann beispielsweise jeweilige Zugangsinformationen erzeugt werden, die wiederum beispielsweise wie im Verfahren gemäß dem ersten Aspekt der Erfindung beschrieben als Teil von ersten Daten ausgegeben werden (können). Die Organisation kann somit beispielsweise mittels der ihr zugeordneten Vorrichtung, z.B. einem Server, beeinflussen und/oder ganz oder teilweise steuern, für welche Mobilgeräte an welchen Fachstationen eine Zugangsinformation erzeugt wird, sodass diese Mobilgeräte an den jeweiligen Fachstationen zum Zugang berechtigt werden. Die vorbeschriebene Zuordnung eines Schlüssel zu einer bestimmten Rolleninformation und/oder Fachanlage kann beispielsweise regelmäßig, z.B. täglich, aktualisiert werden. Die Organisation, die eine solche Zuordnung steuert, kann somit beispielsweise täglich steuern, welche Mobilgeräte zum Zugang zu welchen Fachanlagen berechtigt sein sollen. Insbesondere kann das Verfahren gemäß einer beispielhaften Ausführungsform des zweiten oder dritten Aspekts der Erfindung also ferner umfassen: Erhalten oder Erzeugen einer Assoziationsinformation bevor der Schlüssel und/oder bevor die Zuordnungsinformation an die Fachanlage übermittelt wird, wobei die Assoziationsinformation den Schlüssel mit der Fachanlage assoziiert, an die der Schlüssel und/oder die Zuordnungsinformation übermittelt wird oder werden soll.

Nachdem dann beispielsweise eine Zugangsinformation erzeugt wurde, um einem oder mehreren Benutzerkreisen mit jeweils vordefinierter Funktion unabhängig von einer Sendung Zugang zur Fachanlage zu ermöglichen, kann mit dieser Zugangsinformation gemäß einer beispielhaften Ausführungsform des ersten Aspekts der Erfindung verfahren werden. Das kann also insbesondere z.B. so sein, wie es auch bei der Zugangsinformation für einen durchschnittlichen Sendungsempfänger (hier in Abgrenzung zu einem Benutzerkreis) der Fall wäre. Alternativ kann aber auch anders verfahren werden. Beispielsweise kann die Ausgabe/Übermittlung von zweiten Daten im Verfahren gemäß dem dritten Aspekt der Erfindung nicht nur an die mobile Vorrichtung durchgeführt werden, von der ein Schlüssel erhalten wurde, sondern z.B. auch an weitere mobile Vorrichtungen, die beispielsweise über den gleichen Schlüssel verfügen und/oder der gleichen Rolleninformation zugeordnet sind und/oder für die beispielsweise eine Zuordnung zu einer Fachanlage von einer Zustellorganisation wie oben beschrieben durchgeführt wurde. Falls beispielsweise mehrere mobile Vorrichtungen über den gleichen Schlüssel verfügen, kann dies einen Vorteil haben. Denn die Anzahl von Mobilgeräten, die Zugriff auf eine Vorrichtung gemäß dem ersten Aspekt der Erfindung, z.B. eine Fachanlage, haben können, ist - insofern jedes Mobilgerät über einen eigenen Schlüssel verfügen soll - dadurch begrenzt, dass die Vorrichtung gemäß dem ersten Aspekt der Erfindung auch für jedes solche Mobilgerät einen eigenen Indikator bereitstellen muss. Die Gesamtanzahl der möglichen Indikatoren ist aber möglicherweise begrenzt Vorteilhaft kann es daher sein, wenn mehrere Mobilgeräte über den gleichen Schlüssel verfügen. Diese benötigen dann auch nur einen Indikator, sodass die Anzahl der Mobilgeräte, die Zugriff auf eine Vorrichtung gemäß dem ersten Aspekt der Erfindung, z.B. eine Fachanlage, haben können, nicht mehr per se durch die Gesamtzahl der verfügbaren Indikatoren begrenzt ist.

Mit der vorbeschriebenen beispielhaften Erzeugung einer Zugangsinformation, um einem oder mehreren Benutzerkreisen mit jeweils vordefinierter Funktion unabhängig von einer Sendung Zugang zur Fachanlage zu ermöglichen, wird es z.B. ermöglicht, dass bestimmte Benutzerkreise beispielsweise täglich ihre Rolle auf ihrem Mobilgerät für bestimmte Fachanlagen aktualisieren, zu denen sie anschließend durch das beschriebene Verfahren zum Zugang berechtigt werden. Also beispielsweise kann ein Zusteller als Teil des Benutzerkreises "Zusteller" an einem Mobilgerät für oder an einem Tag für eine oder mehrere Fachanlagen die dortige Erzeugung von Zugangsinformationen (und schließlich auch den Erhalt derselben am Mobilgerät) auslösen. Das Mobilgerät kann dabei beispielsweise nicht dem Zusteller persönlich, sondern z.B. der Zustellorganisation zugeordnet sein. Ob und inwiefern ein bestimmter Zusteller dann das Mobilgerät steuern und/oder die Erzeugung und/oder den Erhalt von beschriebenen Zugangsinformationen auslösen kann, ist dann beispielsweise durch eine Benutzer- und Berechtigungsverwaltung und einer Anmeldung am Mobilgerät selbst (z.B. auf Basis von NFC und einem Ausweis, z.B. einem Postausweis) geregelt, gesteuert und/oder vorgegeben, beispielsweise durch die Zustellorganisation. Zusätzlich oder alternativ kann beispielsweise ein Server oder eine andere Vorrichtung, z.B. der Zustellorganisation, die Erzeugung und/oder den Erhalt von beschriebenen Zugangsinformationen auslösen, z.B. indem diese Vorrichtung einer Vorrichtung oder einem System, welche oder welches dazu eingerichtet ist, den Schlüssel und/oder die zugeordnete Rolleninformation an eine Fachanlage zu übermitteln, mitteilt, welche Mobilgeräte für welche Fachanlagen zum Zugang berechtigt sein sollen. Eine solche Mitteilung kann beispielsweise regelmäßig, z.B. täglich, erfolgen. Die Ausgabe bzw. Übermittlung von zweiten Daten im Verfahren gemäß dem dritten Aspekt der Erfindung kann dann beispielsweise an die mitgeteilten mobilen Vorrichtungen durchgeführt werden.

Grundsätzlich unterscheidet sich dabei beispielsweise der Zugang, der von solchen Benutzerkreisen benötigt wird oder zu manchen Zeitpunkten benötigt werden kann, von dem, den ein durchschnittlicher Empfänger von Sendungen benötigt, der beispielsweise lediglich Zugriff auf ein oder mehrere Fächer mit den Sendungen für ihn haben soll. Die Fachanlage kann beispielsweise basierend auf dem Indikator feststellen, dass - bei positiver Feststellung, dass das Kennwort zum Zugang berechtigt - nicht das übliche Fachanlagenprogramm zum Gewähren von Zugang für einen gewöhnlichen Benutzer ablaufen soll, sondern dass beispielsweise ein Sonderprogramm ausgeführt werden soll. Dass Sonderprogramm ermöglicht beispielsweise Zugang zur gesamten Fachanlage, also z.B. allen Fächern und/oder einem beliebigen Fach. Damit ein solcher Zugang zur Fachanlage, der beispielsweise für gewöhnliche Benutzer nicht möglich ist, für Berechtigte möglich wird, ist es beispielsweise in einer beispielhaften Ausführungsform gemäß dem ersten Aspekt der Erfindung weitere notwendige Bedingung für das Feststellen, dass das Kennwort zum Zugang zur Fachanlage berechtigt, dass festgestellt wird, dass der in den dritten Daten enthaltene Indikator mit einem Benutzerkreis mit vordefinierter Funktion assoziiert ist. Wenn festgestellt wurde, dass das Kennwort zum Zugang zur Fachanlage berechtigt, kann dann beispielsweise ein Sonderprogramm, das beispielsweise für einen jeweiligen Benutzerkreis individualisiert wurde, ausgeführt werden. Dazu stellt die Fachanlage dann beispielsweise basierend auf dem Indikator fest, welches Sonderprogramm ausgeführt werden soll.

Gemäß einer beispielhaften Ausführungsform des ersten Aspekts der Erfindung berechtigt ein Kennwort, für welches festgestellt wurde, dass es zum Zugang zur Fachanlage oder zu einem oder mehreren Fächern der Fachanlage berechtigt, nicht erneut oder zumindest nicht während eines vordefinierten Zeitintervalls nach dieser Feststellung erneut zum Zugang. Dazu wird beispielsweise jedes Kennwort, für welches festgestellt wurde, dass es zum Zugang zur Fachanlage oder zu einem oder mehreren Fächern der Fachanlage berechtigt, gespeichert. Wird dieses Kennwort dann erneut erhalten, beispielsweise mittels dritter Daten, berechtigt es nicht erneut zum Zugang. So kann z.B. verhindert werden, dass ein Angreifer, der beispielsweise eine Funk-Übertragung von dritten Daten, die ein Kennwort umfassen, abhört und/oder der eine Benutzereingabe eines Kennworts an einer Fachanlage mitliest das Kennwort anschließend verwenden kann, um Zugang zu erhalten.

Gemäß einer beispielhaften Ausführungsform des ersten und/oder zweiten Aspekts der Erfindung erfolgt das Übermitteln der dritten Daten an die Fachanlage oder das Bereitstellen der dritten Daten für die Fachanlage - und das entsprechende Erhalten oder Erfassen durch die Fachanlage - mittels einer oder mehrerer der Möglichkeiten a)-d): a) mittels einer Funkverbindung, insbesondere Bluetooth oder NFC; b) mittels eines die dritten Daten repräsentierenden optischen Musters, welches auf einem Bildschirm der mobilen Vorrichtung angezeigt wird zur Erfassung durch eine Erfassungseinheit der Fachanlage; c) mittels Anzeige der dritten Daten auf einem Bildschirm der mobilen Vorrichtung zur visuellen Erfassung durch eine Person, die die dritten Daten dann an einer Eingabeeinheit der Fachanlage, insbesondere einer Tastatur oder einem berührungsempfindlichen Bildschirm, eingibt; oder d) mittels einer akustischen Übermittlung, beispielsweise indem eine Vorrichtung oder Person die dritten Daten vorliest und die Fachanlage diese mittels Spracherkennung erfasst (aber auch eine andere akustische Übermittlung, beispielsweise durch akustische Morse-Zeichen oder andere Modulationsarten ist möglich). Durch diese Übermittlungsarten wird beispielsweise erreicht, dass eine Vorrichtung und/oder ein Benutzer sich in der Nähe der erfassenden oder erhaltenden Vorrichtung befindet und/oder dass die dritten Daten nur in einer vorbestimmten, z.B. maximalen, Geschwindigkeit übermittelt und/oder erhalten oder erfasst werden können, sodass sich die daraus resultierenden, bereits beschriebenen Vorteile ergeben.

Gemäß einer beispielhaften Ausführungsform des ersten und/oder zweiten Aspekts der Erfindung wird der in den dritten Daten enthaltene Indikator durch eine erste Gruppe von Bits repräsentiert, wird das in den dritten Daten enthaltene Kennwort durch eine zweite Gruppe von Bits repräsentiert, und sind in den dritten Daten die Bits der ersten Gruppe und die Bits der zweiten Gruppe nach einer vorbestimmten Regel gemischt. Der Indikator kann also beispielsweise durch eine beliebige Anzahl von Bits, beispielsweise 1 Bit, 2 Bits, 3 Bits, 10 Bits, 12 Bits oder mehr Bits repräsentiert werden. Dabei kann er beispielsweise auch durch scheinbar logisch getrennte Elemente repräsentiert werden, beispielsweise durch eine erste Teilgruppe von Bits und ein Flag. Gleichermaßen kann auch das Kennwort durch eine beliebige Anzahl von Bits repräsentiert werden, beispielsweise 10 Bits, 50 Bits, oder 100 Bits, und durch beispielsweise scheinbar logisch getrennte Elemente repräsentiert werden.

Der in den dritten Daten enthaltene Indikator ist beispielsweise nicht mit dem Schlüssel verschlüsselt, mit dem die Zugangsinformation verschlüsselt wurde, und kann deshalb beispielsweise von einer Vorrichtung, die die dritten Daten erfasst oder erhält, ausgewertet werden. Die Vorrichtung kann beispielsweise basierend auf dem Indikator eine Zugangsinformation bestimmen, um dann basierend auf dieser feststellen zu können, ob das Kennwort zum Zugang berechtigt. Da der Indikator somit aber zumindest indirekt Informationen enthalten kann, die einem potentiellen Angreifer möglicherweise hilfreich sein könnten, um Zugang zur Fachanlage zu erhalten, ist es vorteilhaft, dass ein potentieller Angreifer beispielsweise nicht unterscheiden kann, welche Bits in den dritten Daten Teil des Indikators und welche Bits Teil des Kennworts sind. Die den Indikator repräsentierenden Bits werden also beispielsweise zwischen den anderen Daten, insbesondere in dem durch Bits repräsentierten Kennwort, versteckt und/oder verschleiert Dies kann beispielsweise nach einer vorbestimmten Regel geschehen, beispielsweise stehen die den Indikator repräsentierenden Bits immer an den jeweiligen gleichen Stellen zwischen den Kennwort-Bits. Die den Indikator repräsentierenden Bits können aber auch an wechselnden Stellen positioniert werden, beispielsweise abhängig von der Uhrzeit und/oder einem Wert des Indikators und/oder einem Teil des Indikators. Indem die Regel vorbestimmt ist, kann beispielsweise die Vorrichtung, welche die dritten Daten übermittelt, die dritten Daten entsprechend präparieren und die Vorrichtung, die die dritten Daten erhält, kann die in den dritten Daten enthaltenen Bits basierend auf der Kenntnis der vorbestimmten Regel jeweils dem Indikator oder dem Kennwort zuordnen. Wenn die Regel einem Angreifer nicht bekannt ist, kann das z.B. einen potentiellen Angriff schwieriger machen, als wenn die den Indikator repräsentierenden Bits und die das Kennwort repräsentierenden Bits leicht zuordenbar wären.

Gemäß einer beispielhaften Ausführungsform des ersten und/oder zweiten Aspekts der Erfindung wird das Kennwort basierend zumindest auf einer Zugangsinformation und einem Zeitwert erzeugt Der Zeitwert kann beispielsweise ein aktueller Zeitwert der das Kennwort erzeugenden Vorrichtung sein. Der Zeitwert kann beispielsweise auch eine Zeit angeben, ab der, in der oder bis zu der das Kennwort gültig ist Grundsätzlich kann der Zeitwert beispielsweise ein gerundeter Zeitwert sein, beispielsweise auf 60 Sekunden. Das Kennwort kann darüber hinaus z.B. basierend auf weiteren Informationen erzeugt werden, beispielsweise einem weiteren Zeitwert.

Gemäß einer beispielhaften Ausführungsform des ersten und/oder zweiten Aspekts der Erfindung wird das Kennwort unter Verwendung einer Einwegfunktion, insbesondere einer Hash-Funktion, erzeugt, wobei zumindest ein Teil einer Zugangsinformation und zumindest ein Teil eines Zeitwerts als Eingabedaten für die Einwegfunktion verwendet werden. Beispielsweise erzeugt eine mobile Vorrichtung das Kennwort unter Verwendung einer Einwegfunktion, wobei es die Zugangsinformation und zumindest einen Teil eines aktuellen Zeitwertes, beispielsweise eines gerundeten, z.B. auf 60 Sekunden gerundeten, UNIX-Zeitwertes, verwendet. Das Erzeugen des Kennworts kann beispielsweise noch weitere Schritte umfassen, beispielsweise das Abschneiden des Einwegfunktionsergebnisses auf eine vorbestimmte Länge. Als Einwegfunktion kann beispielsweise eine kryptologische Hash-Funktion verwendet werden, beispielsweise SHA, SHA-2 oder MD5.

Das so erzeugte Kennwort wird dann beispielsweise an eine Fachanlage übermittelt oder für diese bereitgestellt Diese bestimmt basierend auf dem in den dritten Daten enthaltenen Indikator eine Zugangsinformation und erzeugt beispielsweise ein oder mehrere Kennwörter, beispielsweise jeweils ein Kennwort auf dem aktuellen gerundeten UNIX-Zeitwert, dem vorherigen gerundeten UNIX-Zeitwert und dem nächsten gerundeten UNIX-Zeitwert Zum Erzeugen eines jeweiligen Kennworts verwendet die Fachanlage beispielsweise eine Einwegfunktion, insbesondere eine Hash-Funktion, und führt auch sonst die gleichen Schritte durch wie die mobile Vorrichtung. Dann kann beispielsweise festgestellt werden, ob eines der von der Fachanlage erzeugten Kennwörter mit dem in den dritten Daten enthaltenen Kennwort übereinstimmt und deswegen zum Zugang berechtigt Indem beispielsweise zusätzlich ein früherer und/oder späterer Zeitwert verwendet werden, kann z.B. ausgeglichen werden, dass die aktuelle Zeit der mobilen Vorrichtung von der aktuellen Zeit der Fachanlage abweicht, beispielsweise weil eine der Vorrichtungen oder sogar beide nicht mit dem Internet und/oder einem Zeitserver verbunden sind und/oder längere Zeit nicht verbunden waren. Außerdem kann damit beispielsweise kompensiert werden, dass die Übermittlung/das Bereitstellen und/oder das Erhalten/Erfassen der dritten Daten so lange dauert, dass bereits der nächste UNIX-Zeitwert erreicht wird.

Gemäß einer beispielhaften Ausführungsform aller Aspekte der Erfindung wird die Zugangsinformation von der Fachanlage jeweils im Rahmen eines jeweiligen Einstellens, beispielsweise in Reaktion auf das jeweilige bevorstehende, stattfindende oder erfolgte Einstellen, zumindest einer Sendung in ein Fach der Fachanlage erzeugt Beispielsweise erzeugt die Fachanlage jedes Mal, wenn eine oder mehrere Sendungen in ein Fach eingestellt werden, eine jeweilige Zugangsinformation. Die jeweilige Zugangsinformation eines Fachs wird beispielsweise gelöscht und/oder berechtigt nicht mehr zum Zugang, wenn das jeweilige Fach keine Sendungen mehr enthält und/oder nach dem Einstellen zumindest einmal geöffnet wurde. Die Fachanlage kann beispielsweise detektieren, dass ein Zusteller eine Sendung in ein Fach einstellen wird, beispielsweise weil der Zusteller die Öffnung des Faches auslöst Die Fachanlage kann beispielsweise in Reaktion darauf die Zugangsinformation erzeugen. Alternativ kann die Fachanlage beispielsweise detektieren, dass eine Sendung in ein Fach eingestellt wurde, beispielsweise mittels Sensoren, z.B. Gewichtssensoren und/oder Infrarot-Sensoren, und in Reaktion darauf die Zugangsinformation erzeugen. Die Fachanlage kann die Zugangsinformation beispielsweise auch in Reaktion auf eine Eingabe vom Zusteller im Rahmen des Einstellens erzeugen. Dass die Zugangsinformation jeweils im Rahmen eines jeweiligen Einstellens, beispielsweise in Reaktion auf das jeweilige bevorstehende, stattfindende oder erfolgte Einstellen, zumindest einer Sendung in ein Fach der Fachanlage erzeugt wird, schließt dabei nicht aus, dass weitere Zugangsinformation zu anderen Zwecken erzeugt werden, beispielsweise um einem oder mehreren Benutzerkreisen mit jeweils vordefinierter Funktion den Zugang zur Fachanlage oder zu einem oder mehreren Fächern der Fachanlage zu ermöglichen.

Gemäß einer beispielhaften Ausführungsform aller Aspekte der Erfindung wird oder ist der Indikator zumindest derart mit der Zugangsinformation assoziiert, dass die Zugangsinformation einem Fach der Fachanlage eindeutig zugeordnet ist und der Indikator mit diesem Fach der Fachanlage assoziiert wird oder ist, wobei es sich bei dem Fach beispielsweise um ein Fach handelt, in welches eine Sendung eingestellt wurde. Beispielsweise ordnet die Fachanlage die Zugangsinformation im Rahmen ihres Erzeugens einem Fach der Fachanlage eindeutig zu. Darüber hinaus assoziiert die Fachanlage beispielsweise auch den Indikator mit diesem Fach, also ordnet den Indikator beispielsweise dem Fach zu. Somit handelt es sich bei Zugangsinformation und Indikator beispielsweise jeweils um eine fachspezifische Information. Indem die Fachanlage mittels der dritten Daten einen Indikator erhält, kann die Fachanlage dann die Zugangsinformation bestimmen, die zum Feststellen, ob das Kennwort zum Zugang zu zumindest diesem Fach berechtigt, benötigt wird. Darüber hinaus kann die Fachanlage dann beispielsweise feststellen, für welches Fach - insofern das Kennwort zum Zugang berechtigt - Zugang gewährt werden soll.

Gemäß einer beispielhaften Ausführungsform aller Aspekte der Erfindung ist der Schlüssel einer Benutzerkennung zugeordnet, wobei die Fachanlage beim Verschlüsseln der Zugangsinformation den dieser Benutzerkennung zugeordneten Schlüssel nur verwendet, wenn sie im Rahmen eines jeweiligen Einstellens einer Sendung in ein Fach der Fachanlage informiert wurde oder festgestellt hat, dass die Sendung mit dieser Benutzerkennung assoziiert ist, wobei die Sendung beispielsweise derart mit der Benutzerkennung assoziiert ist, dass es sich bei der Benutzerkennung um die Benutzerkennung eines Empfängers der Sendung handelt Somit kann beispielsweise erreicht werden, dass nur ein Empfänger den Schlüssel zum Entschlüsseln der Zugangsinformation hat und somit in der Lage ist das Kennwort zu erzeugen, welches zum Zugang zu dem Fach berechtigt Hat zum Beispiel das Smartphone eines Benutzers den Schlüssel erzeugt, beispielsweise im Rahmen einer Registrierung des Benutzers an der Fachanlage oder als Kunde gegenüber einem Server, und wurde der Schlüssel beispielsweise mit der Benutzerkennung verknüpft, kann das Smartphone des Benutzers eine von der Fachanlage mit dem Schlüssel verschlüsselte Zugangsinformation entschlüsseln, basierend zumindest auf der Zugangsinformation ein Kennwort erzeugen, dieses an die Fachanlage übermitteln oder für diese bereitstellen und somit Zugang zu zumindest dem Fach erhalten, in welches zumindest eine Sendung, die mit seiner Benutzerkennung assoziiert ist, eingestellt wurde.

Gemäß einer beispielhaften Ausführungsform aller Aspekte der Erfindung ist der Indikator ein Element aus einer ersten Menge, wobei die erste Menge mehr Elemente umfasst als eine zweite Menge, wobei jedes Element der zweiten Menge einem jeweiligen Fach der Fachanlage eineindeutig zugeordnet ist, und wobei jedes Element der zweiten Menge, in dessen eineindeutig zugeordnetem Fach sich eine Sendung befindet, einem Element der ersten Menge eineindeutig zugeordnet ist Die erste Menge kann dabei beispielsweise eine Menge von Bit-Kombinationen oder Bit-Folgen sein. Beispielsweise kann der Indikator eine vorbestimmte Länge haben, z.B. 10 Bits. Die erste Menge kann dann beispielsweise alle möglichen Werte beinhalten, die mit 10 Bits gebildet werden können, also beispielsweise 2¹⁰ = 1024 verschiedene Werte bzw. Elemente. Demgegenüber steht eine zweite Menge. Jedes Element der zweiten Menge ist beispielsweise einem physikalischen Fach, beispielsweise einem jeweiligen Fach der Fachanlage, eineindeutig zugeordnet ist Wenn beispielsweise 30 Fächer in der Fachanlage vorhanden sind, hat die zweite Menge also 30 Elemente. Die Elemente sind beispielsweise Zahlen oder Namen, wobei anhand ein Element beispielsweise ein jeweiliges Fach identifiziert werden kann. Zum Beispiel im Rahmen eines Einstellens einer Sendung in ein Fach, beispielhaft dem Fach, welchem das Element "17" aus der zweiten Menge eineindeutig zugeordnet ist, wird ein Elemente der ersten Menge, beispielsweise das Element 1000110101, dem Element "17" eineindeutig zugeordnet Im Rahmen eines erneuten Öffnens des Fachs und/oder eines Entnehmens einer Sendung aus dem Fach kann diese Zuordnung beispielsweise wieder aufgehoben werden. Das ehemals zugeordnete Element, hier beispielhaft 1000110101, ist dann beispielsweise keinem Fach zugeordnet Wird beispielhaft erneut eine Sendung in das Fach, welchem das Element "17" aus der zweiten Menge eineindeutig zugeordnet ist, eingestellt, kann beispielhaft ein anderes Element aus der ersten Menge, beispielsweise 0010101101, dem Element "17" zugeordnet werden. Das vorher genutzte Element 1000110101 aus der ersten Menge kann dann beispielsweise zu einem späteren Zeitpunkt einem anderen Element aus der zweiten Menge eineindeutig zugeordnet werden.

Die Auswahl des Elements der ersten Menge, welches einem Element der zweiten Menge zugeordnet wird, kann beispielsweise zufällig und/oder nach einer vorbestimmten Regel erfolgen. Beispielsweise kann es eine weitere Menge - hier genannt Auswahlmenge - geben, die nur Elemente der ersten Menge enthält, welche nicht bereits einem Element der zweiten Menge zugeordnet sind. Aus dieser Auswahlmenge kann dann beispielsweise immer als nächstes das Element einem Element der zweiten Menge zugewiesen werden, welches am längsten Element der Auswahlmenge war. Beispielsweise wird ein Element der ersten Menge immer dann zur Auswahlmenge hinzugefügt, wenn die Zuordnung des Elements zu einem Element der zweiten Menge gelöst wird. Andersherum wird beispielweise ein Element der ersten Menge der Auswahlmenge immer dann entnommen, wenn das Element einem Element der zweiten Menge zugeordnet wird.

Die Auswahlmenge kann auch beispielsweise in Form einer Liste vorliegen und es kann beispielsweise ein Element, d.h. ein Listeneintrag, welches sich an einer vorbestimmten Listenposition befindet, gewählt werden, um als nächstes zugeordnet zu werden. Dies kann beispielsweise der erste oder letzte Listeneintrag sein. Gleichermaßen kann auch das Hinzufügen eines Elements immer am Anfang oder am Ende der Liste erfolgen.

Das beschriebene Zuordnungsprinzip ist in mehrfacher Hinsicht vorteilhaft. So ist beispielsweise vorab bekannt, wie viele Bits für den Indikator reserviert werden müssen, beispielsweise zum Speichern und/oder Übertragen und/oder Erfassen und/oder Erhalten und/oder Verarbeiten. Darüber hinaus ist dies beispielsweise unabhängig davon, wie viele Fächer die Fachanlage hat, solange die Fachanlage weniger Fächer als die erste Menge Elemente hat Beispielsweise kann die Länge des Indikators so bestimmt werden, dass dies für alle Fachanlagen, beispielsweise eines Typs oder eines Betreibers, der Fall ist Weiterhin erhöht dieses Vorgehen die Sicherheit der Fachanlage gegen einen unbefugten Zugriff, insbesondere gegen Angriffe, die auf den Zugang zu einem speziellen ausgewählten Fach abzielen, beispielsweise einem besonders großen Fach oder einem Fach, bei dem ein potentieller Angreifer beobachtet hat, welche Sendung dort eingestellt wurde. Denn ein Fach wird beispielsweise bei jedem Einstellen einer Sendung in dieses Fach mit einem neuen Indikatorwert assoziiert. Somit ist beispielsweise keinem Gerät und/oder keiner Person außerhalb der die Zuordnung durchführenden Fachanlage bekannt, welcher Indikator mit welchem Fach assoziiert ist Des Weiteren trägt dieses Vorgehen zur Sicherheit der Fachanlage bei, indem beispielsweise nicht alle Indikatorwerte überhaupt einem Element der zweiten Menge und somit einem Fach zugeordnet sind. Dies senkt z.B. die Wahrscheinlichkeit, dass ein potentieller Angreifer überhaupt dazu kommt, dass von ihm beispielsweise testweise in Daten übermittelte Kennwörter durch die Fachanlage geprüft werden. Denn die Fachanlage führt beispielsweise den Schritt des Feststellens, ob das Kennwort zum Zugang zur Fachanlage oder zu einem oder mehreren Fächern der Fachanlage berechtigt, überhaupt nicht aus, wenn sie basierend zumindest auf dem in den dritten Daten enthaltenen Indikator keine Zugangsinformation bestimmen konnte, beispielsweise weil der von dem Angreifer gewählte Indikator mit keinem Fach und somit auch mit keiner Zugangsinformation assoziiert ist. Dabei ist besonders effizient, dass diese Vorteile schon erreicht werden können, wenn der Indikator ohnehin eine vorbestimmte Länge hat oder haben muss (bespielhaft 10 Bits), weil eine Fachanlage eine vorbestimmte Anzahl Fächer hat (beispielhaft 513 Fächer). Anstatt von den 1024 verfügbaren Indikatorwerten dann nur 513 zu nutzen und 511 ungenutzt zu lassen, wird durch das beschrieben Vorgehen der Zuordnung ein zusätzlicher Sicherheitseffekt erreicht, ohne dass zusätzliche Bits übertragen werden müssen.

Das beschrieben Zuordnungsprinzip kann auch losgelöst von anderen Merkmalen eines oder aller Aspekte der Erfindung verstanden werden und ist in diesem Sinne auch als selbstständig offenbart zu verstehen. Insbesondere werden auch die beschriebenen technischen Vorteile bereits erreicht, ohne dass die Merkmale eines oder aller Aspekte der Erfindung dafür benötigt werden. Darüber hinaus soll das beschriebene Zuordnungsprinzip auch in allgemeinerer Weise als offenbart verstanden werden, also insbesondere nicht nur bezogen auf Fächer einer Fachanlage, sondern auf eine beliebige Vielzahl von Objekten, die eine Zustandsänderung erfahren können (beispielsweise ein Fach durch Einstellen einer Sendung) und die abhängig von ihrem Zustand mit einem Indikator assoziiert sein sollen oder nicht.

Gemäß einer beispielhaften Ausführungsform aller Aspekte der Erfindung, welche Merkmale der beiden zuletzt beschriebenen Ausführungsformen, die für diese Ausführungsform benötigt werden, umfasst, stammt die Benutzerkennung aus einer dritten Menge, welche mehr Elemente umfasst als die erste Menge. Insbesondere stammt die Benutzerkennung beispielsweise aus einer Menge von Zahlen mit einer Länge von 6-12 Dezimalstellen. Eine Fachanlage kann die Benutzerkennung aber beispielsweise basierend auf dem Indikator, der aus der ersten Menge stammt, bestimmen, beispielsweise weil sich in einem Fach der Fachanlage, mit dem der Indikator assoziiert ist, eine Sendung befindet, welche mit der Benutzerkennung assoziiert ist. Die Übermittlung und/oder das Bereitstellen und/oder das Erhalten und/oder das Erfassen eines Indikators ist somit beispielsweise effizienter als die Übermittlung und/oder das Bereitstellen und/oder das Erhalten und/oder das Erfassen einer Benutzerkennung. Darüber hinaus ist die Übermittlung und/oder das Bereitstellen und/oder das Erhalten und/oder das Erfassen eines Indikators beispielsweise sicherer als die Übermittlung und/oder das Bereitstellen und/oder das Erhalten und/oder das Erfassen der Benutzerkennung, weil die Benutzerkennung einem Benutzer beispielsweise statisch zugeordnet ist und somit ausgespäht und zu einem späteren Zeitpunkt wiederverwendet werden kann. Dahingegen wird ein Indikator beispielsweise regelmäßig und/oder häufig neu zugeordnet, sodass sich aus der Kenntnis des Indikators keine dauerhaften Vorteile für einen potentiellen Angreifer gewinnen lassen.

Gemäß einer beispielhaften Ausführungsform aller Aspekte der Erfindung ist der Schlüssel ein öffentlicher Schlüssel eines asymmetrischen Schlüsselpaares. Beispielsweise erzeugt die das Verfahren gemäß dem zweiten Aspekt der Erfindung ausführende Vorrichtung zusätzlich auch den zugehörigen privaten Schlüssel des asymmetrischen Schlüsselpaares. Die Vorrichtung erhält dann beispielsweise in den zweiten Daten die mit dem öffentlichen Schlüssel verschlüsselte Zugangsinformation und entschlüsselt die mit dem öffentlichen Schlüssel verschlüsselte Zugangsinformation unter Verwendung des privaten Schlüssels. Beispielsweise verlässt dann nur der öffentliche Schlüssel die Vorrichtung, die die Schlüssel erzeugt hat Dies ist beispielsweise besonders sicher.

Die oben beschriebenen Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den Flussdiagrammen gibt nicht notwendigerweise die tatsächliche (zeitliche) Reihenfolge der Schritte vor und ist lediglich beispielhaft Nichtsdestotrotz können die Schritte zeitlich in genau der Abfolge auftreten/durchgeführt werden, wie sie in den Flussdiagrammen dargestellt sind. Darüber hinaus können, müssen sie aber nicht in Reaktion aufeinander durchgeführt werden.

Es zeigen:
- Fig. 1: eine schematische Darstellung einer beispielhaften Ausführungsform eines Systems gemäß der vorliegenden Erfindung, beispielhaft umfassend eine Fachanlage, ein Mobilgerät und ein Backend-System;
- Fig. 2: ein Flussdiagramm einer beispielhaften Ausführungsform eines Verfahrens gemäß dem ersten Aspekt der vorliegenden Erfindung, beispielsweise ausgeführt und/oder gesteuert von einer Fachanlage;
- Fig. 3: ein Flussdiagramm einer beispielhaften Ausführungsform eines Verfahrens gemäß dem zweiten Aspekt der vorliegenden Erfindung, beispielsweise ausgeführt und/oder gesteuert von einer mobilen Vorrichtung;
- Fig. 4: ein Flussdiagramm einer beispielhaften Ausführungsform eines Verfahrens gemäß dem dritten Aspekt der vorliegenden Erfindung, beispielsweise ausgeführt und/oder gesteuert von einem Backend-System und/oder Server;
- Fig. 5: eine schematische Darstellung einer beispielhaften Ausführungsform einer Vorrichtung gemäß dem ersten Aspekt der Erfindung, beispielsweise einer Fachanlage;
- Fig. 6: eine schematische Darstellung einer beispielhaften Ausführungsform einer Vorrichtung gemäß dem zweiten Aspekt der Erfindung, beispielsweise einer mobilen Vorrichtung;
- Fig. 7: eine schematische Darstellung einer beispielhaften Ausführungsform einer Vorrichtung gemäß dem dritten Aspekt der Erfindung, beispielsweise einem Server;
- Fig. 8: eine schematische Darstellung beispielhafter Datenübertragungen zwischen Vorrichtungen, insbesondere zwischen einer beispielhaften mobilen Vorrichtung, einem beispielhaften Server und einer beispielhaften Fachanlage, die jeweils beispielhafte Ausführungsformen von Verfahren gemäß einem jeweiligen Aspekt der Erfindung ausführen;
- Fig. 9: eine schematische Darstellung einer beispielhaften Zuordnung von Indikatoren, beispielsweise verwaltet von einer Fachanlage, gemäß einer beispielhaften Ausführungsform eines Verfahrens gemäß allen Aspekten der Erfindung.

### Detaillierte Beschreibung einiger beispielhafter Ausführungsformen der Erfindung

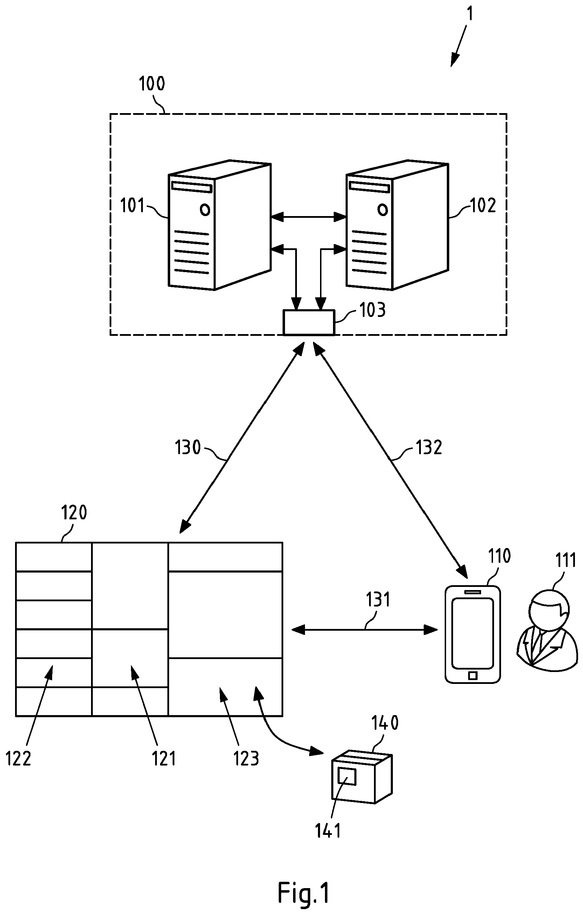

Fig. 1 zeigt eine schematische Darstellung einer beispielhaften Ausführungsform eines Systems gemäß der vorliegenden Erfindung.

Das System 1 umfasst eine Fachanlage 120 mit einer Mehrzahl von Fächern, von denen beispielhaft drei Fächer in Fig. 1 mit Bezugszeichen 121, 122, 123 versehen sind. Jedes der Fächer der Fachanlage 120 ist zur Aufnahme einer oder mehrerer Sendungen 140 für einen jeweiligen individuellen Benutzer 111 vorgesehen. Einem individuellen Benutzer 111 können auch mehrere Fächer zugeordnet sein. Jedes Fach ist im Grundzustand verriegelt bzw. geschlossen und kann anweisungsgesteuert und individuell durch beispielsweise eine in der Fachanlage 120 vorgesehene Schlosssteuereinheit elektrisch entriegelt bzw. geöffnet werden. Ein Beispiel einer derartigen Fachanlage 120 ist eine Fachanlage 120 gemäß dem bekannten Packstation-Konzept der Anmelderin.

Die Fachanlage 120 ist mit einer oder mehreren Kommunikationsschnittstelle(n) ausgerüstet, die beispielsweise eine Schnittstelle zur drahtlosen Kommunikation mit Mobilgerät 110 umfasst/umfassen. Die drahtlose Kommunikationsverbindung 131 basiert beispielsweise auf optischer Übertragung und/oder mittels Kommunikation, die auf elektrischen, magnetischen oder elektromagnetischen Signalen oder Feldern beruht, insbesondere Nahbereichs-Kommunikation z.B. beruhend auf Bluetooth, WLAN, ZigBee, NFC und/oder RFID.

In anderen Ausführungsformen umfasst die Fachanlage 120 aber beispielsweise keine Schnittstelle zur drahtlosen Kommunikation mit einem Mobilgerät 110 oder eine solche Schnittstelle ist, beispielsweise grundsätzlich oder nur in bestimmten Situationen, nicht nutzbar oder wird nicht genutzt, obwohl sie grundsätzlich nutzbar wäre. Beispielsweise kann dann eine Kommunikation von Daten, die auf dem Mobilgerät 110 vorhanden sind (wo sie beispielsweise zuvor entschlüsselt wurden, nachdem sie dorthin übertragen worden waren, z.B. von einem System 100) und beispielsweise angezeigt werden, mittels eines Benutzers 111 erfolgen, der diese Daten oder einen Teil dieser Daten beispielsweise über eine Eingabeeinheit oder Benutzerschnittstelle (z.B. eine Tastatur oder einen berührungsempfindlichen Bildschirm mit Bildschirmtastatur oder ein Spracherkennungsmodul) an der Fachanlage 120 eingibt und somit übermittelt Indem es sich bei den so übermittelten Daten beispielsweise um eine kurze Information handelt, sodass der Benutzer beispielsweise nur wenig eingeben bzw. vom Mobilgerät 110 übermitteln muss, kann beispielsweise eine kurze Übermittlungszeit erreicht werden. Dies kann beispielsweise besonders vorteilhaft sein, wenn die Übermittlung innerhalb einer vorbestimmten, z.B. kurzen, Zeit erfolgen muss, beispielsweise um ein besonders hohes Sicherheitsniveau zu erreichen, z.B. weil Daten zur Autorisierung nur eine begrenzte zeitliche Gültigkeit besitzen. Selbstverständlich kann ein Benutzer 111 beispielsweise auch Daten eingeben, die nicht auf dem Mobilgerät 110 vorhanden sind und/oder dort angezeigt werden. Darüber hinaus kann eine Fachanlage 120 beispielhaft auch eine Ausgabeeinheit umfassen, z.B. zum Anzeigen von Informationen, z.B. über einen Bildschirm.

Die Fachanlage 120 ist beispielsweise auch zur Kommunikation mit dem System 100 eingerichtet, verfügt also beispielsweise über eine Kommunikationsschnittstelle, die einen Zugang zum Internet oder zu einem anderen Netz, an das das System 100 angeschlossen ist, ermöglicht Die Fachanlage ist also insbesondere zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels der sie über die Kommunikationsverbindung 130 mit dem System 100 kommunizieren kann. In anderen Ausführungsformen ist die Fachanlage 120 aber beispielsweise nicht dazu eingerichtet direkt mit dem System 100 zu kommunizieren. Sie macht dann beispielsweise Gebrauch von einem zur Weiterleitung von Daten eingerichteten Gerät, um mit dem System 100 und/oder einzelnen Vorrichtungen 101, 102 des Systems 100 zu kommunizieren. Das zur Weiterleitung eingerichtete Gerät kann beispielsweise Daten über eine Fern-Kommunikationsschnittstelle mit dem System 100 und Daten über eine Nahbereichs-Kommunikationsschnittstelle mit der Fachanlage 120 austauschen und so Daten vom System 100 an die Fachanlage 120 und andersherum weiterleiten.

Das System 100 stellt beispielhaft ein Backend-System umfassend zwei Server 101, 102 dar. Dabei können die Server 101, 102 beispielsweise miteinander kommunizieren. Insbesondere erfüllt jeder der Server 101, 102 dabei beispielsweise unterschiedliche Aufgaben. So verwaltet beispielsweise Server 101 ein oder mehrere Fachanlagen 120, z.B. jeweilige Standorte und Zustandsdaten, und Server 102 verwaltet beispielsweise registrierte Benutzer 111 von Fachanlagen 120 und z.B. deren Geräte 110. Das System 100 kann in anderen Ausführungsformen aber auch nur ein Server 101, 102 sein und/oder mehr als zwei Server 101, 102 umfassen, die beispielsweise auch unterschiedliche physikalische Einheiten sein können. Dabei kann die Aufgabenverteilung zwischen den Servern 101, 102 beliebig zusammengelegt oder aufgeteilt werden. Das System 100 und/oder ein oder mehrere Server 101, 102 des Systems können beispielsweise über eine oder eine jeweilige Kommunikationsverbindung 132, z.B. eine Internetverbindung, mittels einer oder einer jeweiligen Kommunikationsschnittstelle 103 mit dem Gerät 110 eines Benutzers 111 und/oder der Fachanlage 120 kommunizieren.

In der im Folgenden beschriebenen Ausführungsform handelt es sich bei dem Gerät 110 um ein Smartphone 110 einer Person 111, in anderen Ausführungsformen kann es sich dabei aber um eine beliebige andere mobile Vorrichtung handeln. Vorliegend kann die Person 111 das Smartphone 110 beispielsweise nutzen, um sich als Benutzer 111, insbesondere als Empfänger 111 von Sendungen 140, für die Fachanlage 120 oder für eine Vielzahl von Fachanlagen und/oder anderen Leistungen eines Betreibers eines oder mehrerer Fachanlagen zu registrieren. Dabei können unter Benutzern generell beispielsweise Personen verstanden werden, die die Fachanlage 120 zum Empfangen und/oder Versenden von Sendungen (z.B. Pakete, Briefe, Speisen, Lebensmittel, etc.) verwenden/verwenden wollen, sowie Zusteller, die derartige Sendungen in die Fachanlage 120 zustellen bzw. aus der Fachanlage 120 abholen/abholen wollen. Ein Benutzer 111 kann ein Mensch oder eine Maschine sein, z.B. ein Fahrzeug, ein Roboter oder eine Drohne, um nur ein paar Beispiele zu nennen. Die Registrierung eines Benutzers 111, insbesondere Empfängers 111 von Sendungen 140, erfolgt im vorliegenden Ausführungsbeispiel beispielhaft mittels einer App oder interaktiven Webseite auf dem Smartphone 110. Beispielsweise im Rahmen dieser Registrierung erhält die Person 111 eine Benutzerkennung, beispielsweise indem diese ihr zugewiesen wird oder sie sich diese aussucht In der vorliegenden Ausführungsform erzeugt das Smartphone 110 im Zuge dieser Registrierung auch einen Schlüssel, vorliegend beispielhaft einen öffentlichen Schlüssel eines asymmetrischen Schlüsselpaares und den zugehörigen privaten Schlüssel des asymmetrischen Schlüsselpaares. In anderen Ausführungsformen kann diese Erzeugung aber auch in anderem Zusammenhang stattfinden und eine andere Art Schlüssel umfassen, z.B. einen symmetrischen Schlüssel, der auch beispielsweise nur erhalten und nicht auf dem Smartphone 110 erzeugt wird.

Den Schlüssel übermittelt das Smartphone 110 dann beispielsweise an das System 100. Dabei kann der erzeugte Schlüssel - im vorliegenden Ausführungsbeispiel der öffentliche Schlüssel - mit der Benutzerkennung des Benutzers 111 assoziiert werden, z.B. durch das Smartphone 110 oder das System 100. Das System 100 ist dann beispielsweise dazu eingerichtet, nicht nur den Schlüssel an eine Fachanlage 120 zu übermitteln, sondern auch die mit ihm assoziierte Benutzerkennung. Die Übermittlung kann beispielsweise umgehend geschehen, nachdem das System 100 den Schlüssel erhalten hat Dann wird der Schlüssel beispielsweise sogleich an eine Vielzahl von Fachanlagen 120 übermittelt, z.B. an alle Fachanlagen eines bestimmten Betreibers oder alle Fachanlagen in einem bestimmten Gebiet, z.B. ein Bereich um den Wohnort des Benutzers 111. Alternativ kann das System 100 den Schlüssel aber auch speichern und beispielsweise nur an eine Fachanlage 120 übermitteln, wenn dort z.B. eine Sendung 140 für den Benutzer 111 eingestellt wird, wurde oder werden soll.

Das Einstellen einer Sendung 140 kann beispielsweise durch einen Zusteller, z.B. einen menschlichen oder maschinellen, erfolgen. Dazu authentisiert sich dieser beispielsweise gegenüber der Fachanlage 120 und scannt beispielsweise das Etikett 141 oder andere Sendungsinformationen der Sendung 140 mit seinem Zustellergerät, welches beispielsweise die erfassten Informationen an die Fachanlage 120 übermitteln kann, und/oder hält das Etikett 141 der Sendung 140 vor einen Scanner der Fachanlage 120, sodass diese das Etikett 141 scannen und die Sendungsinformationen der Sendung 140 somit erfassen kann. Daraufhin wird beispielsweise ein Fach 123 der Fachanlage geöffnet, in das die Sendung 140 eingestellt werden kann. Sobald die Sendung 140 eingestellt ist, wird das Fach 123 beispielsweise wieder geschlossen. Die Fachanlage 120 erzeugt dann beispielsweise eine Zugangsinformation für dieses Fach 123, beispielsweise basierend zumindest auf einem Zufalls- oder Pseudozufallswert, und speichert diese. Beispielhaft wird hier angenommen, dass für das Fach 123 die Zugangsinformation 0x82C73 erzeugt wurde.

Beispielsweise im Rahmen des Einstellens, z.B. durch das Scannen des Etiketts 141, erhält die Fachanlage 120 Informationen über die eingestellte oder einzustellende Sendung 140. Insbesondere erhält oder erfasst die Fachanlage 120 beispielsweise auch eine Benutzerkennung, die mit der Sendung 140 assoziiert ist, z.B. die Benutzerkennung des Empfängers 111 der Sendung 140. Anhand dieser Benutzerkennung kann sie beispielsweise die Übermittlung des mit der Benutzerkennung verknüpften Schlüssels an sich beim System 100 anfragen. Hat die Fachanlage 120 diesen dann erhalten (oder hatte sie diesen ohnehin schon zuvor erhalten und musste gar keine Anfrage stellen, sondern nur auf den internen Speicher zugreifen), kann sie den mit dieser Benutzerkennung assoziierten Schlüssel verwenden, um die zuvor erzeugte Zugangsinformation für das Fach 123, in dem sich die Sendung 140 für diesen Benutzer 111 befindet, zu verschlüsseln. Dabei wird im vorliegenden Ausführungsbeispiel davon ausgegangen, dass nur ein Schlüssel mit der Benutzerkennung assoziiert ist. In anderen Ausführungsformen können aber durchaus mehrere Schlüssel derselben Benutzerkennung zugeordnet sein, beispielsweise ein Schlüssel pro Gerät, wobei ein Benutzer 111 mehrere Geräte 110 haben/registrieren kann.

Beispielhaft wird im vorliegenden Ausführungsbeispiel außerdem vom Zusteller eine weitere Sendung für den gleichen Empfänger 111 in das Fach 121 und eine andere Sendung für einen anderen Empfänger in das Fach 122 eingestellt Das Verfahren, das zum Einstellen durchlaufen wird, ist dabei beispielhaft jeweils dasselbe, welches für die Sendung 140 und Fach 123 beschrieben wurde bzw. wird. In anderen Ausführungsformen kann aber auch nur eine Sendung 140 für einen Empfänger 111 eingestellt werden und beispielsweise keine weitere Sendung in das gleiche und/oder ein anderes Fach. In anderen Ausführungsformen können auch nur ein oder mehrere Sendungen 140 für einen Empfänger 111 und z.B. keine Sendungen für andere Empfänger eingestellt werden. Auch das Verfahren, welches zum Einstellen durchlaufen wird, kann zwischen Ausführungsformen oder in einer Ausführungsform variieren.

Da die Fachanlage 120 eine Vielzahl von Fächern 121, 122, 123 haben kann und diese eine Vielzahl von Sendungen für eine Vielzahl von Empfängern beinhalten können, ist es vorteilhaft, wenn die Fachanlage 120, z.B. bei einer Authentisierungsanfrage eines Benutzers 111, feststellen kann, zu welchem Fach 121, 122, 123 bzw. zu welcher Sendung 140 ein Benutzer 111 Zugriff begehrt und was die zugehörige Zugangsinformation ist, basierend auf welcher eine Information erstellt werden kann, die zum Zugang berechtigt. Dazu kann die Fachanlage 120 beispielsweise einen Indikator mit der Zugangsinformation assoziieren. Zum Beispiel wählt die Fachanlage 120 als Indikator die Fachnummer 123 des Fachs 123, in das die Sendung 140 eingestellt wurde, und speichert diesen verknüpft mit der Zugangsinformation, z.B. als Datenstruktur oder als Teil einer Datenstruktur. So kann die Fachanlage 120 bei einer Authentisierungsanfrage zu einem späteren Zeitpunkt beispielsweise basierend auf dem Indikator und den von ihr gespeicherten Daten feststellen, auf welches Fach 123 sich die Anfrage bezieht und welche Zugangsinformation für dieses Fach 123 maßgeblich ist In dem vorliegenden Ausführungsbeispiel wurde einfach eine Fachnummer als Indikator gewählt, in anderen Ausführungsbeispielen kann die Wahl und das Assoziieren des Indikators aber gänzlich anders erfolgen, soweit es der Fachanlage 120 noch möglich ist, zumindest basierend auf dem Indikator und möglicherweise weiteren Informationen die zugehörige Zugangsinformation zu ermitteln.

Die Fachanlage 120 kann anschließend erste Daten an das System 100 ausgeben, beispielsweise über die Kommunikationsverbindung 130 oder auch über ein zur Weiterleitung von Daten eingerichtetes Gerät, z.B. das Gerät des Zustellers, der die Sendung 140 eingestellt hat und noch eine Nahbereichs-Funkkommunikationsverbindung zur Fachanlage 120 hat. Die ersten Daten können die mit dem Schlüssel verschlüsselte Zugangsinformation und den Indikator und möglicherweise weitere Daten oder Informationen, z.B. eine Sendungskennung der Sendung 140 und/oder eine Benutzerkennung, beispielsweise eines Empfängers 111, umfassen. Dabei kann der Indikator beispielsweise ebenfalls mit dem Schlüssel verschlüsselt sein. Das System 100 kann dann beispielsweise weder die mit dem Schlüssel verschlüsselte Zugangsinformation noch den mit dem Schlüssel verschlüsselten Indikator entschlüsseln. Dahingegen verfügt das System 100 beispielsweise schon über die Sendungskennung und/oder die Benutzerkennung im Klartext. Basierend auf der Sendungskennung und/oder der Benutzerkennung kann das System 100 dann beispielsweise den Benutzer 111 und/oder dessen Smartphone 110 identifizieren und zweite Daten an das Smartphone 110 ausgeben bzw. übermitteln. Dabei umfassen die zweiten Daten zumindest die mit dem Schlüssel verschlüsselte Zugangsinformation und den möglicherweise mit dem Schlüssel verschlüsselten Indikator. Darüber hinaus können die zweiten Daten in manchen Ausführungsformen aber noch weitere Informationen enthalten, z.B. die Kennung der Fachanlage 120, in welche die Sendung 140 eingestellt wurde. Das Smartphone 110 kann dem Benutzer 111 dann beispielsweise in einer App anzeigen, dass eine Sendung 140 für ihn in der Fachanlage 120 zur Abholung bereit liegt Der Benutzer 111 hat dann beispielsweise die Möglichkeit die Sendung 140 innerhalb einer vorbestimmten Zeitspanne, z.B. 9 Tage, aus der Fachanlage 120 abzuholen.

Das Smartphone 110 verfügt im vorliegenden Ausführungsbeispiel sowohl über den öffentlichen Schlüssel mit dem zumindest die in den zweiten Daten enthaltene Zugangsinformation verschlüsselt wurde, als auch über den zugehörigen privaten Schlüssel. Es ist somit in der Lage die in den zweiten Daten enthaltene Zugangsinformation und, falls der in den zweiten Daten enthaltene Indikator ebenfalls mit dem öffentlichen Schlüssel verschlüsselt wurde, auch diesen mit dem privaten Schlüssel zu entschlüsseln.

Zumindest basierend auf der Zugangsinformation kann das Smartphone 110 dann ein Kennwort erzeugen. Die Erzeugung kann beispielsweise in Reaktion auf eine Benutzereingabe erfolgen. So kann sich beispielsweise der Benutzer 111 der Fachanlage 120 nähern, um die für ihn bestimmte Sendung 140 abzuholen. Er kann dann, um sich gegenüber der Fachanlage 120 zu authentisieren, eine App auf seinem Smartphone 110 öffnen oder derart bedienen, dass diese ein Kennwort erzeugt. In anderen Ausführungsformen kann die Kennworterzeugung aber beispielsweise auch automatisch ausgelöst werden, z.B. indem das Smartphone 110 erkennt, dass es sich in der Nähe der Fachanlage 120 befindet, z.B. weil es Bluetooths-Beacons von der Fachanlage 120 erhält Dabei kann das generelle Verfahren zum Erzeugen eines Kennworts basierend zumindest auf einer Zugangsinformation durchaus bekannt sein und muss nicht geheim gehalten werden, um die Sicherheit des Verfahrens zu gewährleisten. Da nur das Smartphone 110 über den privaten Schlüssel verfügt, ist praktisch keine andere Vorrichtung in der Lage die mit dem ersten Schlüssel verschlüsselte Zugangsinformation zu entschlüsseln und basierend zumindest darauf ein entsprechendes Kennwort zu erzeugen. Im vorliegenden Ausführungsbeispiel wird das Kennwort unter Verwendung einer Einwegfunktion, insbesondere einer Hash-Funktion, erzeugt, wobei zumindest ein Teil der Zugangsinformation und zumindest ein Teil eines Zeitwerts als Eingabedaten für die Einwegfunktion verwendet werden. Insbesondere wird als Zeitwert beispielhaft ein auf 60 Sekunden gerundeter UNIX-Zeitwert, der die aktuelle Uhrzeit des Smartphones 110 in Temps universel coordonné (UTC) repräsentiert, zur Erzeugung des Kennworts verwendet. Das Kennwort kann dann beispielsweise automatisch alle 60 Sekunden erneut erzeugt werden, wenn ein neuer gerundeter Zeitwert vorliegt. Die genaue Zeit kann in anderen Ausführungsformen abweichend von den 60 Sekunden festgelegt werden, beispielsweise auf 30 oder 90 Sekunden, beispielsweise als Konfigurationsparameter, der flexibel angepasst werden kann, z.B. basierend auf Praxiserfahrungen. Insgesamt kann die Erzeugung und Prüfung des Kennworts beispielsweise gemäß einem Standard durchgeführt werden, beispielsweise dem Oath-Standard.

Das Smartphone 110 kann nach der Erzeugung des Kennworts beispielsweise dritte Daten, die zumindest das Kennwort und den Indikator umfassen, als Barcode oder QR-Code auf seinem Bildschirm anzeigen und die dritten Daten somit für die Fachanlage 120 bereitstellen. Der Benutzer 111 kann das Smartphone 110 dann beispielsweise so vor eine Erfassungseinheit, z.B. einen Scanner, der Fachanlage 120 halten, dass diese den Bar- oder QR-Code erfassen kann. In anderen Ausführungsformen kann das Smartphone 110 die dritten Daten über eine Nahbereichs-Funkkommunikationsverbindung, z.B. Bluetooth, an die Fachanlage 120 übermitteln und/oder die dritten Daten z.B. als (hexa-)dezimale Werte anzeigen, sodass der Benutzer 111 sie an einer Eingabeeinheit, z.B. einem berührungsempfindlichen Bildschirm, der Fachanlage 120 eingeben kann.

Der Indikator hat vorliegend beispielhaft den dezimalen Wert 123, welcher beispielsweise als 01111011 in Bits repräsentiert werden kann. Eine hexadezimale Repräsentation ist z.B. 0x7B. Das Kennwort kann z.B. ebenfalls in Bits dargestellt werden. Beispielhaft wird hier angenommen, dass das Ergebnis der Einwegfunktion, deren Eingabedaten ein gerundeter Zeitwert und die Zugangsinformation 0x82C73 für das Fach 123 waren, nach 4 Stellen abgeschnitten wurde, sodass vorliegend beispielhaft das (beispielhaft sehr kurze) Kennwort 9582 mit 4 Dezimalziffern verwendet wird. Dieses lautet in binärer Repräsentation z.B. 0010010101101110 und in hexadezimaler Repräsentation z.B. 0x256E. Die dritten Daten können dann beispielsweise die hexadezimale Folge 0x2756BE umfassen, d.h. die ersten 4 Bits (0x2) sind Kennwortbits, die folgenden 4 Bits (0x7) sind Indikatorbits, die folgenden 8 Bits (0x56) sind Kennwortbits, die folgenden 4 Bits (0xB) sind Indikatorbits und die letzten 4 Bits (0xE) sind Kennwortbits. Die Kennwort- und Indikatorbits werden in dritten Daten beispielsweise von dem Smartphone 110 und allen anderen Geräten, die sich gegenüber der Fachanlage 120 authentisieren möchten, z.B. immer nach dieser Regel gemischt Die Fachanlage 120 kennt diese Regel beispielsweise und kann den Wert 0x2756BE leicht wieder in die Werte 0x7B für den Indikator und 0x256E für das Kennwort aufteilen. Die Regel kann aber beispielsweise einem Angreifer, der unbefugt Zugriff zur Fachanlage erlangen möchte und der die dritten Daten in der Form 0x2756BE ausspäht/abhört, nicht bekannt sein, sodass er nicht erkennen kann, welche Bits Indikator- und welche Kennwortbits sind. In anderen Ausführungsformen kann die Regel auch variieren, beispielsweise abhängig von der Uhrzeit, einer Vorgabe vom System 100 oder anderen Faktoren, z.B. dem ersten Bit des Kennworts.

Basierend zumindest auf dem in den dritten Daten enthaltenen Indikator kann die Fachanlage 120 nach Erhalt der dritten Daten eine Zugangsinformation bestimmen. Wenn der Indikator den Wert 123 hat, ist dies also die mit diesem Indikator assoziierte Zugangsinformation 0x82C73. Im vorliegenden Ausführungsbeispiel erzeugt die Fachanlage 120 daraufhin drei Kennwörter unter Nutzung derselben Verfahrensschritte, die das Smartphone 110 verwendet hat, um das Kennwort zu erzeugen. Die Fachanlage 120 erzeugt dann ein Kennwort basierend auf der Zugangsinformation 0x82C73 und dem aktuellen, beispielhaft auf 60 Sekunden gerundeten UNIX-Zeitwert (t₀), ein weiteres Kennwort basierend auf der Zugangsinformation 0x82C73 und dem vorherigen, auf 60 Sekunden gerundeten UNIX-Zeitwert (t₋₁) und ein weiteres Kennwort basierend auf der Zugangsinformation 0x82C73 und dem nächsten, auf 60 Sekunden gerundeten UNIX-Zeitwert (t₊₁). Es ergeben sich dann beispielsweise die erzeugten Kennwörter 0xBA23, 0x256E, 0x5506. Die Fachanlage 120 kann daraufhin jedes der drei Kennwörter mit dem in den dritten Daten erhaltenen Kennwort 0x256E vergleichen und feststellen, dass das Kennwort, welches sie basierend auf der Zugangsinformation 0x82C73 und dem vorherigen, auf 60 Sekunden gerundeten UNIX-Zeitwert (t₋₁) erzeugt hat, mit dem in den dritten Daten enthaltenen Kennwort 0x256E übereinstimmt. Die zeitliche Abweichung kann beispielsweise daraus resultieren, dass der aktuelle Zeitwert der Fachanlage 120 und der aktuelle Zeitwert des Smartphones 110 leicht unterschiedlich sein können, z.B. weil die Fachanlage 120 zum Zeitpunkt der Authentifizierung des Benutzers 111 nicht mit dem Internet verbunden ist. Vorliegend kann die Fachanlage 120 dann beispielsweise feststellen, dass das in den dritten Daten enthaltene Kennwort zum Zugang zu Fach 123 berechtigt, weil eine Übereinstimmung vorlag, und die Fachanlage 120 kann dem Benutzer 111 den Zugang zu Fach 123 gewähren, z.B. indem die Fachanlage 120 die Tür zu Fach 123 entriegelt. Die Fachanlage 120 kann das Kennwort, für welches sie festgestellt hat, dass es zum Zugang berechtigt, anschließend speichern. Ein erneuter Authentisierungsversuch mit demselben Kennwort innerhalb einer vorbestimmten Dauer, beispielsweise 3 Minuten, 5 Minuten oder 120 Minuten, kann dann von der Fachanlage 120 beispielsweise ohne weitere Prüfung abgelehnt werden, um zu verhindern, dass ein Unbefugter ein Kennwort abhört und erneut verwendet In anderen Ausführungsformen können aber auch mehr oder weniger Zeitwerte genutzt werden, die z.B. auch anders gerundet werden und/oder in unterschiedlichen Beziehungen zu z.B. einem aktuellen Zeitwert stehen, also beispielsweise wird nicht oder nicht nur ein aktueller (t₀), ein vorheriger (t₋₁) und ein zukünftiger Zeitwert (t₊₁) genutzt, sondern z.B. auch ein Zeitwert (t_{N}) oder mehrere Zeitwerte (t_{N}), wobei N eine beliebige Zahl darstellt Auch Zeitwerte (t_{A}), die nicht relativ von einem anderen Zeitwert, z.B. einem aktuellen Zeitwert (t₀), abhängen, sondern z.B. absolute Zeitwerte sind, können genutzt werden. Wie viele und welche Zeitwerte genutzt werden, ist beispielsweise ein Konfigurationsparameter, der flexibel angepasst werden kann, z.B. basierend auf Praxiserfahrungen.

Im vorliegenden Ausführungsbeispiel erzeugt die Fachanlage 120 mehrere Kennwörter, um feststellen zu können, ob das in den dritten Daten erhaltene Kennwort zum Zugang berechtigt. In anderen Ausführungsformen sind aber eine Vielzahl anderer Verfahren durchführbar, um feststellen zu können, ob ein in dritten Daten enthaltenes Kennwort zum Zugang berechtigt. Beispielsweise kann die Fachanlage 120 basierend auf dem in den dritten Daten enthaltenen Kennwort eine Zugangsinformation erzeugen und überprüfen, ob diese mit der Zugangsinformation des betroffenen Fachs, hier z.B. 0x82C73 des Fachs 123, übereinstimmt.

Im vorliegenden Ausführungsbeispiel könnte die Fachanlage 120 zusätzlich oder alternativ, statt nur festzustellen, dass das in den dritten Daten enthaltene Kennwort zum Zugang zu Fach 123 berechtigt, feststellen, ob das Kennwort zum Zugang zu weiteren Fächern der Fachanlage, z.B. den Fächern 121, 122, berechtigt Beispielsweise kann die Fachanlage 120, basierend auf Informationen zu der Sendung 140, die sich in dem Fach 123 befindet, eine Benutzerkennung bestimmen, insbesondere die Benutzerkennung des Empfängers 111 der Sendung 140. Ausgehend davon kann die Fachanlage 120 eines oder mehrere weitere Fächer 121, 122 bestimmen, in denen sich jeweilige Sendungen befinden, die ebenfalls mit der Benutzerkennung dieses Empfängers 111 assoziiert sind. Im vorliegenden Ausführungsbeispiel wurde auch in das Fach 121 vom Zusteller eine Sendung für den Empfänger 111 eingestellt Die Fachanlage 120 kann daher feststellen, dass das Kennwort (gleichzeitig) auch zum Zugang zu diesem Fach 121 berechtigt Das gleiche Kennwort berechtigt dann also z.B. bei einmaliger Eingabe oder bei einmaligen Erhalt zum Zugang zu den Fächern 121, 123 der Fachanlage, in denen sich jeweilige Sendungen befinden, die mit der Benutzerkennung desselben Empfängers 111 assoziiert sind. Dies ist beispielsweise insofern vorteilhaft, als dass es nicht erforderlich ist, dass die Fachanlage 120 zusätzlich die Benutzerkennung, die z.B. eine 6-12-stellige Postnummer sein kann, erhalten muss, um feststellen zu können, dass ein Benutzer zum Zugang zu mehreren Fächern 121, 123 berechtigt ist und welche Fächer 121, 123 das sind. Der Empfänger 111 kann, insofern er nach der einmaligen Eingabe des Kennworts zum Zugang zu mehreren Fächern 121, 123 berechtigt ist, beispielsweise auswählen, welches Fach 121, 123 tatsächlich geöffnet werden soll. Diese Auswahl kann beispielsweise über eine Eingabeeinheit oder Benutzerschnittstelle (z.B. eine Tastatur oder einen berührungsempfindlichen Bildschirm mit Bildschirmtastatur) der Fachanlage 120 erfolgen, oder aber am Mobilgerät 110 des Empfängers 111, welche diese Auswahl über eine drahtlose Kommunikationsschnittelle an die Fachanlage 120 übermittelt. Im vorliegenden Ausführungsbeispiel kann das so verwendete Kennwort beispielsweise nach einmaliger Verwendung an der Fachanlage 120 gespeichert und/oder anderweitig gesperrt werden, sodass es nicht erneut zum Zugang berechtigt.

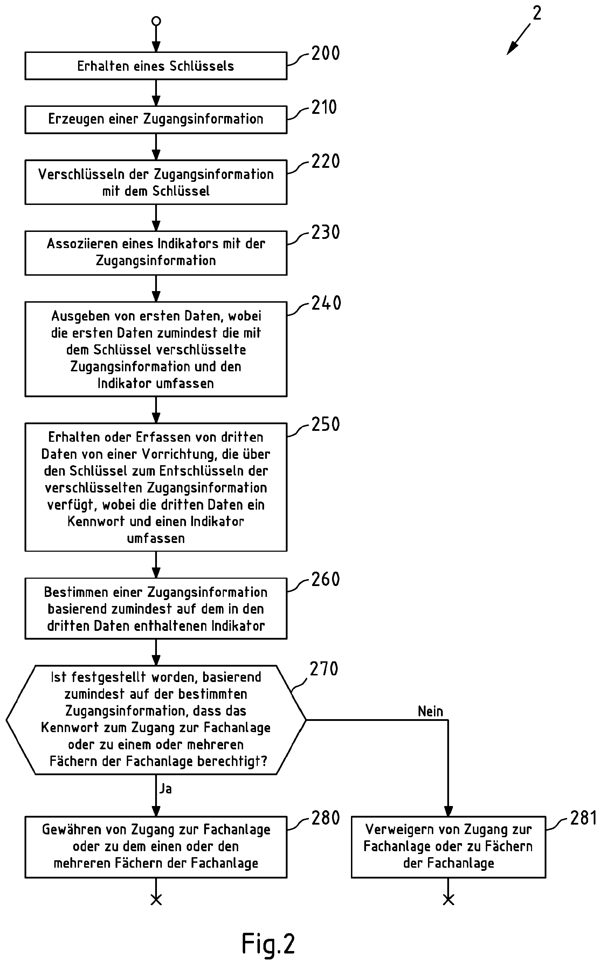

Fig. 2 zeigt ein Flussdiagramm 2 einer beispielhaften Ausführungsform eines Verfahrens gemäß dem ersten Aspekt der vorliegenden Erfindung. Das Verfahren des Flussdiagramms 2 wird beispielsweise von einer Fachanlage, z.B. der Fachanlage 120 aus dem System 1, oder einem System zumindest umfassend eine Fachanlage, z.B. ein System umfassend die Fachanlage 120 und das Gerät eines Zustellers und/oder das System 100, ausgeführt und/oder gesteuert

In Schritt 200 wird ein Schlüssel erhalten, z.B. ein symmetrischer Schlüssel oder ein asymmetrischer Schlüssel, insbesondere ein öffentlicher Schlüssel eines asymmetrischen Schlüsselpaares. Für dieses Ausführungsbeispiel wird beispielhaft angenommen, dass es sich um einen symmetrischen Schlüssel handelt

In Schritt 210 wird eine Zugangsinformation erzeugt. Die Zugangsinformation kann z.B. mit einem Fach, in welches eine Sendung eingestellt wurde, wird oder werden soll, assoziiert werden oder sein. Alternativ kann die Zugangsinformation aber auch erzeugt werden, um einem oder mehreren Benutzerkreisen mit jeweils vordefinierter Funktion unabhängig von einer Sendung Zugang zur Fachanlage zur ermöglichen. Zum Beispiel kann die Zugangsinformation erzeugt werden, um Zustellern den Zugang zur Fachanlage zu ermöglichen. Die Zugangsinformation kann dann beispielsweise regelmäßig, z.B. alle 24 Stunden, alle 7 Tage oder jeden Monat, neu erzeugt werden, um einen Brute-Force-Angriff zu erschweren. Beispielhaft wird hier angenommen, dass vorliegend eine Zugangsinformation mit der dezimalen Repräsentation "23140896" erzeugt wurde.

In Schritt 220 wird die Zugangsinformation mit dem Schlüssel verschlüsselt, z.B. um zu verhindern, dass Unbefugte Zugriff auf die Zugangsinformation erhalten.

In Schritt 230 wird ein Indikator mit der Zugangsinformation assoziiert Dies kann beispielsweise so erfolgen, dass die Fachanlage basierend zumindest auf dem Indikator einen Benutzerkreis mit vordefinierter Funktion ermitteln kann, also z.B. wird der Indikator "150" mit dem Benutzerkreis "Zusteller" assoziiert oder diesem zugeordnet. Benutzer dieses Benutzerkreises mit dieser Funktion sollen dann beispielsweise basierend zumindest auf der Zugangsinformation ein Kennwort erzeugen können, welches zum Zugang zu der Fachanlage, also z.B. zu allen Fächern, zu einem beliebigen Fach, zu einem Sonderfach, zu einer (Sonder-)Funktionalität, z.B. einem für die Funktion geeigneten Sonderprogramm, oder zur Steuerung der Fachanlage berechtigt

In Schritt 240 werden erste Daten ausgegeben, wobei die ersten Daten zumindest die mit dem Schlüssel verschlüsselte Zugangsinformation und den Indikator umfassen. Die Ausgabe erfolgt beispielsweise an einen Server 101, 102 oder ein System 100.

In Schritt 250 werden, z.B. zu einem späteren Zeitpunkt und/oder z.B. wenn sich ein Benutzer des Benutzerkreises "Zusteller" in der Nähe der Fachanlage befindet, dritte Daten von einer Vorrichtung erhalten oder erfasst, die über den Schlüssel zum Entschlüsseln der verschlüsselten Zugangsinformation verfügt, wobei die dritten Daten ein Kennwort und einen Indikator umfassen. Bei der Vorrichtung kann es sich beispielhaft um das mobile Gerät eines Zustellers handeln, welches beispielsweise per Bluetooth mit der Fachanlage kommuniziert Alternativ kann das Zustellergerät die dritten Daten beispielsweise auch optisch darstellen und die Fachanlage kann diese erfassen.

In Schritt 260 wird eine Zugangsinformation basierend zumindest auf dem in den dritten Daten enthaltenen Indikator bestimmt. Beispielhaft wird vorliegend zumindest basierend auf dem Indikator "150" der Benutzerkreis "Zusteller" und die diesem zugeordnete Zugangsinformation "23140896" bestimmt

In Schritt 270 wird festgestellt, basierend zumindest auf der bestimmten Zugangsinformation, ob das Kennwort zum Zugang zur Fachanlage oder zu einem oder mehreren Fächern der Fachanlage berechtigt Beispielsweise entschlüsselt die Fachanlage das in den dritten Daten enthaltene Kennwort mit dem erhaltenen symmetrischen Schlüssel und prüft, ob das entschlüsselte Kennwort eine Information enthält, die der Zugangsinformation "23140896" entspricht Falls das so ist, wird durch die Fachanlage beispielweise festgestellt, dass das Kennwort zum Zugang zur Fachanlage, z.B. zu allen Fächern oder zu allen leeren Fächern der Fachanlage berechtigt, insbesondere weil bereits festgestellt wurde, dass der in den dritten Daten enthaltene Indikator mit dem Benutzerkreis "Zusteller" assoziiert ist.

Falls festgestellt worden ist, dass das Kennwort zum Zugang zur Fachanlage oder zu einem oder mehreren Fächern der Fachanlage berechtigt, wird in Schritt 280 Zugang zur Fachanlage oder zu dem einem oder den mehreren Fächern der Fachanlage gewährt. Falls festgestellt worden ist, dass das Kennwort nicht zum Zugang zur Fachanlage oder zu einem oder mehreren Fächern der Fachanlage berechtigt, wird in Schritt 281 Zugang zur Fachanlage oder zu Fächern der Fachanlage verweigert

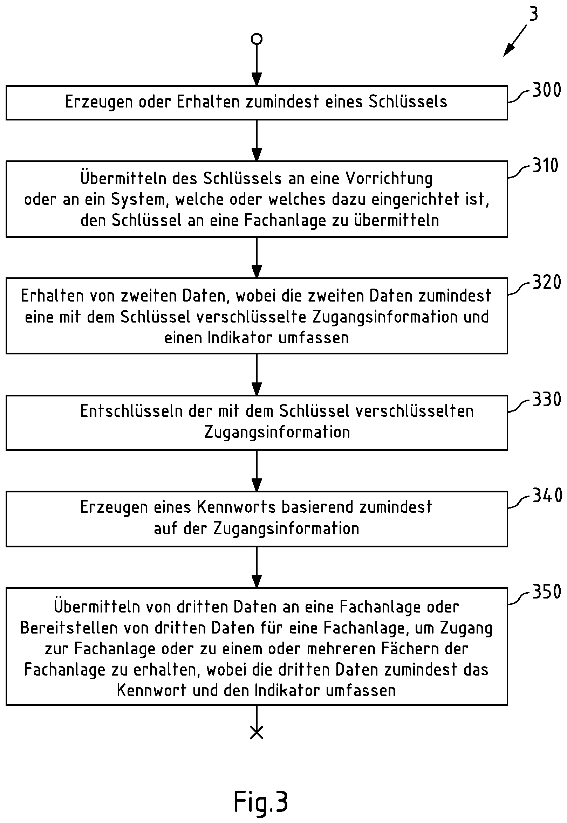

Fig. 3 zeigt ein Flussdiagramm 3 einer beispielhaften Ausführungsform eines Verfahrens gemäß dem zweiten Aspekt der vorliegenden Erfindung. Das Verfahren des Flussdiagramms 3 wird beispielsweise von einer mobilen Vorrichtung, z.B. dem Smartphone 110 aus dem System 1 oder dem Gerät eines Zustellers, ausgeführt und/oder gesteuert.

In Schritt 300 wird zumindest ein Schlüssel erzeugt oder erhalten. Dies kann beispielsweise in Reaktion auf und/oder durch eine Benutzereingabe und/oder eine Mitteilung, z.B. des Systems 100, erfolgen.

In Schritt 310 wird der Schlüssel an eine Vorrichtung oder an ein System übermittelt, welche oder welches dazu eingerichtet ist, den Schlüssel an eine Fachanlage zu übermitteln. Insbesondere wird der Schlüssel z.B. an das System 100 aus Fig. 1 übermittelt.

In Schritt 320 werden zweite Daten erhalten, wobei die zweiten Daten zumindest eine mit dem Schlüssel verschlüsselte Zugangsinformation und einen Indikator umfassen. Die zweiten Daten werden beispielsweise erhalten, während sich die Vorrichtung, die die zweiten Daten erhält, grundsätzlich - mit der Ausnahme von Zufällen - nicht in der Nähe einer Fachanlage befindet

In Schritt 330 wird die mit dem Schlüssel verschlüsselte Zugangsinformation entschlüsselt, beispielsweise nach Erhalt oder in Reaktion auf Erhalt der zweiten Daten.

In Schritt 340 wird ein Kennwort basierend zumindest auf der Zugangsinformation erzeugt Es können aber beispielsweise auch mehrere Kennwörter basierend zumindest auf der Zugangsinformation erzeugt werden. Die Erzeugung des Kennworts kann beispielsweise durch eine Benutzereingabe eines Benutzers an der das Kennwort erzeugenden Vorrichtung ausgelöst werden und/oder in regelmäßigen Zeitabständen stattfinden, wenn der Benutzer die mobile Vorrichtung in gewisser Weise bedient, z.B. indem er eine App aufruft und eine Sendung und/oder eine Fachanlage, die in der App repräsentiert wird, auswählt und/oder eine vorbestimmte Ansicht in der App öffnet und/oder im Vordergrund lässt

In Schritt 350 werden dritte Daten an eine Fachanlage übermittelt oder für eine Fachanlage bereitgestellt, um Zugang zur Fachanlage oder zu einem oder mehreren Fächern der Fachanlage zu erhalten, wobei die dritten Daten zumindest das Kennwort und den Indikator umfassen. Dies kann beispielsweise nur geschehen, wenn sich die übermittelnde Vorrichtung oder eine Entität, welche oder welcher die dritten Daten kennt, in der Nähe der Fachanlage befindet, also beispielsweise weniger als eine Armlänge entfernt, oder in einem Radius von z.B. 5 m.

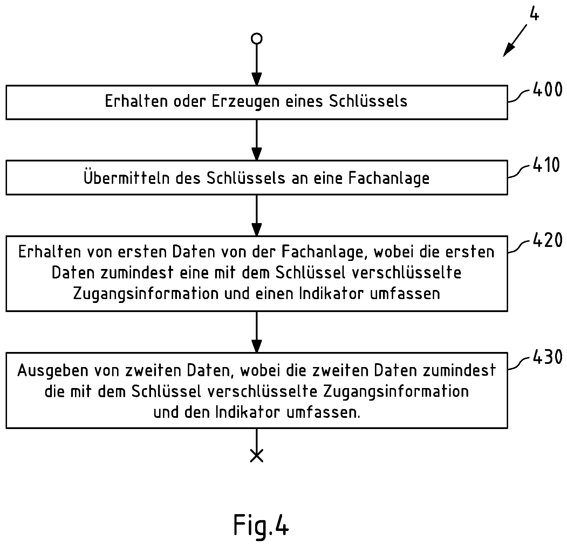

Fig. 4 zeigt ein Flussdiagramm 4 einer beispielhaften Ausführungsform eines Verfahrens gemäß dem dritten Aspekt der vorliegenden Erfindung. Das Verfahren des Flussdiagramms 4 wird beispielsweise von eine System, z.B. dem System 100 aus dem System 1, einem einzelnen Server, z.B. Server 101, 102, oder einer anderen Vorrichtung, z.B. dem Gerät eines Zustellers, ausgeführt und/oder gesteuert

In Schritt 400 wird ein Schlüssel von einer mobilen Vorrichtung erhalten, z.B. von dem Smartphone 110 in System 1.

Daraufhin wird - beispielsweise sobald eine Kommunikationsverbindung 130 zu einer Fachanlage 120 verfügbar ist und/oder in Reaktion auf eine Anfrage von der Fachanlage 120 und/oder in Reaktion auf eine Anfrage von einem Zusteller oder dem Gerät eines Zustellers und/oder in Reaktion auf eine Anfrage einer anderen mobilen Vorrichtung eines Benutzers, z.B. einem Smartphone 110 - in Schritt 410 der Schlüssel an eine Fachanlage, z.B. die Fachanlage 120, übermittelt.

In Schritt 420 werden erste Daten von der Fachanlage erhalten, wobei die ersten Daten zumindest eine mit dem Schlüssel verschlüsselte Zugangsinformation und einen Indikator umfassen. Insbesondere ist die erhaltende Vorrichtung beispielsweise nicht in der Lage, die mit dem Schlüssel verschlüsselte Zugangsinformation zu entschlüsseln, z.B. weil sie auf keinen Schlüssel zugreifen kann, der für die Entschlüsselung erforderlich ist

In Schritt 430 werden zweite Daten an die mobile Vorrichtung ausgegeben/übermittelt, wobei die zweiten Daten zumindest die mit dem Schlüssel verschlüsselte Zugangsinformation und den Indikator umfassen. Dies geschieht beispielsweise sobald eine Kommunikationsverbindung 132 zu einer mobilen Vorrichtung 110 verfügbar ist und/oder in Reaktion auf eine Anfrage von der Fachanlage 120 und/oder in Reaktion auf eine Anfrage von einem Zusteller oder dem Gerät eines Zustellers und/oder in Reaktion auf eine Anfrage von der mobilen Vorrichtung 110 selbst.

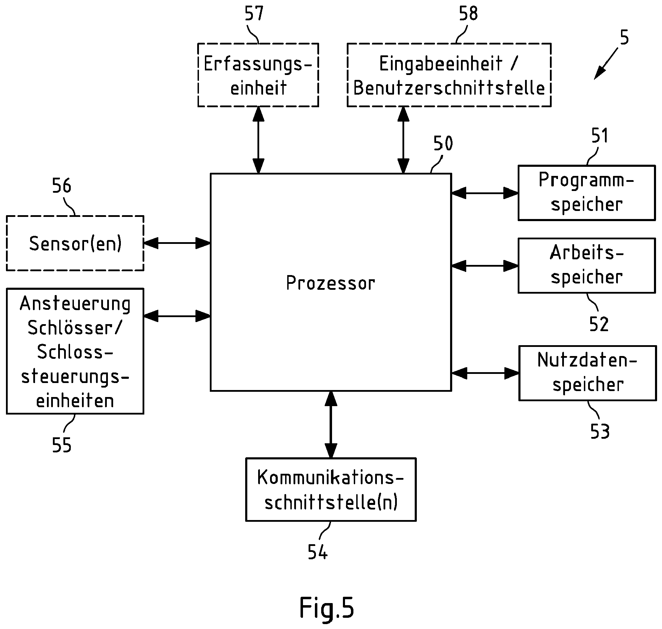

Fig. 5 ist eine schematische Darstellung einer beispielhaften Ausführungsform einer Vorrichtung 5 gemäß dem ersten Aspekt der Erfindung. Die Vorrichtung 5 kann beispielsweise eine Fachanlage 120 (siehe Fig. 1) oder deren Steuereinheit repräsentieren.

Die Vorrichtung 5 umfasst einen Prozessor 50, einen Programmspeicher 51, einen Arbeitsspeicher 52, einen Nutzdatenspeicher 53, eine oder mehrere Kommunikationsschnittelle(n) 54, eine Ansteuerungseinheit 55 für die Schlösser oder Schlosssteuereinheiten der Fächer der Fachanlage, einen oder mehrere optionale Sensoren 56, eine optionale Erfassungseinheit 57 und eine optionale Eingabeeinheit/Benutzerschnittstelle 58. Der Prozessor 50 führt beispielsweise ein Programm gemäß dem ersten Aspekt der Erfindung aus, das in dem Programmspeicher 51 gespeichert ist, beispielsweise als Firmware. Arbeitsspeicher 52 dient insbesondere der Speicherung temporärer Daten während des Ablaufs dieses Programms.

Der Nutzdatenspeicher 53 dient der Speicherung von Daten, die bei der Abarbeitung des Programms erforderlich sind. Vorliegend kann es sich dabei beispielsweise um den erhaltenen Schlüssel handeln. Auch weitere Daten wie beispielsweise Zugangsinformationen, Indikatoren und Kennwörter können beispielsweise im Nutzdatenspeicher 53 gespeichert werden, z.B. in Datenstrukturen, die auch eine Zuordnung von Zugangsinformationen zu jeweiligen Indikatoren und/oder jeweiligen Fächern repräsentieren.

Die Kommunikationsschnittstelle(n) 54 umfasst/umfassen beispielsweise eine Schnittstelle zur drahtlosen Kommunikation mit den Geräten 6 und/oder 7, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Die Vorrichtung 5 (und mithin die Fachanlage 120) ist beispielsweise ferner zur direkten Kommunikation mit der Vorrichtung 7 (und mithin dem System 100) eingerichtet, verfügt also beispielsweise über eine Kommunikationsschnittstelle, die einen Zugang zum Internet oder zu einem anderen Netz, an das die Vorrichtung 7 angeschlossen ist, ermöglicht

Die Ansteuerungseinheit 55 ermöglicht es, ein einzelnes Fach der Fachanlage gezielt zu öffnen oder zu entriegeln, um die Öffnung zu ermöglichen, insbesondere durch Ansteuerung des Schlosses des Fachs oder eine Schlosssteuereinheit des Fachs. Zusätzlich oder alternativ kann die Verriegelung eines Fachs bewirkt werden. Die Ansteuerungseinheit 55 ist beispielsweise über eine jeweilige Verdrahtung mit allen Schlössern oder Schlosssteuereinheiten der Fachanlage verbunden oder an einen Bus angeschlossen, an dem auch alle Schlösser oder Schlosssteuereinheiten der Fachanlage angebunden sind.

Die Sensoren 56 sind optional und beispielsweise fachspezifisch. Ein Sensor ermöglicht es beispielsweise zu detektieren, ob sich in einem jeweiligen Fach eine jeweilige Sendung befindet und/oder ob in das Fach eine Sendung eingestellt und/oder entnommen wird/wurde. Der gleiche Sensor oder ein weiterer Sensor ermöglicht z.B. die Erfassung von Informationen einer Sendung 140, beispielsweise indem optisch ein Etikett 141 gescannt oder ein der Sendung 140 zugehöriger NFC-Tag gelesen wird.

Die Erfassungseinheit 57 ist optional und in einer beispielhaften Ausführungsform ein Scanner, welcher optisch Informationen erfassen kann, z.B. einen Bar- oder QR-Code von einem Bildschirm einer mobilen Vorrichtung 6. In einer weiteren beispielhaften Ausführungsform ist die Erfassungseinheit 57 dazu eingerichtet NFC-Tags zu lesen, die beispielsweise an einer jeweiligen Sendung 140 befestigt und oder in diese eingelegt sind. Die Erfassungseinheit 57 kann zusätzlich oder alternativ in der Lage sein, akustische Signale zu erfassen und zu verarbeiten, also z.B. mittels Spracherkennung.

Die Eingabeeinheit/Benutzerschnittstelle 58 ist optional und zur Kommunikation mit einem Zusteller/Lieferanten und/oder dem Benutzer 111 eingerichtet Dies kann beispielsweise eine Ausgabeeinheit zum Anzeigen (z.B. über einen Bildschirm oder über fachspezifische Leuchtanzeigen (z.B. zur Darstellung eines jeweiligen Zustands belegt/unbelegt) oder akustischen Ausgeben von Informationen und/oder eine Einheit zum Erhalten von Informationen und/oder Daten (z.B. eine Tastatur oder einen berührungsempfindlichen Bildschirm mit Bildschirmtastatur oder ein Spracherkennungsmodul) von den Personen umfassen.

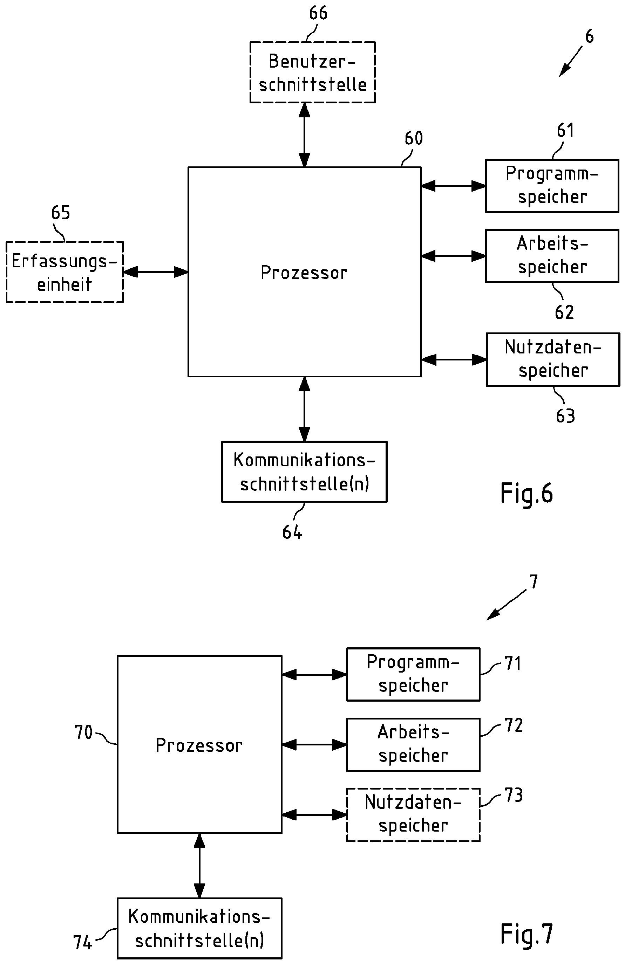

Fig. 6 ist eine schematische Darstellung einer beispielhaften Ausführungsform einer Vorrichtung 6 gemäß dem zweiten Aspekt der Erfindung. Die Vorrichtung 6 kann beispielsweise ein portables Scangerät eines Zustellers/Lieferanten darstellen (einen sog. Handscanner), also ein Gerät, das zur optischen Erfassung von Sendungs- oder Lieferungsdaten, insbesondere in Form von 2D- oder 3D-Barcodes, von der Sendung oder Lieferung eingerichtet ist. Wenn die Vorrichtung 6 das Gerät 110 des Benutzers 111 repräsentiert, kann es sich dabei insbesondere um ein Smartphone handeln, also insbesondere um ein Mobiltelefon mit der Fähigkeit, auch komplexere Programme, sog. Apps, selbstständig auszuführen.

Die Vorrichtung 6 umfasst einen Prozessor 60, einen Programmspeicher 61, einen Arbeitsspeicher 62, einen Nutzdatenspeicher 63, eine oder mehrere Kommunikationsschnittelle(n) 64, eine optionale Erfassungseinheit 65 zur Erfassung von Sendungs- oder Lieferungsdaten und eine optionale Benutzerschnittstelle 66.

Der Prozessor 60 führt beispielsweise ein Programm gemäß dem zweiten Aspekt der Erfindung aus, das in dem Programmspeicher 61 gespeichert ist, beispielsweise als App oder als Firmware. Arbeitsspeicher 62 dient insbesondere der Speicherung temporärer Daten während des Ablaufs dieses Programms.

Der Nutzdatenspeicher 63 dient der Speicherung von Daten, die bei der Abarbeitung des Programms erforderlich sind, beispielsweise eines oder mehrerer Schlüssel, Zugangsinformationen, Indikatoren und Kennwörter.

Die Kommunikationsschnittstelle(n) 64 umfassen eine oder mehrere Schnittstellen zur Kommunikation der Vorrichtung mit dem System 100 und/oder der Vorrichtung 7. Die Schnittstelle kann beispielsweise auf IP beruhen, aber sich aufgrund der Portabilität der Vorrichtung 6 einer drahtlosen Übertragungstechnik als physikalischer Schicht bedienen, die beispielsweise auf zellularem Mobilfunk (z.B. GSM, E-GSM, UMTS, LTE, 5G) oder eine WLAN (Wireless Local Area Network) beruht. Die Kommunikationsschnittstelle(n) 64 umfassen optional ferner eine Schnittstelle zur Kommunikation mit der Fachanlage 120, beispielsweise basierend auf optischer Übertragung, Bluetooth oder NFC. Hier kann eine Übertragungstechnik mit verhältnismäßig geringer Reichweite, beispielsweise weniger als 100m oder 10m oder 5m ausreichend und ggf. sogar erwünscht sein, um ein Abhören der Übertragung durch Dritte zu erschweren.

Die Benutzerschnittstelle 66 kann als Bildschirm und Tastatur oder als berührungsempfindliche Anzeige (Touchscreen) ausgestaltet sein, ggf. mit zusätzlichen akustischen und/oder haptischen Signalgebungseinheiten. Die Anzeige von dritten Daten über die Benutzerschnittstelle 66 kann eine gesonderte Schnittstelle 64 zur Kommunikation mit der Fachanlage 120 unnötig machen, wenn die Zugangsberechtigungsinformation in eine Benutzerschnittstelle der Fachanlage 120 eingegeben werden kann (siehe Benutzerschnittstelle 58 der Fig. 5). Die Erfassungseinheit 65 zur Erfassung von Sendungs- oder Lieferungsdaten (beispielsweise in Form einer optischen Scaneinheit) ist beispielsweise lediglich vorhanden, wenn es sich bei dem Gerät um das Gerät eines Zustellers/Lieferanten handelt, aber insbesondere nicht, wenn es sich bei dem Gerät um ein Smartphone 110 eines Empfängers 111 einer Sendung handelt

Fig. 7 ist eine schematische Darstellung einer beispielhaften Ausführungsform einer Vorrichtung 7 gemäß dem dritten Aspekt der Erfindung. Die Vorrichtung 7 kann beispielsweise das gesamte System 100 oder die jeweiligen Einheiten des Systems 100 repräsentieren, insbesondere den Fachanlagenverwaltungsserver 101 und den Benutzerdatenverwaltungsserver 102.

Die Vorrichtung 7 umfasst einen Prozessor 70, einen Programmspeicher 71, einen Arbeitsspeicher 72, einen optionalen Nutzdatenspeicher 73 sowie eine oder mehrere Kommunikationsschnittelle(n) 74. Der Prozessor führt beispielsweise ein Programm gemäß dem dritten Aspekt der Erfindung aus, das in dem Programmspeicher 71 gespeichert ist, beispielsweise als Firmware. Arbeitsspeicher 72 dient insbesondere der Speicherung temporärer Daten während des Ablaufs dieses Programms.

Der Nutzdatenspeicher 73 dient der Speicherung von Daten, die bei der Abarbeitung des Programms erforderlich sind. Vorliegend kann es sich dabei beispielsweise erhaltene und zu übermittelnde Schlüssel und andere Informationen handeln, z.B. mit jeweiligen Schlüsseln verschlüsselte Zugangsinformationen und Indikatoren, aber auch Benutzerkennungen, Benutzerkontaktdaten, wie E-Mail-Adressen und Mobilfunknummern, Fachanlagenkennungen und Sendungsdaten. Die erhaltenen und zu übermittelnden Schlüssel können aber beispielsweise auch nur im Arbeitsspeicher 72 zwischengespeichert werden und sofort nach Übermittlung wieder gelöscht werden. Eine beispielhafte Vorrichtung 7, die lediglich Daten weiterleitet, benötigt dann nicht unbedingt einen Nutzdatenspeicher 73.

Die Kommunikationsschnittstelle(n) 74 kann/können zumindest eine Schnittstelle zur Kommunikation mit anderen Einheiten des Systems 1, des Systems 100 und/oder mit dem Gerät 110 umfassen. Diese Kommunikation kann beispielsweise auf dem Internet Protocol (IP) basieren. Beispielsweise ist dazu zumindest eine der Kommunikationsschnittstelle (n) 74 als Local Area Network (LAN) Schnittstelle ausgeführt.

In den Ausführungsbeispielen der Fig. 5-7 kann der Prozessor beispielsweise jeweils eine Kontrolleinheit, ein Mikroprozessor, eine Mikrokontrolleinheit wie ein Mikrocontroller, ein digitaler Signalprozessor (DSP), eine Anwendungsspezifische Integrierte Schaltung (ASICs) oder ein Field Programmable Gate Array (FPGAs) sein. Der Programmspeicher und/oder der Nutzdatenspeicher kann in den Ausführungsbeispielen der Fig. 5-7 beispielsweise ein persistenter Speicher, wie beispielsweise ein Read-Only-Memory (ROM)-Speicher sein. Der Programmspeicher kann beispielsweise fest mit dem jeweiligen Prozessor verbunden sein, kann aber alternativ auch lösbar mit dem jeweiligen Prozessor verbunden sein, beispielsweise als Speicherkarte, Diskette oder optisches Datenträgermedium (z.B. eine CD oder DVD). Der Arbeitsspeicher der Ausführungsbeispiele der Fig. 5-7 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

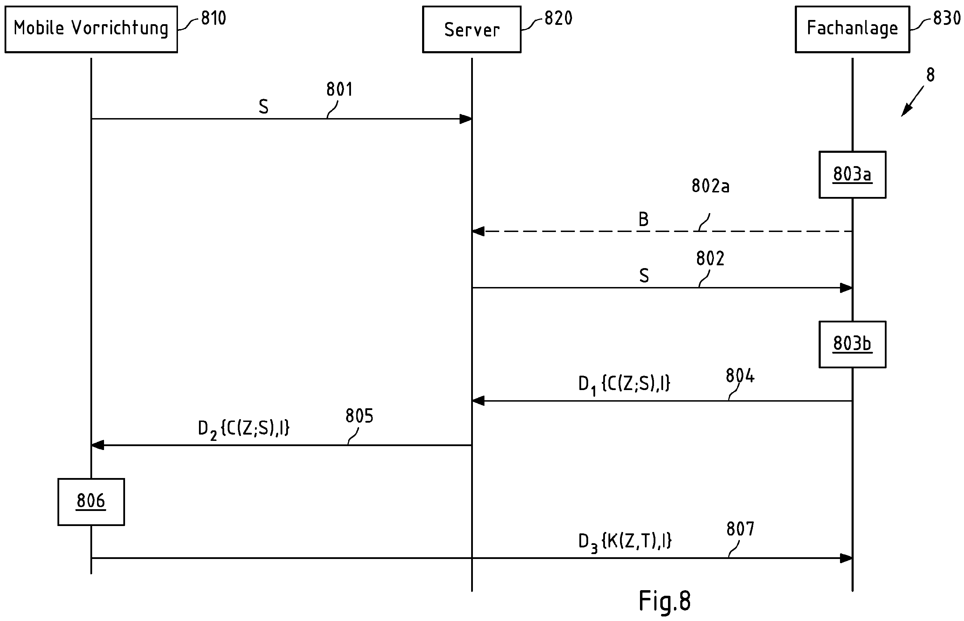

Fig. 8 zeigt eine schematische Darstellung beispielhafter Datenübertragungen 8 zwischen Vorrichtungen, die beispielhafte Ausführungsformen von Verfahren gemäß einem jeweiligen Aspekt der Erfindung ausführen.

Die mobile Vorrichtung 810 führt beispielsweise das Verfahren gemäß dem zweiten Aspekt der Erfindung aus. Die mobile Vorrichtung 810 repräsentiert beispielsweise das Smartphone 110 des Systems 1 und/oder die Vorrichtung 6.

Der Server 820 führt beispielsweise das Verfahren gemäß dem dritten Aspekt der Erfindung aus. Der Server 820 repräsentiert beispielsweise das System 100 des Systems 1 und/oder die Vorrichtung 7.

Die Fachanlage 830 führt beispielsweise das Verfahren gemäß dem ersten Aspekt der Erfindung aus. Die Fachanlage 830 repräsentiert beispielsweise die Fachanlage 120 des Systems 1 und/oder die Vorrichtung 5.

Nachdem die mobile Vorrichtung 810 den Schlüssel S erzeugt hat, übermittelt sie diesen in Schritt 801 an den Server 820. Der Server 820 leitet den Schlüssel S in Schritt 802 an die Fachanlage 830 weiter. In einer beispielhaften Ausführungsform geschieht dies in Antwort auf eine Anfrage 802a der Fachanlage 830, beispielsweise eine Anfrage, die die Fachanlage 830 für einen Schlüssel S, der beispielhaft mit der Benutzerkennung B assoziiert ist, an den Server 820 sendet. Diese Anfrage 802a kann wiederum beispielsweise von einem Ereignis 803a ausgelöst worden sein, beispielsweise dem Einstellen einer Sendung für den Empfänger mit der Benutzerkennung B in ein Fach der Fachanlage. In anderen Ausführungsformen oder in anderen Situationen kann/können die Anfrage 802a und/oder das Ereignis 803a entfallen und der Server 820 stellt der Fachanlage 830 den Schlüssel S, z.B. gemeinsam mit der zugehörigen Benutzerkennung B, in einem Schritt 802 zur Verfügung, z.B. bevor oder unabhängig davon, ob eine Sendung für den Empfänger mit der Benutzerkennung B in ein Fach der Fachanlage 830 eingestellt wurde.

Wird dann beispielsweise zum einem späteren Zeitpunkt eine Sendung in ein Fach der Fachanlage 830 eingestellt, z.B. markiert durch das Ereignis 803b in der Fig. 8, können dadurch die Schritte des Erzeugens der Zugangsinformation Z, des Verschlüsselns der Zugangsinformation Z, des Assoziieren eines Indikators I und des Ausgebens 804 von ersten Daten D₁ ausgelöst werden (vgl. Schritte 210, 220, 230, 240 in Fig. 2). Die ersten Daten D₁ umfassen dabei zumindest die mit dem Schlüssel S verschlüsselte Zugangsinformation Z (in Fig. 8 notiert als C(Z;S)) und den Indikator I. Der Server 820 kann nach Erhalt der ersten Daten D₁ eine Ausgabe/Übermittlung 805 von zweiten Daten D₂ an die mobile Vorrichtung 810 vornehmen. Dabei umfassen auch die zweiten Daten D₂ zumindest C(Z;S) und den Indikator I.

Die mobile Vorrichtung 810 kann dann C(Z;S) entschlüsseln (und somit die Zugangsinformation Z erhalten) und im Zusammenhang mit einem Ereignis 806, z.B. in Reaktion auf das Ereignis 806, zumindest basierend auf der Zugangsinformation Z, ein Kennwort K erzeugen (vgl. Schritte 330, 340 in Fig. 3). Im vorliegenden Ausführungsbeispiel wird die Zugangsinformation beispielhaft basierend ferner auf einem Zeitwert T erzeugt. Das Ereignis 806 kann z.B. eine Benutzereingabe sein oder die Feststellung der mobilen Vorrichtung 810, dass sie sich in der Nähe der Fachanlage 830 befindet. Anschließend führt die mobile Vorrichtung 810 die Übermittlung 807 von dritten Daten D₃ an die Fachanlage 830 durch oder stellt die dritten Daten D₃ bereit, sodass ein Benutzer diese an der Fachanlage 830 eingeben kann. Dabei umfassen die dritten Daten D₃ zumindest das basierend zumindest auf der Zugangsinformation Z und beispielhaft dem Zeitwert T erzeugte Kennwort K(Z,T) und den Indikator I. Die Fachanlage 830 kann nach Erhalt der dritten Daten D₃ prüfen, ob die dritten Daten D₃ zum Zugang berechtigen (vgl. Schritte 260, 270, 280, 281 der Fig. 2 und mögliche ergänzende Schritte, die z.B. im Zusammenhang mit der Fig. 1 beschrieben wurden).

Für alle beispielhaften Datenübertragungen 8 gilt dabei, dass eine durch einen Pfeil dargestellte Übertragung, z.B. 804, ebenso aber auch 801, 802a, 802, 805 oder 807, entweder die Übermittlung in einer Einheit, z.B. einem Paket eines Kommunikationsprotokolls, oder die Übermittlung in mehreren, z.B. auch voneinander getrennten Einheiten, z.B. mehrere Pakete eines oder mehrerer jeweiliger Kommunikationsprotokolle, repräsentiert. Eine jeweilige Übermittlung kann beispielsweise auch verschlüsselt stattfinden, also insbesondere z.B. mit einer über die Verschlüsselung mit dem Schlüssel S hinausgehenden Verschlüsselung. Auch weitere jeweilige Verarbeitungsschritte sind möglich, z.B. eine Entropie-Kodierung oder z.B. eine Kodierung mittels eines Forward Error Correction (FEC)-Codes. Dabei kann es sich beispielsweise um eine Verschlüsselung und/oder Verarbeitung gemäß einer für ein jeweiliges Kommunikationsprotokoll, z.B. Bluetooth, WLAN, 4G oder 5G, üblichen Verschlüsselung und/oder Verarbeitung handeln. Aber auch unübliche und/oder zusätzliche Verschlüsselungen und/oder Verarbeitungen für jeweilige Übertragungen sind möglich.

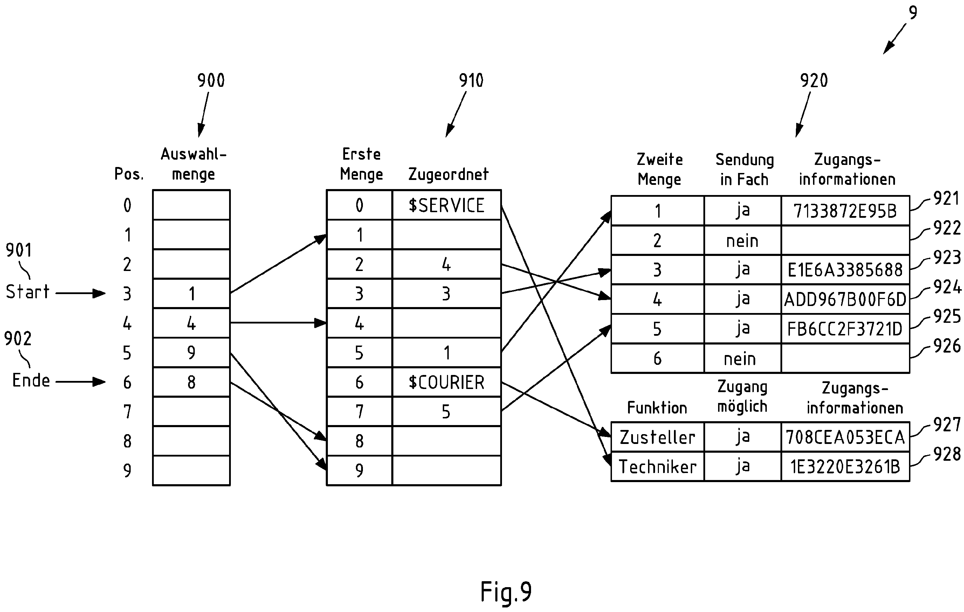

Fig. 9 zeigt eine schematische Darstellung einer beispielhaften Zuordnung 9 von Indikatoren gemäß einer beispielhaften Ausführungsform eines Verfahrens gemäß allen Aspekte der Erfindung. Dabei zeigt die Fig. 9 insbesondere eine Alternative zur Wahl des Indikators und dem Assoziieren des Indikators, wie es für das Ausführungsbeispiel der Fig. 1 beschrieben wurde. Dort wurde einfach eine Fachnummer als Indikator gewählt. Das im Folgenden beschriebene Ausführungsbeispiel zur Fig. 9 soll aber insbesondere auch losgelöst von den anderen Merkmalen der zuvor beschriebenen Ausführungsformen verstanden werden, also insbesondere nicht nur bezogen auf Fächer einer Fachanlage, sondern auf eine beliebige Vielzahl von Objekten, die eine Zustandsänderung erfahren können (wie es hier beispielhaft bei einem Fach durch Einstellen einer Sendung geschieht) und die abhängig von ihrem Zustand mit einem Indikator assoziiert sein sollen oder nicht

Die beispielhafte Zuordnung 9 zeigt eine Auswahlmenge 900, eine erste Zuordnungstabelle 910 und eine zweite Zuordnungstabelle 920.

Die zweite Zuordnungstabelle 920 ist in zwei Hälften unterteilt, wobei die obere Hälfte in den Zeilen 921-926 beispielhaft Zuordnungen von Elementen einer zweiten Menge zu jeweiligen Zugangsinformationen zeigt, und wobei die untere Hälfte in den Zeilen 927, 928 Zuordnungen von Funktionen zu jeweiligen Zugangsinformationen zeigt

Im vorliegenden Ausführungsbeispiel wird beispielhaft eine Fachanlage mit 6 Fächern angenommen. Jedes der Fächer ist einem jeweiligen Element der zweiten Menge zugeordnet In manchen Fächern befinden sich Sendungen. Dies ist beispielhaft in den Zeilen 921, 923, 924, 925 gezeigt. In den Fächern der Zeilen 922, 926 befinden sich keine Sendungen. Aus den Zeilen 921-926 ist ersichtlich, dass einem Element der zweiten Menge eine Zugangsinformation nur dann zugeordnet ist, wenn sich in dem jeweiligen Fach zumindest eine Sendung befindet. Insbesondere sind also den Elementen 2 und 6 der zweiten Menge keine jeweiligen Zugangsinformationen zugeordnet

Jedes Element der zweiten Menge, das einem Fach der Fachanlage zugeordnet ist, in welchem sich eine jeweilige Sendung befindet, ist einem Element der ersten Menge zugeordnet, insbesondere also die Elemente 1, 3, 4 und 5 in den Zeilen 921, 923, 924 und 925. Die erste Menge enthält vorliegend beispielhaft die Elemente 0-9, also insgesamt 10 Elemente und somit mehr Elemente als die zweite Menge. Das Element 2 der ersten Menge ist dem Element 4 der zweiten Menge zugeordnet, das Element 3 der ersten Menge ist dem Element 3 der zweiten Menge zugeordnet, das Element 5 der ersten Menge ist dem Element 1 der zweiten Menge zugeordnet und das Element 7der ersten Menge ist dem Element 5 der zweiten Menge zugeordnet Ein Indikator, der durch eines der Elemente 2, 3, 5 oder 7 der ersten Menge repräsentiert wird, ist somit eindeutig einem Element aus der zweiten Menge, einem Fach der Fachanlage und einer Zugangsinformation zugeordnet Die Fachanlage kann also beispielsweise basierend auf einem Indikator mit dem Wert 7 die Zugangsinformation FB6CC2F37721D bestimmen. Basierend auf einem Indikator mit dem Wert 1 kann die Fachanlage beispielsweise feststellen, dass der Indikator nicht zugeordnet ist und eine Zugangsanfrage, die diesen Indikator enthält, deshalb unzulässig ist

Im vorliegenden Ausführungsbeispiel wird beispielhaft angenommen, dass zwei Benutzerkreise mit einer jeweiligen Funktion, also einer Sonderrolle, definiert wurden, denen der Zugang zur Fachanlage ermöglicht werden soll. Der eine Benutzerkreis sind Zusteller (vgl. 927) und der andere Benutzerkreis sind Techniker (vgl. 928). Vorliegend ist für diese nur jeweils hinterlegt, dass der Zugang möglich ist. In anderen Ausführungsbeispielen können darüber hinaus aber auch weitere Informationen hinterlegt sein, beispielsweise in welchem Umfang jeweils Zugang möglich ist. Der Benutzerkreis mit der Funktion Techniker ist vorliegend beispielhaft dem Element 0 der ersten Menge zugeordnet und der Benutzerkreis mit der Funktion Zusteller ist vorliegend beispielhaft dem Element 6 der ersten Menge zugeordnet Die Fachanlage kann also beispielsweise basierend auf einem Indikator mit dem Wert 6 die Zugangsinformation 708CEA053ECA bestimmen und feststellen, dass eine Anfrage mit diesem Indikator nicht nur den Zugang zur Abholung einer Sendung aus einem Fach betrifft, sondern beispielsweise den Zugang zur ganzen Fachanlage und/oder zu mehreren Fächern betrifft, in die ein Zusteller jeweilige Sendungen einstellen kann.

Da die erste Menge mehr Elemente umfasst als die zweite Menge und die Zusatzfunktionen zusammengezählt, sind beispielsweise immer einige, wenn auch wechselnde, Elemente der ersten Menge nicht zugeordnet. Vorliegend sind beispielhaft die Elemente 1, 4, 8 und 9 der ersten Menge nicht zugeordnet Falls nun beispielhaft eine Sendung in das Fach, welches dem Element 2 der zweiten Menge zugeordnet ist (vgl. 922), eingestellt wird, erzeugt die Fachanlage beispielsweise eine zugehörige Zugangsinformation und ordnet dem Element 2 der zweiten Menge ein Element der ersten Menge zu. Die Auswahl, welches Element der ersten Menge zugeordnet werden soll, kann beispielsweise basierend auf einer Auswahlmenge 900 erfolgen. Die Auswahlmenge 900 dient beispielsweise dazu, dass die erste Menge nicht nach freien Element durchsucht werden muss, wenn ein freies Element der ersten Menge benötigt wird. Beispielhaft kann das Element 1 der Auswahlmenge 900, auf welches der Start-Zeiger 901 zeigt, ausgewählt und dem Element 2 der zweiten Menge zugeordnet werden. Anschließend wird beispielsweise der Start-Zeiger auf Position 4 der Auswahlmenge gerichtet. Wenn nun eine Zuordnung zu einem Element der ersten Menge aufgelöst wird, beispielhaft zu dem Element 3, wird dieses Element in die Auswahlmenge 910 aufgenommen. Insbesondere wird beispielhaft der Ende-Zeiger 902 um eine Position erhöht, sodass er auf die Position 7 zeigt. In die Auswahlmenge kann dann an dieser Stelle das Element 3 aufgenommen werden. Wird ein solches First in, First out (FIFO)-Prinzip angewandt, wird automatisch immer das Element der ersten Menge als nächstes ausgewählt, welches am längsten nicht genutzt wurde. Initial, wenn alle Elemente der ersten Menge in der Auswahlmenge sind, kann beispielsweise ein Fisher-Yates-Algorithmus auf die Auswahlmenge angewendet werden, damit die Elemente der ersten Menge in pseudozufälliger Reihenfolge verwendet bzw. zugeordnet werden.

Die in den Tabellen 900, 910 und 920 dargestellten Zuordnungen verstehen sich lediglich als Illustrationen einer möglichen Zuordnung. In verschiedenen Ausführungsformen können diese durchaus gänzlich anders und unterschiedlich repräsentiert sein, z.B. in unterschiedlichen Datenstrukturen und/oder in unterschiedlichen Speichern, insbesondere müssen solche Tabellen nicht physikalisch im Speicher vorliegen (sie können es aber). Auch die im Rahmen dieses Ausführungsbeispiels beschriebene Reihenfolge von Operationen kann anders sein. Darüber hinaus können in manchen Ausführungsformen nur bestimmte Teile der beispielhaften Zuordnung 9 vorhanden sein. So ist es beispielsweise keinesfalls zwingend, dass es eine Auswahlmenge 900 gibt und nach welchem Prinzip diese geordnet wird oder nach welchem Prinzip auf diese zugegriffen wird. Auch ist es beispielsweise nicht erforderlich, dass es Benutzerkreise mit vordefinierten Funktionen, wie in den Zeilen 927, 928 gezeigt, gibt Schließlich muss der Indikator auch nicht ein Wert aus einer ersten Menge sein, sondern kann ein erst durch die Fachanlage zusammengesetzter Wert sein, der sich aus verschiedenen Eingabedaten ergibt

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden beispielhaften Ausführungsformen der Erfindung sollen ebenfalls offenbart gelten:
Ausführungsform 1:
   Verfahren, beispielsweise ausgeführt von einer Fachanlage (830) oder einem System umfassend eine Fachanlage (830), das Verfahren umfassend
      - Erhalten eines Schlüssels (S);
      - Erzeugen einer Zugangsinformation (Z);
      - Verschlüsseln der Zugangsinformation (Z) mit dem Schlüssel (S);
      - Assoziieren eines Indikators (I) mit der Zugangsinformation (Z);
      - Ausgeben von ersten Daten (D₁), wobei die ersten Daten (D₁) zumindest die mit dem Schlüssel (S) verschlüsselte Zugangsinformation (C(Z;S)) und den Indikator (I) umfassen;
      - Erhalten oder Erfassen von dritten Daten (D₃) von einer Vorrichtung, die über einen Schlüssel zum Entschlüsseln der verschlüsselten Zugangsinformation C(Z;S) verfügt, wobei die dritten Daten (D₃) ein Kennwort (K) und einen Indikator (I) umfassen;
      - Bestimmen einer Zugangsinformation (Z) basierend zumindest auf dem in den dritten Daten (D₃) enthaltenen Indikator (I);
      - Feststellen, basierend zumindest auf der bestimmten Zugangsinformation (Z), ob das Kennwort zum Zugang zur Fachanlage (830) oder zu einem oder mehreren Fächern (121, 122, 123) der Fachanlage (830) berechtigt; und
      - Gewähren von Zugang zur Fachanlage (830) oder zu einem oder mehreren Fächern (121, 122, 123) der Fachanlage (830), wobei notwendige Bedingung für das Gewähren von Zugang ist, dass festgestellt wurde, dass das Kennwort (K) zum Zugang zur Fachanlage (830) oder zum Zugang zu dem einen oder zu den mehreren Fächern (121, 122, 123) der Fachanlage (830) berechtigt.
Ausführungsform 2:
   Das Verfahren nach Ausführungsform 1, wobei das Ausgeben von ersten Daten (D₁) an eine Vorrichtung (820) oder an ein System erfolgt, welche oder welches dazu eingerichtet ist, Daten an die Vorrichtung (810) zu übermitteln, die über einen Schlüssel zum Entschlüsseln der verschlüsselten Zugangsinformation (C(Z;S)) verfügt.
Ausführungsform 3:
   Das Verfahren nach einer der vorhergehenden Ausführungsformen, wobei das Kennwort (K) nur zum Zugang zu Fächern (121, 122, 123) der Fachanlage (830) berechtigt, in denen sich jeweilige Sendungen befinden, die mit einer identischen Benutzerkennung assoziiert sind, wobei das Verfahren ferner einen oder mehrere der folgenden Verfahrensschritte umfasst:
   - Bestimmen eines Fachs (123), mit dem der in den dritten Daten (D₃) enthaltene Indikator (I) assoziiert ist;
   - Bestimmen der Benutzerkennung basierend auf Information zu einer Sendung (140), die sich in dem bestimmten Fach (123) befindet, wobei es sich bei der Benutzerkennung beispielsweise um die Benutzerkennung eines Empfängers (111) der Sendung (140) handelt;
   - Bestimmen eines oder mehrerer weiterer Fächer (121, 122), in denen sich jeweilige Sendungen befinden, die mit der bestimmten Benutzerkennung assoziiert sind.
Ausführungsform 4:
   Verfahren nach einer der vorhergehenden Ausführungsformen, wobei notwendige Bedingung für das Feststellen, dass das Kennwort (K) zum Zugang zur Fachanlage (830) oder zu einem oder mehreren Fächern (121, 122, 123) der Fachanlage (830) berechtigt, ist, dass festgestellt wird, dass das Kennwort (K) basierend zumindest auf einer Information erzeugt wurde, die der bestimmten Zugangsinformation (Z) entspricht
Ausführungsform 5:
   Das Verfahren nach Ausführungsform 4, wobei weitere notwendige Bedingung für das Feststellen, dass das Kennwort (K) zum Zugang zur Fachanlage (830) oder zu einem oder mehreren Fächern (121, 122, 123) der Fachanlage (830) berechtigt, ist, dass festgestellt wird, dass das Kennwort (K) ferner basierend auf einem Zeitwert (T) erzeugt wurde, der einem aktuellen Zeitwert der Fachanlage (830) entspricht oder in einer vordefinierten Beziehung zu dem aktuellen Zeitwert der Fachanlage (830) steht
Ausführungsform 6:
   Das Verfahren nach einer der vorhergehenden Ausführungsformen, ferner umfassend
   - Erhalten einer Zuordnungsinformation, basierend auf welcher der Schlüssel (S) einem Benutzerkreis mit einer vordefinierten Funktion zuordenbar ist.
Ausführungsform 7:
   Das Verfahren nach Ausführungsform 6, wobei die Zugangsinformation (Z) erzeugt wird, um dem Benutzerkreis mit dieser vordefinierten Funktion unabhängig von einer Sendung (140) Zugang zur Fachanlage (830) zu ermöglichen, und wobei der Indikator (I) zumindest derart mit der Zugangsinformation (Z) assoziiert ist, dass die Zugangsinformation (Z) einem Benutzerkreis mit dieser vordefinierten Funktion eindeutig zugeordnet ist und dass der Indikator (I) mit dem Benutzerkreis mit dieser vordefinierten Funktion assoziiert wird.
Ausführungsform 8:
   Das Verfahren nach einer der Ausführungsformen 6-7, soweit auf einen der Ansprüche 4-5 rückbezogen, wobei weitere notwendige Bedingung für das Feststellen, dass das Kennwort (K) zum Zugang zur Fachanlage (830) berechtigt, ist, dass festgestellt wird, dass der in den dritten Daten (D₃) enthaltene Indikator (I) mit einem Benutzerkreis mit vordefinierter Funktion assoziiert ist.
Ausführungsform 9:
   Das Verfahren nach einer der vorhergehenden Ausführungsformen, wobei ein Kennwort (K), für welches festgestellt wurde, dass es zum Zugang zur Fachanlage (830) oder zu einem oder mehreren Fächern (121, 122, 123) der Fachanlage (830) berechtigt, nicht erneut oder zumindest nicht während eines vordefinierten Zeitintervalls nach dieser Feststellung erneut zum Zugang berechtigt
Ausführungsform 10:
   Verfahren, beispielsweise ausgeführt von einer mobilen Vorrichtung (810), das Verfahren umfassend
   - Erzeugen oder Erhalten zumindest eines Schlüssels (S);
   - Übermitteln des Schlüssels (S) an eine Vorrichtung (820) oder an ein System, welche oder welches dazu eingerichtet ist, den Schlüssel (S) an eine Fachanlage (830) zu übermitteln;
   - Erhalten von zweiten Daten (D₂), wobei die zweiten Daten (D₂) zumindest eine mit dem Schlüssel verschlüsselte Zugangsinformation (C(Z;S)) und einen Indikator (I) umfassen;
   - Entschlüsseln der mit dem Schlüssel verschlüsselten Zugangsinformation (C(Z;S));
   - Erzeugen eines Kennworts (K) basierend zumindest auf der Zugangsinformation (Z); und
   - Übermitteln von dritten Daten (D₃) an eine Fachanlage (830) oder Bereitstellen von dritten Daten (D₃) für eine Fachanlage (830), um Zugang zur Fachanlage (830) oder zu einem oder mehreren Fächern (121, 122, 123) der Fachanlage (830) zu erhalten, wobei die dritten Daten (D₃) zumindest das Kennwort (K) und den Indikator (I) umfassen.
Ausführungsform 11:
   Das Verfahren nach Ausführungsform 10, wobei das Übermitteln der dritten Daten (D₃) an die Fachanlage (830) oder das Bereitstellen der dritten Daten (D₃) für die Fachanlage (830) mittels einer oder mehrerer der Möglichkeiten a)-d) erfolgt:
   a) mittels einer Funkverbindung (131), insbesondere Bluetooth oder NFC;
   b) mittels eines die dritten Daten (D₃) repräsentierenden optischen Musters, welches auf einem Bildschirm der mobilen Vorrichtung (810) angezeigt wird zur Erfassung durch eine Erfassungseinheit der Fachanlage (830);
   c) mittels Anzeige der dritten Daten (D₃) auf einem Bildschirm der mobilen Vorrichtung (810) zur visuellen Erfassung durch eine Person (111), die die dritten Daten (D₃) dann an einer Eingabeeinheit der Fachanlage (830), insbesondere einer Tastatur oder einem berührungsempfindlichen Bildschirm, eingibt; oder
   d) mittels einer akustischen Übermittlung, beispielsweise indem eine Vorrichtung (810) oder Person (111) die dritten Daten (D₃) vorliest und die Fachanlage (830) diese mittels Spracherkennung erfasst
Ausführungsform 12:
   Das Verfahren nach einer der vorhergehenden Ausführungsformen, wobei der in den dritten Daten (D₃) enthaltene Indikator (I) durch eine erste Gruppe von Bits repräsentiert wird, wobei das in den dritten Daten (D₃) enthaltene Kennwort (K) durch eine zweite Gruppe von Bits repräsentiert wird, und wobei in den dritten Daten (D₃) die Bits der ersten Gruppe und die Bits der zweiten Gruppe nach einer vorbestimmten Regel gemischt sind.
Ausführungsform 13:
   Das Verfahren nach einer der vorhergehenden Ausführungsformen, wobei das Kennwort (K) basierend zumindest auf einer Zugangsinformation (Z) und einem Zeitwert (T) erzeugt wird.
Ausführungsform 14:
   Das Verfahren nach einer der vorhergehenden Ausführungsformen, wobei das Kennwort (K) unter Verwendung einer Einwegfunktion, insbesondere einer Hash-Funktion, erzeugt wird, wobei zumindest ein Teil einer Zugangsinformation (Z) und zumindest ein Teil eines Zeitwerts (T) als Eingabedaten für die Einwegfunktion verwendet werden.
Ausführungsform 15:
   Verfahren, beispielsweise ausgeführt von einer Vorrichtung (820) oder einem System (100), das Verfahren umfassend
   - Erhalten, beispielsweise von einer mobilen Vorrichtung (810), oder Erzeugen eines Schlüssels (S);
   - Übermitteln des Schlüssels (S) an eine Fachanlage (830);
   - Erhalten von ersten Daten (D₁) von der Fachanlage (830), wobei die ersten Daten (D₁) zumindest eine mit dem Schlüssel verschlüsselte Zugangsinformation (C(Z;S)) und einen Indikator (I) umfassen; und
   - Ausgeben von zweiten Daten (D₂), beispielsweise an die mobile Vorrichtung (810), wobei die zweiten Daten (D₂) zumindest die mit dem Schlüssel verschlüsselte Zugangsinformation (C(Z;S)) und den Indikator (I) umfassen.
Ausführungsform 16:
   Das Verfahren nach einer der Ausführungsformen 10-15, ferner umfassend einen oder mehrere der folgenden Verfahrensschritte:
   - Erhalten oder Erzeugen einer Zuordnungsinformation, basierend auf welcher der Schlüssel (S) einem Benutzerkreis mit einer vordefinierten Funktion zuordenbar ist;
   - Übermitteln der Zuordnungsinformation an die Fachanlage (830) oder an eine Vorrichtung (820) oder an ein System, welche oder welches dazu eingerichtet ist, die Zuordnungsinformation an die Fachanlage (830) zu übermitteln.
Ausführungsform 17:
   Das Verfahren nach Ausführungsform 16, ferner umfassend
   - Erhalten oder Erzeugen einer Assoziationsinformation bevor der Schlüssel (S) und/oder bevor die Zuordnungsinformation an die Fachanlage (830) übermittelt wird, wobei die Assoziationsinformation den Schlüssel (S) mit der Fachanlage (830) assoziiert, an die der Schlüssel (S) und/oder die Zuordnungsinformation übermittelt wird oder werden soll.
Ausführungsform 18:
   Das Verfahren nach einer der vorhergehenden Ausführungsformen, wobei die Zugangsinformation (Z) von der Fachanlage (830) jeweils im Rahmen eines jeweiligen Einstellens, beispielsweise in Reaktion auf das jeweilige bevorstehende, stattfindende oder erfolgte Einstellen, zumindest einer Sendung (140) in ein Fach (123) der Fachanlage (830) erzeugt wird.
Ausführungsform 19:
   Das Verfahren nach einer der vorhergehenden Ausführungsformen, wobei der Indikator (I) zumindest derart mit der Zugangsinformation (Z) assoziiert wird oder ist, dass die Zugangsinformation (Z) einem Fach (121, 122, 123) der Fachanlage (830) eindeutig zugeordnet ist und der Indikator (I) mit diesem Fach (121, 122, 123) der Fachanlage (830) assoziiert wird oder ist, wobei es sich bei dem Fach (121, 122, 123) beispielsweise um ein Fach (121, 122, 123) handelt, in welches eine Sendung (140) eingestellt wurde.
Ausführungsform 20:
   Das Verfahren nach einer der vorhergehenden Ausführungsformen, wobei der Schlüssel (S) einer Benutzerkennung zugeordnet ist, und wobei die Fachanlage (830) beim Verschlüsseln der Zugangsinformation (Z) den dieser Benutzerkennung zugeordneten Schlüssel (S) nur verwendet, wenn sie im Rahmen eines jeweiligen Einstellens einer Sendung (140) in ein Fach (121, 122, 123) der Fachanlage (830) informiert wurde oder festgestellt hat, dass die Sendung (140) mit dieser Benutzerkennung assoziiert ist, wobei die Sendung (140) beispielsweise derart mit der Benutzerkennung assoziiert ist, dass es sich bei der Benutzerkennung um die Benutzerkennung eines Empfängers (111) der Sendung (140) handelt.
Ausführungsform 21:
   Das Verfahren nach einer der vorhergehenden Ausführungsformen, wobei der Indikator (I) ein Element aus einer ersten Menge ist, wobei die erste Menge mehr Elemente umfasst als eine zweite Menge, wobei jedes Element der zweiten Menge einem jeweiligen Fach der Fachanlage (830) eineindeutig zugeordnet ist, und wobei jedes Element der zweiten Menge, in dessen eineindeutig zugeordnetem Fach sich eine Sendung befindet, einem Element der ersten Menge eineindeutig zugeordnet ist.
Ausführungsform 22:
   Das Verfahren nach Ausführungsform 21, soweit auf Ausführungsform 20 rückbezogen, wobei die Benutzerkennung aus einer dritten Menge stammt, welche mehr Elemente umfasst als die erste Menge.
Ausführungsform 23:
   Das Verfahren nach einer der vorhergehenden Ausführungsformen, wobei der Schlüssel (S) ein öffentlicher Schlüssel eines asymmetrischen Schlüsselpaares ist.
Ausführungsform 24:
   Vorrichtung (5, 6, 7) oder System aus zumindest zwei Vorrichtungen (5, 6, 7), eingerichtet zur Ausführung und/oder Steuerung des Verfahrens nach einer der Ausführungsformen 1-23 oder umfassend jeweilige Mittel zur Ausführung und/oder Steuerung der Schritte des Verfahrens nach einer der Ausführungsformen 1-23.
Ausführungsform 25:
   Computerprogramm, umfassend Programmanweisungen, die einen Prozessor (50, 60, 70) zur Ausführung und/oder Steuerung des Verfahrens gemäß einer der Ausführungsformen 1-23 veranlassen, wenn das Computerprogramm auf dem Prozessor (50, 60, 70) läuft.

## Patentansprüche

1. Verfahren, beispielsweise ausgeführt von einer Fachanlage (830) oder einem System umfassend eine Fachanlage (830), das Verfahren umfassend
- Erhalten eines Schlüssels (S);
- Erzeugen einer Zugangsinformation (Z);
- Verschlüsseln der Zugangsinformation (Z) mit dem Schlüssel (S);
- Assoziieren eines Indikators (I) mit der Zugangsinformation (Z);
- Ausgeben von ersten Daten (D₁), wobei die ersten Daten (D₁) zumindest die mit dem Schlüssel (S) verschlüsselte Zugangsinformation (C(Z;S)) und den Indikator (I) umfassen;
- Erhalten oder Erfassen von dritten Daten (D₃) von einer Vorrichtung, die über einen Schlüssel zum Entschlüsseln der verschlüsselten Zugangsinformation C(Z;S) verfügt, wobei die dritten Daten (D₃) ein Kennwort (K) und einen Indikator (I) umfassen;
- Bestimmen einer Zugangsinformation (Z) basierend zumindest auf dem in den dritten Daten (D₃) enthaltenen Indikator (I);
- Feststellen, basierend zumindest auf der bestimmten Zugangsinformation (Z), ob das Kennwort zum Zugang zur Fachanlage (830) oder zu einem oder mehreren Fächern (121, 122, 123) der Fachanlage (830) berechtigt; und
- Gewähren von Zugang zur Fachanlage (830) oder zu einem oder mehreren Fächern (121, 122, 123) der Fachanlage (830), wobei notwendige Bedingung für das Gewähren von Zugang ist, dass festgestellt wurde, dass das Kennwort (K) zum Zugang zur Fachanlage (830) oder zum Zugang zu dem einen oder zu den mehreren Fächern (121, 122, 123) der Fachanlage (830) berechtigt.

2. Das Verfahren nach Anspruch 1, wobei das Ausgeben von ersten Daten (D₁) an eine Vorrichtung (820) oder an ein System erfolgt, welche oder welches dazu eingerichtet ist, Daten an die Vorrichtung (810) zu übermitteln, die über einen Schlüssel zum Entschlüsseln der verschlüsselten Zugangsinformation (C(Z;S)) verfügt.

3. Das Verfahren nach einem der vorhergehenden Ansprüche, wobei das Kennwort (K) nur zum Zugang zu Fächern (121, 122, 123) der Fachanlage (830) berechtigt, in denen sich jeweilige Sendungen befinden, die mit einer identischen Benutzerkennung assoziiert sind, wobei das Verfahren ferner einen oder mehrere der folgenden Verfahrensschritte umfasst:
- Bestimmen eines Fachs (123), mit dem der in den dritten Daten (D₃) enthaltene Indikator (I) assoziiert ist;
- Bestimmen der Benutzerkennung basierend auf Information zu einer Sendung (140), die sich in dem bestimmten Fach (123) befindet, wobei es sich bei der Benutzerkennung beispielsweise um die Benutzerkennung eines Empfängers (111) der Sendung (140) handelt;
- Bestimmen eines oder mehrerer weiterer Fächer (121, 122), in denen sich jeweilige Sendungen befinden, die mit der bestimmten Benutzerkennung assoziiert sind.

4. Verfahren nach einem der vorhergehenden Ansprüche, wobei notwendige Bedingung für das Feststellen, dass das Kennwort (K) zum Zugang zur Fachanlage (830) oder zu einem oder mehreren Fächern (121, 122, 123) der Fachanlage (830) berechtigt, ist, dass festgestellt wird, dass das Kennwort (K) basierend zumindest auf einer Information erzeugt wurde, die der bestimmten Zugangsinformation (Z) entspricht

5. Das Verfahren nach Anspruch 4, wobei weitere notwendige Bedingung für das Feststellen, dass das Kennwort (K) zum Zugang zur Fachanlage (830) oder zu einem oder mehreren Fächern (121, 122, 123) der Fachanlage (830) berechtigt, ist, dass festgestellt wird, dass das Kennwort (K) ferner basierend auf einem Zeitwert (T) erzeugt wurde, der einem aktuellen Zeitwert der Fachanlage (830) entspricht oder in einer vordefinierten Beziehung zu dem aktuellen Zeitwert der Fachanlage (830) steht.

6. Das Verfahren nach einem der vorhergehenden Ansprüche, ferner umfassend
- Erhalten einer Zuordnungsinformation, basierend auf welcher der Schlüssel (S) einem Benutzerkreis mit einer vordefinierten Funktion zuordenbar ist, wobei optional gilt, dass die Zugangsinformation (Z) erzeugt wird, um dem Benutzerkreis mit dieser vordefinierten Funktion unabhängig von einer Sendung (140) Zugang zur Fachanlage (830) zu ermöglichen, und dass der Indikator (I) zumindest derart mit der Zugangsinformation (Z) assoziiert ist, dass die Zugangsinformation (Z) einem Benutzerkreis mit dieser vordefinierten Funktion eindeutig zugeordnet ist und der Indikator (I) mit dem Benutzerkreis mit dieser vordefinierten Funktion assoziiert wird.

7. Das Verfahren nach einem der vorhergehenden Ansprüche, wobei ein Kennwort (K), für welches festgestellt wurde, dass es zum Zugang zur Fachanlage (830) oder zu einem oder mehreren Fächern (121, 122, 123) der Fachanlage (830) berechtigt, nicht erneut oder zumindest nicht während eines vordefinierten Zeitintervalls nach dieser Feststellung erneut zum Zugang berechtigt

8. Verfahren, beispielsweise ausgeführt von einer mobilen Vorrichtung (810), das Verfahren umfassend
- Erzeugen oder Erhalten zumindest eines Schlüssels (S);
- Übermitteln des Schlüssels (S) an eine Vorrichtung (820) oder an ein System, welche oder welches dazu eingerichtet ist, den Schlüssel (S) an eine Fachanlage (830) zu übermitteln;
- Erhalten von zweiten Daten (D₂), wobei die zweiten Daten (D₂) zumindest eine mit dem Schlüssel verschlüsselte Zugangsinformation (C(Z;S)) und einen Indikator (I) umfassen;
- Entschlüsseln der mit dem Schlüssel verschlüsselten Zugangsinformation (C(Z;S));
- Erzeugen eines Kennworts (K) basierend zumindest auf der Zugangsinformation (Z); und
- Übermitteln von dritten Daten (D₃) an eine Fachanlage (830) oder Bereitstellen von dritten Daten (D₃) für eine Fachanlage (830), um Zugang zur Fachanlage (830) oder zu einem oder mehreren Fächern (121, 122, 123) der Fachanlage (830) zu erhalten, wobei die dritten Daten (D₃) zumindest das Kennwort (K) und den Indikator (I) umfassen.

9. Das Verfahren nach einem der vorhergehenden Ansprüche, wobei der in den dritten Daten (D₃) enthaltene Indikator (I) durch eine erste Gruppe von Bits repräsentiert wird, wobei das in den dritten Daten (D₃) enthaltene Kennwort (K) durch eine zweite Gruppe von Bits repräsentiert wird, und wobei in den dritten Daten (D₃) die Bits der ersten Gruppe und die Bits der zweiten Gruppe nach einer vorbestimmten Regel gemischt sind.

10. Das Verfahren nach einem der vorhergehenden Ansprüche, wobei das Kennwort (K) basierend zumindest auf einer Zugangsinformation (Z) und einem Zeitwert (T) erzeugt wird.

11. Das Verfahren nach einem der vorhergehenden Ansprüche, wobei das Kennwort (K) unter Verwendung einer Einwegfunktion, insbesondere einer Hash-Funktion, erzeugt wird, wobei zumindest ein Teil einer Zugangsinformation (Z) und zumindest ein Teil eines Zeitwerts (T) als Eingabedaten für die Einwegfunktion verwendet werden.

12. Verfahren, beispielsweise ausgeführt von einer Vorrichtung (820) oder einem System (100), das Verfahren umfassend
- Erhalten, beispielsweise von einer mobilen Vorrichtung (810), oder Erzeugen eines Schlüssels (S);
- Übermitteln des Schlüssels (S) an eine Fachanlage (830);
- Erhalten von ersten Daten (D₁) von der Fachanlage (830), wobei die ersten Daten (D₁) zumindest eine mit dem Schlüssel verschlüsselte Zugangsinformation (C(Z;S)) und einen Indikator (I) umfassen; und
- Ausgeben von zweiten Daten (D₂), beispielsweise an die mobile Vorrichtung (810), wobei die zweiten Daten (D₂) zumindest die mit dem Schlüssel verschlüsselte Zugangsinformation (C(Z;S)) und den Indikator (I) umfassen.

13. Das Verfahren nach einem der Ansprüche 8-12, ferner umfassend einen oder mehrere der folgenden Verfahrensschritte:
- Erhalten oder Erzeugen einer Zuordnungsinformation, basierend auf welcher der Schlüssel (S) einem Benutzerkreis mit einer vordefinierten Funktion zuordenbar ist;
- Übermitteln der Zuordnungsinformation an die Fachanlage (830) oder an eine Vorrichtung (820) oder an ein System, welche oder welches dazu eingerichtet ist, die Zuordnungsinformation an die Fachanlage (830) zu übermitteln,
das Verfahren optional ferner umfassend:
- Erhalten oder Erzeugen einer Assoziationsinformation bevor der Schlüssel (S) und/oder bevor die Zuordnungsinformation an die Fachanlage (830) übermittelt wird, wobei die Assoziationsinformation den Schlüssel (S) mit der Fachanlage (830) assoziiert, an die der Schlüssel (S) und/oder die Zuordnungsinformation übermittelt wird oder werden soll.

14. Das Verfahren nach einem der vorhergehenden Ansprüche, wobei die Zugangsinformation (Z) von der Fachanlage (830) jeweils im Rahmen eines jeweiligen Einstellens, beispielsweise in Reaktion auf das jeweilige bevorstehende, stattfindende oder erfolgte Einstellen, zumindest einer Sendung (140) in ein Fach (123) der Fachanlage (830) erzeugt wird.

15. Das Verfahren nach einem der vorhergehenden Ansprüche, wobei eine oder mehrere der folgenden Einschränkungen gelten:
- der Indikator (I) wird oder ist zumindest derart mit der Zugangsinformation (Z) assoziiert, dass die Zugangsinformation (Z) einem Fach (121, 122, 123) der Fachanlage (830) eindeutig zugeordnet ist und der Indikator (I) mit diesem Fach (121, 122, 123) der Fachanlage (830) assoziiert wird oder ist, wobei es sich bei dem Fach (121, 122, 123) beispielsweise um ein Fach (121, 122, 123) handelt, in welches eine Sendung (140) eingestellt wurde;
- der Schlüssel (S) ist einer Benutzerkennung zugeordnet, und die Fachanlage (830) verwendet beim Verschlüsseln der Zugangsinformation (Z) den dieser Benutzerkennung zugeordneten Schlüssel (S) nur, wenn sie im Rahmen eines jeweiligen Einstellens einer Sendung (140) in ein Fach (121, 122, 123) der Fachanlage (830) informiert wurde oder festgestellt hat, dass die Sendung (140) mit dieser Benutzerkennung assoziiert ist, wobei die Sendung (140) beispielsweise derart mit der Benutzerkennung assoziiert ist, dass es sich bei der Benutzerkennung um die Benutzerkennung eines Empfängers (111) der Sendung (140) handelt;
- der Indikator (I) ist ein Element aus einer ersten Menge, wobei die erste Menge mehr Elemente umfasst als eine zweite Menge, wobei jedes Element der zweiten Menge einem jeweiligen Fach der Fachanlage (830) eineindeutig zugeordnet ist, und wobei jedes Element der zweiten Menge, in dessen eineindeutig zugeordnetem Fach sich eine Sendung befindet, einem Element der ersten Menge eineindeutig zugeordnet ist;
und/oder
- der Schlüssel (S) ist ein öffentlicher Schlüssel eines asymmetrischen Schlüsselpaares.
